# EUROPEAN PATENT SPECIFICATION

(11) **EP 4 519 760 B1**
(45) Date of publication and mention of the grant of the patent: **07.10.2026**
(21) Application number: 23713778.1
(22) Date of filing: 24.02.2023
(51) Int. Cl.: G06F 8/34, G06F 8/36

(54) **DATAFLOW GRAPH DATASETS**
DATENFLUSSGRAPHDATENSÄTZE
ENSEMBLES DE DONNÉES DE GRAPHE DE FLUX DE DONNÉES

(30) Priority: 05.05.2022 US 202263338855 P; 14.12.2022 US 202263432615 P
(43) Date of publication of application: 12.03.2025
(73) Proprietor: Ab Initio Technology LLC, Lexington, MA 02421 (US)
(72) Inventor: SCHECHTER, Ian, Robert, Sharon, MA 02067 (US); DICKIE, Garth, Allen, Framingham, MA 01702 (US); EGENOLF, Jonah, Lexington, MA 02421 (US); ISMAN, Marshall, Lexington, MA 02421 (US)
(74) Representative: Herrmann, Daniel
(86) International application number: PCT/US2023/013841
(87) International publication number: WO 2023/215028

(56) References cited:
- US-A1- 2022 043 635

## Description

### FIELD

Aspects of the present disclosure relate to techniques for enabling efficient data analysis in a dynamic environment with multiple datasets in which software application programs are developed as dataflow graphs that access datasets through a dataset catalog. The techniques allow subgraphs of dataflow graphs to be stored as datasets that can be accessed by other dataflow graphs through the dataset catalog.

### BACKGROUND

Modern data processing systems manage vast amounts of data (e.g., millions, billions, or trillions of data records) and manage how these data may be accessed (e.g., created, updated, read, or deleted). A large institution (e.g., a multinational bank, global technology company, etc.) may have millions of datasets. For example, the datasets may store transaction records, documents, tables, files, or any other suitable type of data. As another example, the datasets may store "metadata" which is data that contains information about other data (e.g., stored in the same data processing system and/or another data processing system) and/or processes (e.g., in the same data processing system and/or another data processing system). For example, a data processing system may store metadata about credit card transaction data stored in a table of a credit card company's database. Non-limiting examples of such metadata include information indicating the size of the table in memory, when the table was created, when the table was last updated, the number of rows and/or columns in the table, where the table is stored, who has permission to read, update, delete and/or perform any other suitable action(s) with respect to the table.

A data processing system may execute software application programs to support various functions. Software application programs may be used to provide functions that support processes of an institution. The software application programs may perform operations on datasets as part of executing such functions. For example, a bank may develop software application programs that support various aspects of its business such as programs that generate credit reports, bank account history, transaction reports, and/or other data. Software application programs may also be used to extract information from datasets.

US 2022/043635 A1 discloses: A method for configuring a first computer executable program includes through a user interface, receiving information indicative of a source of data and a data target; through the user interface, receiving a characterization of a process, the characterization including a type of the process and values for respective characteristics associated with the process. The method includes based on the received information, automatically assigning values to respective parameters of the first computer executable program to cause the first computer executable program to, when executed, receive data from the source of data and output data to the data target. The method includes based on the received characterization of the process, automatically configuring the first computer executable program to reference a second computer executable program. The configuring includes identifying the second computer executable program based on the type of the process; and assigning values to respective parameters of the second computer executable program based on the values for the respective characteristics associated with the process.

### SUMMARY

The present invention pertains to a method according to independent 1, to a data processing system according to claim 14 and to a computer-readable storage medium according to independent claim 15. Some of the preferred embodiments are described in the depending claims, in the description and in the figures.

In some embodiments, receiving the identification of the first entry associated with the first catalogued dataflow graph comprises receiving a selection of the first entry via the user interface.

In some embodiments, providing the user interface comprises generating a graphical user interface having a searchable menu of the one or more entries in the dataset catalog; and receiving the identification of the first entry associated with the first catalogued dataflow graph comprises receiving, via the user interface, a user input indicating a selection of the first entry in the searchable menu.

In some embodiments, the method comprises: executing the configured dataflow graph of the software application program. In some embodiments, executing the configured dataflow graph of the software application program comprises: executing the first catalogued dataflow graph to generate the output data; and providing the generated output data as input to the dataflow graph of the software application for performance of at least one of the one or more data processing operations using the output data. In some embodiments, executing the configured dataflow graph causes executing of the first catalogued dataflow graph. In some embodiments, the output data is generated by the first catalogued dataflow graph during execution of the configured dataflow graph.

In some embodiments, the dataset catalog includes multiple entries associated with respective catalogued dataflow graphs and multiple entries associated with respective datasets previously stored in memory.

In some embodiments, the user interface allows the user to identify, in the dataset catalog, at least one entry associated with at least one respective catalogued physical dataset previously stored in memory, the at least one entry including a second entry associated with a physical dataset stored in the memory. In some embodiments, the one or more input nodes comprise multiple input nodes, the method further comprising: receiving, via the user interface, an identification of the second entry associated with the physical dataset stored in the memory; and configuring the dataflow graph of the software application program to receive, as an input, data from the physical dataset, the configuring comprising associating another one of the multiple input nodes in the dataflow graph with the data from the physical dataset.

. In some embodiments, transforming the dataflow graph including the input node associated with the first catalogued dataflow graph to obtain the transformed dataflow graph comprises: incorporating the first catalogued dataflow graph into the dataflow graph as a first subgraph at the input node associated with the first catalogued dataflow graph; and transforming the first subgraph to obtain a second subgraph that is different from the first subgraph.

In some embodiments, transforming the first subgraph to obtain the second subgraph comprises: transforming the first subgraph based at least in part on at least one operation represented by at least one node downstream of the input node in the dataflow graph. In some embodiments, transforming the first subgraph to obtain the second subgraph comprises: applying at least one optimization to the first subgraph to obtain the second subgraph. In some embodiments, the at least one optimization comprises at least one of: removing at least one node of the first subgraph; replacing at least one node of the first subgraph; changing an order of a plurality of nodes of the first subgraph; combining a plurality of nodes of the first subgraph; parallelizing processing of at least one operation represented by least one node of the first subgraph; or deleting data in at least one node of the first subgraph such that it is not used in a subsequent operation represented by a node downstream of the at least one node in the first subgraph.

In some embodiments, the first catalogued dataflow graph was generated from a subgraph embedded in another dataflow graph, the other dataflow graph having nodes representing data processing operations and links representing flow of data between the nodes, wherein the other dataflow graph is separate from the dataflow graph of the software application. In some embodiments, the method further comprises: displaying, in a UI, a graphical representation of the other dataflow graph; and receiving, through the UI, user input indicating that the subgraph within the dataflow graph is to be catalogued; and storing the subgraph as the first catalogued dataflow graph in response to receiving the user input indicating that the subgraph within the dataflow graph is to be catalogues.

In some embodiments, the first catalogued dataflow graph has only a single output link representing data output by the first catalogued dataflow graph by applying the one or more data processing operations to data obtained from the one or more data sources. In some embodiments, the first catalogued dataflow graph is stored in data storage of the data processing system, and the first entry stores a reference to a location of the first catalogued dataflow graph in the data storage.

In some embodiments, the first entry stores a reference to a file storing information indicating nodes of the first catalogued dataflow graph and/or configuration parameters of the first catalogued dataflow graph.

In some embodiments, configuring the dataflow graph of the software application program to receive, as an input, the output data generated when the first catalogued dataflow graph is executed comprises: receiving, via the user interface, an association of the first entry with the input node in the dataflow graph; and in response to receiving the user input associating the first entry with the input node in the dataflow graph: configuring the dataflow graph to receive, at the input node, data output through an output link of the first catalogued dataflow graph as a result of executing the first catalogued dataflow graph.

In some embodiments, receiving the association of the first entry with the input node in the dataflow graph comprises: receiving, via the user interface, user input indicating association of a first graphical element representing the first entry with a second graphical element representing the input node in the dataflow graph. In some embodiments, the user input indicating the association of the first graphical element representing the first entry with the second graphical element representing the input node comprises dragging the first graphical element to the second graphical element in the user interface.

Some embodiments provide a data processing system for enabling efficient development of software application programs in a dynamic environment with multiple datasets by using entries in a dataset catalog to provide a software application program, developed as a dataflow graph, with access to output data dynamically generated by one or more other dataflow graphs, the entries associated with respective software application programs developed as dataflow graphs having nodes representing data processing operations and links representing flows of data. The system comprises: at least one computer hardware processor; and at least one non-transitory computer-readable storage medium storing instructions that, when executed by the at least one computer hardware processor, cause the at least one computer hardware processor to perform: providing a user interface through which a user can identify, in a dataset catalog, one or more entries associated with one or more respective catalogued dataflow graphs, the one or more entries including a first entry associated with a first catalogued dataflow graph, wherein the first catalogued dataflow graph has one or more nodes representing one or more respective data sources, and one or more nodes representing one or more respective data processing operations, wherein, when the first catalogued dataflow graph is executed, the first catalogued dataflow graph generates output data by applying the one or more data processing operations to data obtained from the one or more data sources; receiving, via the user interface, an identification of the first entry associated with the first catalogued dataflow graph; and configuring the dataflow graph of the software application program to receive, as an input, the output data generated when the first catalogued dataflow graph is executed, the configuring comprising associating one of the input nodes in the dataflow graph with the first catalogued dataflow graph.

In some embodiments, receiving the identification of the first entry associated with the first catalogued dataflow graph comprises receiving a selection of the first entry via the user interface. In some embodiments, providing the user interface comprises generating a graphical user interface having a searchable menu of the one or more entries in the dataset catalog; and receiving the identification of the first entry associated with the first catalogued dataflow graph comprises receiving, via the user interface, a user input indicating a selection of the first entry in the searchable menu.

In some embodiments, the instructions further cause the at least one computer hardware processor to perform executing the dataflow graph of the software application program. In some embodiments, executing the dataflow graph of the software application program comprises: executing the first catalogued dataflow graph to generate the output data; and providing the generated output data as input to the dataflow graph of the software application for performance of at least one of the one or more data processing operations using the output data. In some embodiments, executing the configured dataflow graph causes executing of the first catalogued dataflow graph. In some embodiments, the output data is generated by the first catalogued dataflow graph during execution of the configured dataflow graph.

In some embodiments, the dataset catalog includes multiple entries associated with respective catalogued dataflow graphs and multiple entries associated with respective physical datasets previously stored in memory.

In some embodiments, the user interface allows the user to identify, in the dataset catalog, at least one entry associated with at least one respective catalogued physical dataset previously stored in memory, the at least one entry including a second entry associated with a physical dataset stored in the memory. In some embodiments, the one or more input nodes comprise multiple input nodes, and the instructions further cause the at least one computer hardware processor to perform: receiving, via the user interface, an identification of the second entry associated with the physical dataset stored in the memory; and configuring the dataflow graph of the software application program to receive, as an input, data from the physical dataset, the configuring comprising associating another one of the multiple input nodes in the dataflow graph with the data from the physical dataset.

In some embodiments, the dataset catalog includes multiple entries associated with respective catalogued dataflow graphs and multiple entries associated with respective physical datasets previously stored in memory. In some embodiments, the user interface allows the user to identify, in the dataset catalog, at least one entry associated with at least one respective catalogued physical dataset previously stored in memory, the at least one entry including a second entry associated with a physical dataset stored in the memory.

In some embodiments, the one or more input nodes comprise multiple input nodes, and the instructions further cause the at least one computer hardware processor to perform: receiving, via the user interface, an identification of the second entry associated with the physical dataset stored in the memory; and configuring the dataflow graph of the software application program to receive, as an input, data from the physical dataset, the configuring comprising associating another one of the multiple input nodes in the dataflow graph with the data from the physical dataset.

In some embodiments, the instructions further cause the at least one computer hardware processor to perform: transforming the dataflow graph including the input node associated with the first catalogued dataflow graph to obtain a transformed dataflow graph; compiling the transformed dataflow graph into a software application program; and executing the software application program. In some embodiments, transforming the dataflow graph including the input node associated with the first catalogued dataflow graph to obtain the transformed dataflow graph comprises: incorporating the first catalogued dataflow graph into the dataflow graph as a first subgraph at the input node associated with the first catalogued dataflow graph; and transforming the first subgraph to obtain a second subgraph that is different from the first subgraph.

In some embodiments, transforming the first subgraph to obtain the second subgraph comprises: transforming the first subgraph based at least in part on at least one operation represented by at least one node downstream of the input node in the dataflow graph. In some embodiments, transforming the first subgraph to obtain the second subgraph comprises: applying at least one optimization to the first subgraph. In some embodiments, the at least one optimization comprises at least one of: removing at least one node of the first subgraph; replacing at least one node of the first subgraph; changing an order of a plurality of nodes of the first subgraph; combining a plurality of nodes of the first subgraph; parallelizing processing of at least one operation represented by least one node of the first subgraph; or deleting data in at least one node of the first subgraph such that it is not used in a subsequent operation represented by a node downstream of the at least one node in the first subgraph. In some embodiments, the transforming comprises: identifying at least one portion of the dataflow graph to transform, the at least one portion including the first catalogued dataflow graph associated with the input node; and transforming the at least one portion of the dataflow graph to obtain the transformed dataflow graph.

In some embodiments, the first catalogued dataflow graph was generated from a subgraph embedded in another dataflow graph, the other dataflow graph having nodes representing data processing operations and links representing flow of data between the nodes, wherein the other dataflow graph is separate from the dataflow graph of the software application. In some embodiments, the instructions further cause the at least one computer hardware processor to perform: displaying, in a UI, a graphical representation of the other dataflow graph; and receiving, through the UI, user input indicating the subgraph within the dataflow graph.

In some embodiments, the first catalogued dataflow graph has a single output link representing data output by the first catalogued dataflow graph by applying the one or more data processing operations to data obtained from the one or more data sources.

In some embodiments, the first entry stores a reference to a file storing information indicating nodes of the first catalogued dataflow graph and/or configuration parameters of the first catalogued dataflow graph.

In some embodiments, configuring the dataflow graph of the software application program to receive, as an input, the output data generated when the first catalogued dataflow graph is executed comprises: receiving, via the user interface, an association of the first entry with the input node in the dataflow graph; and in response to receiving the user input associating the first entry with the input node in the dataflow graph: configuring the dataflow graph to receive, at the input node, data output through an output link of the first catalogued dataflow graph as a result of executing the first catalogued dataflow graph.

In some embodiments, receiving the association of the first entry with the input node in the dataflow graph comprises: receiving, via the user interface, user input indicating association of a first graphical element representing the first entry with a second graphical element representing the input node in the dataflow graph. In some embodiments, the user input indicating the association of the first graphical element representing the first entry with the second graphical element representing the input node comprises dragging the first graphical element to the second graphical element in the user interface.

Some embodiments provide at least one non-transitory computer-readable storage medium storing instructions. The instructions, when executed by at least one computer hardware processor of a data processing system, cause the at least one computer hardware processor to perform a method for enabling efficient development of software application programs in a dynamic environment with multiple datasets by using entries in a dataset catalog to provide a software application program, developed as a dataflow graph, with access to output data dynamically generated by one or more other dataflow graphs, the entries associated with respective software application programs developed as dataflow graphs having nodes representing data processing operations and links representing flows of data. The method comprises: providing a user interface through which a user can identify, in a dataset catalog, one or more entries associated with one or more respective catalogued dataflow graphs, the one or more entries including a first entry associated with a first catalogued dataflow graph, wherein the first catalogued dataflow graph has one or more nodes representing one or more respective data sources, and one or more nodes representing one or more respective data processing operations, wherein, when the first catalogued dataflow graph is executed, the first catalogued dataflow graph generates output data by applying the one or more data processing operations to data obtained from the one or more data sources; receiving, via the user interface, an identification of the first entry associated with the first catalogued dataflow graph; and configuring the dataflow graph of the software application program to receive, as an input, the output data generated when the first catalogued dataflow graph is executed, the configuring comprising associating one of the input nodes in the dataflow graph with the first catalogued dataflow graph.

Some embodiments provide a method, performed by a data processing system, for enabling efficient development of software application programs in a dynamic environment with multiple datasets by generating entries in a dataset catalog to provide a software application program with access to output data dynamically generated by dataflow graphs, the entries associated with respective software application programs developed as dataflow graphs having nodes representing data processing operations and links representing flows of data. The method comprises: using at least one computer hardware processor to perform: identifying a subgraph, wherein the subgraph has one or more nodes representing one or more respective data sources, one or more nodes representing one or more respective data processing operations, and an output link representing data output by the subgraph, wherein, when the subgraph is executed, the subgraph generates output data by applying the one or more data processing operations to data obtained from the one or more data sources; creating, in the dataset catalog, a new entry associated with the identified subgraph, the new entry associated with information indicating nodes, links, and configuration parameters of the identified subgraph; and configuring the dataset catalog to enable access to the new entry, in the dataset catalog, associated with the identified subgraph for incorporation of the subgraph into the software application program.

In some embodiments, identifying the subgraph comprises: displaying, in a user interface, a graphical representation of a dataflow graph; and receiving, via the user interface, first user input indicating the subgraph within the dataflow graph. In some embodiments, the method further comprises: receiving, via the user interface, second user input commanding creation of the new entry associated with the indicated subgraph; wherein the creating of the new entry associated with the identified subgraph is performed in response to receiving the second user input.

In some embodiments, the data processing system comprises data storage storing a previously created dataflow graph and identifying the subgraph comprises: receiving, via a user interface, a user input identifying the previously created dataflow graph as the subgraph. In some embodiments, the new entry includes the information indicating the nodes, links, and configuration parameters of the identified subgraph. In some embodiments, configuring the dataset catalog to enable access to the new entry associated with the identified subgraph comprises providing a user interface through which a user can identify, in the dataset catalog, the new entry associated with the identified subgraph.

In some embodiments, the one or more respective data sources comprise a physical dataset previously stored in memory and the dataset catalog includes an entry associated with the physical dataset. In some embodiments, the data processing system includes data storage, and the method further comprises: storing the subgraph in the data storage of the data processing system; and wherein creating the new entry comprises storing, in the new entry, a reference to a location of the stored subgraph in the data storage of the data processing system.

Some embodiments provide a data processing system for enabling efficient development of software application programs in a dynamic environment with multiple datasets by generating entries in a dataset catalog to provide a software application program with access to output data dynamically generated by dataflow graphs, the entries associated with respective software application programs developed as dataflow graphs having nodes representing data processing operations and links representing flows of data. The system comprises: at least one computer hardware processor; and at least one non-transitory computer-readable storage medium storing instructions that, when executed by the at least one computer hardware processor, cause the at least one computer hardware processor to perform: identifying a subgraph of a dataflow graph, wherein the subgraph has one or more nodes representing one or more respective data sources, one or more nodes representing one or more respective data processing operations, and an output link representing data output by the subgraph, wherein, when the subgraph is executed, the subgraph generates output data by applying the one or more data processing operations to data obtained from the one or more data sources; creating, in the dataset catalog, a new entry associated with the identified subgraph, the new entry associated with information indicating nodes, links, and configuration parameters of the identified subgraph; and configuring the dataset catalog to enable access to the new entry, in the dataset catalog, associated with the identified subgraph.

In some embodiments, identifying the subgraph comprises: displaying, in a user interface, a graphical representation of a dataflow graph; and receiving, via the user interface, first user input indicating the subgraph within the dataflow graph. In some embodiments, the instructions further cause the at least one computer hardware processor to perform: receiving, via the user interface, second user input commanding creation of the new entry associated with the indicated subgraph; wherein the creating of the new entry associated with the identified subgraph is performed in response to receiving the second user input.

In some embodiments, the data processing system comprises data storage storing a previously created dataflow graph and identifying the subgraph comprises: receiving, via a user interface, a user input identifying the previously created dataflow graph as the subgraph. In some embodiments, the new entry includes the information indicating the nodes, links, and configuration parameters of the identified subgraph. In some embodiments, configuring the dataset catalog to enable access to the new entry associated with the identified subgraph comprises providing a user interface through which a user can identify, in the dataset catalog, the new entry associated with the identified subgraph.

In some embodiments, the one or more respective data sources comprise a physical dataset previously stored in memory and the dataset catalog includes an entry associated with the physical dataset. In some embodiments, the data processing system includes data storage, and the instructions further cause the at least one computer hardware processor to perform: storing the subgraph in the data storage of the data processing system; and wherein creating the new entry comprises storing, in the new entry, a reference to a location of the stored subgraph in the data storage of the data processing system.

Some embodiments provide at least one non-transitory computer-readable storage medium storing instructions. The instructions, when executed by at least one computer hardware processor of a data processing system, cause the at least one computer hardware processor to perform a method for enabling efficient development of software application programs in a dynamic environment with multiple datasets by generating entries in a dataset catalog to provide a software application program with access to output data dynamically generated by dataflow graphs, the entries associated with respective software application programs developed as dataflow graphs having nodes representing data processing operations and links representing flows of data. The method comprises: identifying a subgraph of a dataflow graph, wherein the subgraph has one or more nodes representing one or more respective data sources, one or more nodes representing one or more respective data processing operations, and an output link representing data output by the subgraph, wherein, when the subgraph is executed, the subgraph generates output data by applying the one or more data processing operations to data obtained from the one or more data sources; creating, in the dataset catalog, a new entry associated with the identified subgraph, the new entry associated with information indicating nodes, links, and configuration parameters of the identified subgraph; and configuring the dataset catalog to enable access to the new entry, in the dataset catalog, associated with the identified subgraph.

In some embodiments, identifying the subgraph comprises: displaying, in a user interface, a graphical representation of a dataflow graph; and receiving, via the user interface, first user input indicating the subgraph within the dataflow graph.

In some embodiments, the method further comprises: receiving, via the user interface, second user input commanding creation of the new entry associated with the indicated subgraph; wherein the creating of the new entry associated with the identified subgraph is performed in response to receiving the second user input.

Some embodiments provide a method, performed by a data processing system, for providing a software application program, developed as a dataflow graph having nodes representing data processing operations and links representing flows of data between the nodes, with access to output data dynamically generated by one or more other dataflow graphs. The method comprises: using at least one computer hardware processor to perform: providing a user interface configured to receive from a user an identification, in a dataset catalog, of one or more entries associated with one or more respective catalogued dataflow graphs having nodes representing data processing operations and links representing flows of data between the nodes, the one or more entries including a first entry associated with a first catalogued dataflow graph, wherein the first catalogued dataflow graph has one or more input nodes representing one or more respective data sources, one or more nodes representing one or more respective data processing operations, and an output link representing data output from the first catalogued dataflow graph, wherein, when the first catalogued dataflow graph is executed, the first catalogued dataflow graph generates output data at the output link by applying the one or more data processing operations to data obtained from the one or more data sources; receiving, via the user interface, an identification of the first entry associated with the first catalogued dataflow graph; and configuring, by using the first entry, the dataflow graph of the software application program to receive, as an input, the output data dynamically generated when the first catalogued dataflow graph is executed, the configuring comprising associating one of the input nodes in the dataflow graph of the software application program with the first catalogued dataflow graph.

In some embodiments, receiving the identification of the first entry associated with the first catalogued dataflow graph comprises receiving a selection of the first entry via the user interface.

In some embodiments, providing the user interface comprises generating a graphical user interface having a searchable menu of the one or more entries in the dataset catalog; and receiving the identification of the first entry associated with the first catalogued dataflow graph comprises receiving, via the user interface, a user input indicating a selection of the first entry in the searchable menu.

In some embodiments, the method further comprises executing the configured dataflow graph of the software application program. In some embodiments, executing the configured dataflow graph of the software application program comprises: executing the first catalogued dataflow graph to generate the output data; and providing the generated output data as input to the dataflow graph of the software application for performance of at least one of the one or more data processing operations using the output data.

In some embodiments, executing the configured dataflow graph causes executing of the first catalogued dataflow graph. In some embodiments, the output data is generated by the first catalogued dataflow graph during execution of the configured dataflow graph. In some embodiments, executing the configured dataflow graph of the software application program comprises: compiling the configured dataflow graph of the software application program to obtain a compiled software application program; and executing the compiled software application program.

In some embodiments, the method further comprises maintaining the dataset catalog, wherein the dataset catalog includes multiple entries associated with respective catalogued dataflow graphs and preferably multiple entries associated with respective physical datasets previously stored in memory.

In some embodiments, the user interface allows the user to identify, in the dataset catalog, at least one entry associated with at least one respective catalogued physical dataset previously stored in memory, the at least one entry including a second entry associated with a physical dataset stored in the memory. In some embodiments, the dataflow graph comprises multiple input nodes including the first input node, the method further comprising: receiving, via the user interface, an identification of the second entry associated with the physical dataset stored in the memory; and configuring the dataflow graph of the software application program to receive, as an input, data from the physical dataset, the configuring comprising associating a second one of the multiple input nodes in the dataflow graph with the data from the physical dataset.

In some embodiments, the method further comprises: transforming the dataflow graph of the software application program including the first input node associated with the first catalogued dataflow graph to obtain a transformed dataflow graph. In some embodiments, the transforming comprises: incorporating the first catalogued dataflow graph into the dataflow graph at the first input node associated with the first catalogued dataflow graph; identifying at least one portion of the dataflow graph to transform, the at least one portion including the first catalogued dataflow graph incorporated at the first input node; and transforming the first catalogued dataflow graph incorporated at the first input node to obtain the transformed dataflow graph. In some embodiments, the transforming comprises: incorporating the first catalogued dataflow graph into the dataflow graph as a first subgraph at the first input node associated with the first catalogued dataflow graph; and transforming the first subgraph to obtain a second subgraph that is different from the first subgraph. In some embodiments, transforming the first subgraph to obtain the second subgraph comprises: transforming the first subgraph based at least in part on at least one operation represented by at least one node downstream of the first input node in the dataflow graph. In some embodiments, transforming the first subgraph to obtain the second subgraph comprises: applying at least one optimization to the first subgraph to obtain the second subgraph.

In some embodiments, at least one optimization comprises at least one of: removing at least one node of the first subgraph; replacing at least one node of the first subgraph; changing an order of a plurality of nodes of the first subgraph; combining a plurality of nodes of the first subgraph; parallelizing processing of at least one operation represented by least one node of the first subgraph; or deleting data in at least one node of the first subgraph such that it is not used in a subsequent operation represented by a node downstream of the at least one node in the first subgraph.

In some embodiments, the method further comprises: compiling the transformed dataflow graph into a software application program; and executing the software application program.

In some embodiments, the first catalogued dataflow graph was generated from a subgraph embedded in another dataflow graph, the other dataflow graph having nodes representing data processing operations and links representing flow of data between the nodes, wherein the other dataflow graph is separate from the dataflow graph of the software application. In some embodiments, the method further comprises: displaying, in a UI, a graphical representation of the other dataflow graph; and receiving, through the UI, user input indicating the subgraph within the dataflow graph. In some embodiments, the output link is the only output link of the first catalogued dataflow graph.

In some embodiments, the first catalogued dataflow graph is stored in data storage of the data processing system, and the first entry stores a reference to a location of the first catalogued dataflow graph in the data storage. In some embodiments, the first entry stores a reference to a file storing information identifying nodes of the first catalogued dataflow graph and/or operations at the nodes of the first catalogued dataflow graph.

In some embodiments, configuring the dataflow graph of the software application program to receive, as an input, the output data generated when the first catalogued dataflow graph is executed comprises: receiving, via the user interface, an association of the first entry with the first input node in the dataflow graph of the software application program; and in response to receiving the user input associating the first entry with the first input node in the dataflow graph of the software application program: configuring the dataflow graph of the software application program to receive, at the first input node, data output through the output link of the first catalogued dataflow graph as a result of executing the first catalogued dataflow graph.

In some embodiments, receiving the association of the first entry with the first input node in the dataflow graph of the software application program comprises: receiving, via the user interface, user input indicating association of a first graphical element representing the first entry with a second graphical element representing the first input node in the dataflow graph of the software application program. In some embodiments, the user input indicating the association of the first graphical element representing the first entry with the second graphical element representing the first input node comprises dragging the first graphical element to the second graphical element in the user interface.

Some embodiments provide a data processing system for providing a software application program, developed as a dataflow graph having nodes representing data processing operations and links representing flows of data between the nodes, with access to output data dynamically generated by one or more other dataflow graphs. The data processing system comprises: at least one computer hardware processor; and at least one non-transitory computer-readable storage medium storing instructions that, when executed by the at least one computer hardware processor, cause the at least one computer hardware processor to perform: providing a user interface configured to receive from a user an identification, in a dataset catalog, of one or more entries associated with one or more respective catalogued dataflow graphs having nodes representing data processing operations and links representing flows of data between the nodes, the one or more entries including a first entry associated with a first catalogued dataflow graph, wherein the first catalogued dataflow graph has one or more input nodes representing one or more respective data sources, one or more nodes representing one or more respective data processing operations, and an output link representing data output from the first catalogued dataflow graph, wherein, when the first catalogued dataflow graph is executed, the first catalogued dataflow graph generates output data at the output link by applying the one or more data processing operations to data obtained from the one or more data sources; receiving, via the user interface, an identification of the first entry associated with the first catalogued dataflow graph; and configuring, by using the first entry, the dataflow graph of the software application program to receive, as an input, the output data dynamically generated when the first catalogued dataflow graph is executed, the configuring comprising associating one of the input nodes in the dataflow graph of the software application program with the first catalogued dataflow graph.

Some embodiments provide at least one non-transitory computer-readable storage medium storing instructions that, when executed by at least one computer hardware processor of a data processing system, cause the at least one computer hardware processor to perform a method for providing a software application program, developed as a dataflow graph having nodes representing data processing operations and links representing flows of data between the nodes, with access to output data dynamically generated by one or more other dataflow graphs. The method comprises: providing a user interface configured to receive from a user an identification, in a dataset catalog, of one or more entries associated with one or more respective catalogued dataflow graphs having nodes representing data processing operations and links representing flows of data between the nodes, the one or more entries including a first entry associated with a first catalogued dataflow graph, wherein the first catalogued dataflow graph has one or more input nodes representing one or more respective data sources, one or more nodes representing one or more respective data processing operations, and an output link representing data output from the first catalogued dataflow graph, wherein, when the first catalogued dataflow graph is executed, the first catalogued dataflow graph generates output data at the output link by applying the one or more data processing operations to data obtained from the one or more data sources; receiving, via the user interface, an identification of the first entry associated with the first catalogued dataflow graph; and configuring, by using the first entry, the dataflow graph of the software application program to receive, as an input, the output data dynamically generated when the first catalogued dataflow graph is executed, the configuring comprising associating one of the input nodes in the dataflow graph of the software application program with the first catalogued dataflow graph.

The foregoing is a non-limiting summary.

### BRIEF DESCRIPTION OF DRAWINGS

Various aspects and embodiments will be described with reference to the following figures. It should be appreciated that the figures are not necessarily drawn to scale. Items appearing in multiple figures are indicated by the same or a similar reference number in all the figures in which they appear.
FIG. 1 is a diagram of a data processing system.
FIG. 2A is a diagram illustrating cataloguing of a subgraph as a dataflow graph dataset in a data processing system, according to some embodiments of the technology described herein.
FIG. 2B is a diagram illustrating incorporation of the catalogued subgraph of FIG. 2A into software application programs, according to some embodiments of the technology described herein.
FIG. 3A is a software application program development user interface (UI) of a data processing system, according to some embodiments of the technology described herein.
FIG. 3B illustrates identification of a subgraph within a dataflow graph of the software application program development UI of FIG. 3A, according to some embodiments of the technology described herein.
FIG. 3C shows a subgraph UI menu associated with the subgraph identified in FIG. 3B, according to some embodiments of the technology described herein.
FIG. 3D illustrates cataloguing of the subgraph of FIG. 3B in a dataset catalog of the data processing system in response to user input received through the subgraph UI menu of FIG. 3C, according to some embodiments of the technology described herein.
FIG. 3E shows the dataset catalog and the data storage 202 of the data processing system updated via cataloguing of the subgraph in FIG. 3D, according to some embodiments of the technology described herein.
FIG. 3F shows the software application program development UI with another dataflow graph of another software application program, according to some embodiments of the technology described herein.
FIG. 3G is the dataflow graph of FIG. 3F with the catalogued subgraph associated with an input node, according to some embodiments of the technology described herein.
FIG. 4A is a block diagram illustrating a dataset catalog of a data processing system, according to some embodiments of the technology described herein.
FIG. 4B is a block diagram of system modules in a data processing system, according to some embodiments of the technology described herein.
FIG. 4C is a diagram illustrating interaction among the system modules of FIG. 4B, according to some embodiments of the technology described herein.
FIG. 4D is a diagram illustrating a dataflow graph including a subgraph that was incorporated into the dataflow graph as input, according to some embodiments of the technology described herein.
FIG. 4E is a diagram illustrating transformation of the dataflow graph of FIG. 4D, according to some embodiments of the technology described herein.
FIG. 4F is a diagram illustrating a transformed dataflow graph obtained after the transformation of FIG. 4D, according to some embodiments of the technology described herein.
FIG. 4G is a diagram illustrating a dataset catalog entry, of the dataset catalog of FIG. 4A, associated with a physical dataset, according to some embodiments of the technology described herein.
FIG. 5 is an example dataflow graph of a software application program, according to some embodiments of the technology described herein.
FIG. 6 is a flowchart of an example process of configuring a software application program developed as a dataflow graph to receive output data dynamically generated by a dataflow graph as input, according to some embodiments of the technology described herein.
FIG. 7 is a flowchart of an example process of providing software application programs with access to output data dynamically generated by a dataflow graph, according to some embodiments of the technology described herein.
FIG. 8 is a screenshot of a software application program development UI, according to some embodiments of the technology described herein.
FIG. 9 is a screenshot of the UI of FIG. 8 including a dataflow graph, according to some embodiments of the technology described herein.
FIG. 10 is a screenshot of a UI with a portion of the dataflow graph of FIG. 9 configured as a subgraph, according to some embodiments of the technology described herein.
FIG. 11 is a screenshot of a UI with a menu for storing the subgraph of FIG. 10 as a dataset accessible through a dataset catalog, according to some embodiments of the technology described herein.
FIG. 12 is a screenshot of a UI for configuring details of a dataflow graph dataset, according to some embodiments of the technology described herein.
FIG. 13 is a screenshot of a UI for cataloguing a dataflow graph, according to some embodiments of the technology described herein.
FIG. 14 is a screenshot of UI with a dataflow graph that incorporates the catalogued dataflow graph of FIG. 13, according to some embodiments of the technology described herein.
FIG. 15 is a screenshot of a UI displaying information about a catalogued dataflow graph, according to some embodiments of the technology described herein
FIG. 16 is a screenshot of a UI displaying output data generated when a catalogued dataflow graph executed, according to some embodiments of the technology described herein.
FIG. 17 is a screenshot of a UI displaying information in a dataset catalogue entry associated with a physical dataset, according to some embodiments of the technology described herein.
FIG. 18 is a screenshot of a UI displaying information in a dataset catalogue entry associated with a dataflow graph dataset, according to some embodiments of the technology described herein.
FIG. 19 is a block diagram of an illustrative computing system that may be used in implementing some embodiments of the technology described herein.

### DETAILED DESCRIPTION

A data processing system may use one or more software application programs to process data. One or more of the software application programs utilized by the data processing system may be developed as dataflow graphs. A dataflow graph may include: (1) components, termed "nodes" or "vertices," representing data processing operations to be performed on input data; and (2) "links" or "edges" between the components representing flows of data. Nodes of a dataflow graph may include one or more nodes representing respective input data sources, one or more output nodes representing respective output datasets, and/or one or more nodes representing data processing operations to be performed on data.

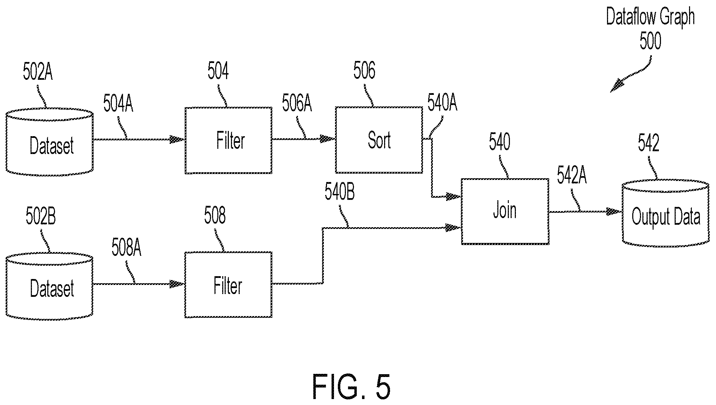

To illustrate, FIG. 5 is an example dataflow graph 500 of a software application program, according to some embodiments of the technology described herein. The dataflow graph 500 receives datasets as input at nodes 502A, 502B. The dataset input at node 502A is provided to a filtering operation at node 504 as indicated by the link 504A. The output of the filtering operation at node 504 is then provided as input to a sort operation at node 506 as indicated by the link 506A. The dataset input at node 502B is provided to a filter operation at node 508 as indicated by link 508A. The outputs of the sort operation at node 506 and the filter operation at node 508 are then provided as inputs to a join operation at node 550 as indicated by the links 550A, 550B. The output of the join operation 550 is then provided to an output data sink 552 as indicated by link 552A.

The inventors have developed techniques for allowing software applications developed as dataflow graphs and/or portions thereof to be stored and then accessed through a data catalog by other software applications (e.g., developed as other dataflow graphs) as a source of dynamic input data in the other software applications. The stored dataflow graphs may be incorporated (e.g., as inputs) into one or more other software application programs (e.g., programs developed as dataflow graphs or other types of software programs) through the use of the data catalog. This enables data dynamically generated by executing the catalogued dataflow graphs to be provided as input to the other software application program(s). The catalog maintains entries corresponding to dataflow graphs. The entries allow reuse of the dataflow graphs in other software applications, instead of requiring redevelopment and/or replication of code in the software applications. This enables more efficient usage of computing resources and, in turn, efficient execution of data operations in a dynamic environment with multiple datasets.

The term "dataflow graph" may refer to a dataflow graph of a software application or a portion of a given dataflow graph. A stored dataflow graph that is accessible through the data catalog may be referred to herein as a "catalogued dataflow graph" or a "dataflow graph dataset". Stored dataflow graphs that are accessible through the data catalog have a single link (e.g., only a single link, in some embodiments) representing data output by the dataflow graph. A dataflow graph with only a single link representing data output by the dataflow graph may also be referred to herein as a "subgraph". Catalogued dataflow graphs may be incorporated into one or more other dataflow graphs. Output data provided through the output link of catalogued dataflow graph may be used in downstream operations of a dataflow graph into which the catalogued dataflow graph is incorporated.

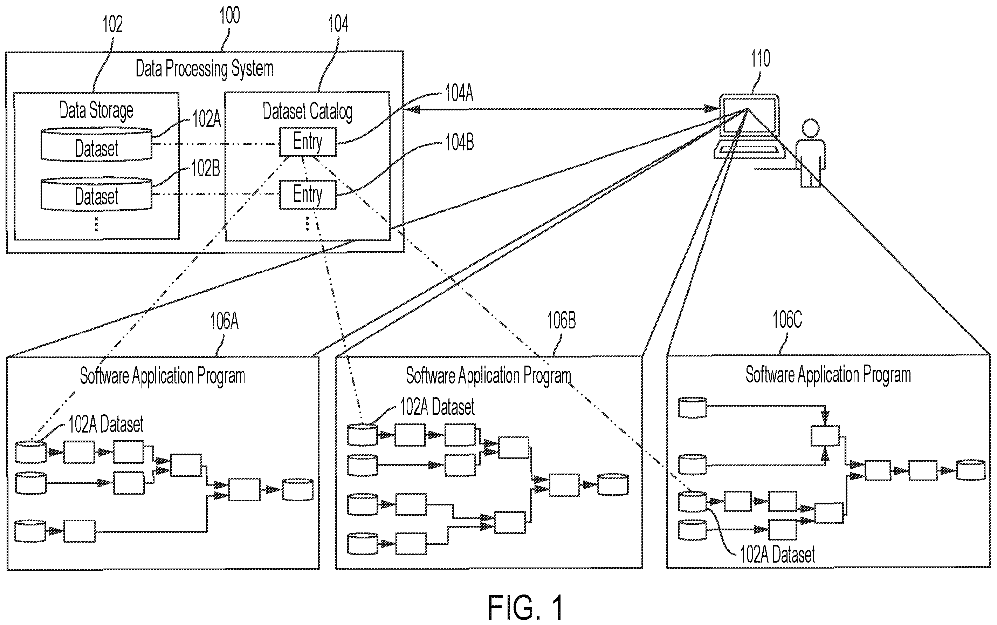

FIG. 1 is a diagram of a data processing system 100. As shown in FIG. 1, the data processing system 100 includes data storage 102 storing datasets including datasets 102A and 102B. The data processing system 100 includes a dataset catalog 104 with entries corresponding to the datasets stored in data storage 102. The entries include entry 104A corresponding to dataset 102A and entry 104B corresponding to dataset 102B. A user of device 110 may develop software application programs in the data processing system 100 that perform operations using data part of or derived from one or more datasets stored in the data storage 102. The software application programs may be developed as dataflow graphs. FIG. 1 shows software application programs 106A, 106B, 106C that have been developed by the user. The software application programs 106A, 106B, 106C operate on input datasets.

The entries 104A, 104B in the dataset catalog 104 may be used to incorporate a dataset into a software application program. The user of device 110 may use the entries 104A, 104B to associate datasets 102A, 102B with input sinks in a dataflow graph. As shown in the example of FIG. 1, dataset 102A has been included as an input in each of the software application programs 106A, 106B, 106C using the entry 104A of the dataset catalog 104. Each of the software application programs 106A, 106B, 106C performs one or more operations using data from the dataset 102A. When one of the software application programs 106A, 106B, 106C is executed by the data processing system 100, the data processing system 100 may execute a set of operations indicated by a dataflow graph of the software application program using data from the dataset 102A. The data processing system 100 may generate output data as a result of executing the software application program.

The data processing system 100 may have a large number (e.g., hundreds or thousands) of software application programs developed as dataflow graphs to perform data processing using datasets managed by the data processing system. The datasets may change over time (e.g., as a result of operations performed on data stored in the dataset). Further, users may frequently develop new dataflow graphs for new software applications. For example, the data processing system 100 may be used to manage datasets for a multinational bank. The multinational bank may develop thousands of dataflow graphs for processing customer data related to millions of bank accounts. In another example, the data processing system 100 may manage datasets for a credit card company. The credit card company may develop thousands of dataflow graphs for processing transaction data generated from millions of credit card transactions that occur per day.

The inventors have recognized that a given dataflow graph (e.g., a standalone graph or a subgraph of a larger dataflow graph) may be useful as part of one or more other software application programs. For example, the output of the sort operation at node 506 in FIG. 5 may be useful in one or more other dataflow graphs of one or more other respective software application programs. Conventionally, a user would need to recreate a given dataflow graph in each and every other dataflow graph in which the given dataflow graph would be used. This would require users to recreate the same dataflow graph multiple times to incorporate it into other dataflow graphs. For example, the same subgraph may be recreated by users tens, hundreds, or thousands of times for different software application programs. Further, if the dataflow graph needed to be updated, the user would be required to update the dataflow graph in each of the different software application programs. Such conventional approaches are inefficient because of the duplicated effort in recreating dataflow graphs.

One possible solution would be to store output data generated when a dataflow graph is executed for subsequent use as inputs in other dataflow graphs. However, datasets managed by a data processing system may be frequently updated, deleted, or otherwise modified. For example, in the case that the data processing system 100 manages datasets storing information for a multi-national bank (e.g., customer information, account information, transaction information), the datasets may be frequently updated in the course of the bank's operations. As another example, in the case that the data processing system 100 manages datasets storing data for a credit card company (e.g., transaction history, account balances, credit usage, etc.), the datasets may be frequently updated based on millions of credit card transactions that occur every day. Furthermore, a dataflow graph may need to be modified after execution of the dataflow graph in such that a subsequent execution of the dataflow graph would result in different output data relative to the first execution. Given the dynamic nature of the data and dataflow graphs, the output data generated by a dataflow graph when executed at one time may be different than the output data generated when the dataflow graph is executed at another time. Thus, previously generated output data obtained from execution of a dataflow graph would be stale or outdated. Moreover, storing outputs generated by executing a large number (e.g., thousands or millions) of dataflow graph would require substantial additional storage resources, rendering such an approach untenable.

Accordingly, the inventors have developed a data processing system that stores dataflow graphs and allows them to be accessed by software application programs through a dataset catalog of the data processing system. Software application programs (e.g., developed as dataflow graphs) can access the dataflow graph datasets through the dataset catalog in order to incorporate output data generated by dataflow graphs when executed. Unlike previous approaches, where only datasets could be registered in a dataset catalog for access by software application programs, the inventors have developed a system in which dataflow graphs themselves may be registered in the dataset catalog and subsequently accessed by software application programs via the dataset catalog. This allows a catalogued dataflow graph to be efficiently incorporated into multiple software application programs using the dataset catalog.

Techniques described herein improve efficiency of developing software application programs by allowing previously developed software to be easily incorporated into several applications. A catalogued dataflow graph incorporated into a software application program becomes a subgraph embedded in the software application program which is compiled and executed with the software application program. Execution of the subgraph generates data that can be used in downstream operations of the software application. Accordingly, catalogued dataflow graphs allow software application programs to incorporate data generated at runtime into operations of the software application program.

A dataflow graph may be compiled into an executable software application program and then executed. In some embodiments, a data processing system may transform the dataflow graph prior to compilation to improve execution efficiency of the software application program. When a catalogued dataflow graph is incorporated into the dataflow graph (e.g., as a subgraph), transforming the dataflow graph may include transforming the subgraph. The data processing system may transform the subgraph in a manner that is customized for the software application (e.g., based on operations in the dataflow graph downstream of the subgraph), and result in a more efficient software application program.

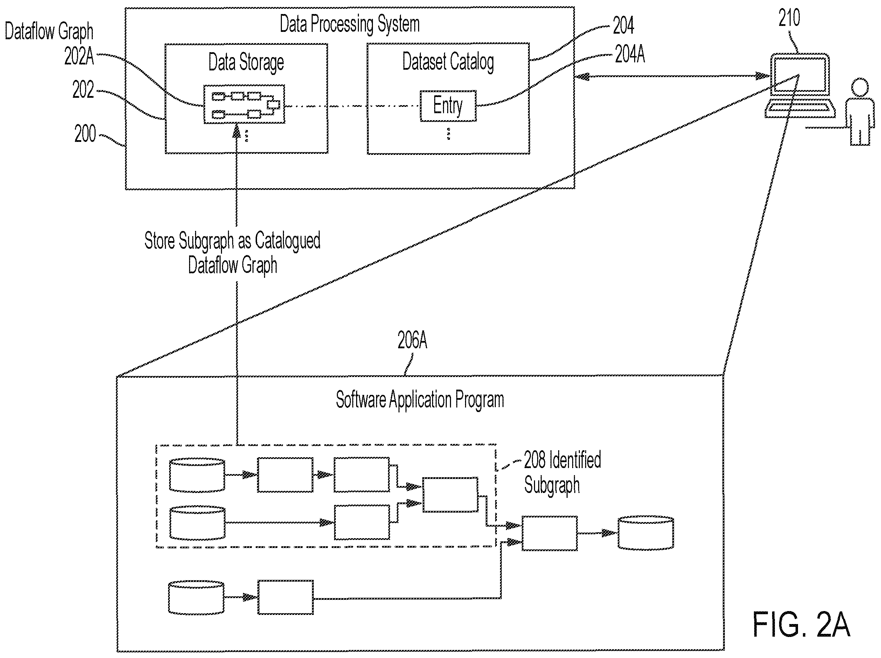

FIG. 2A illustrates a data processing system 200 in which dataflow graphs may be registered in a dataset catalog 204 of the data processing system 200, according to some embodiments of the technology described herein. As shown in the example of FIG. 2A, the data processing system 200 stores a subgraph 208 identified within a dataflow graph of a software application program 206A in data storage 202 of the data processing system 200. The data processing system 200 further generates an entry 204A in the dataset catalog 204 associated with the catalogued dataflow graph 202A. The entry 204A may subsequently be used by other software application programs (e.g., developed as dataflow graphs) to incorporate the catalogued dataflow graph 202A. In contrast to the data processing system 100 of FIG. 1, which only includes entries for physical datasets in its data catalog 104, the data processing system 200 of FIG. 2A may include entries for both physical datasets and dataflow graph datasets that can be incorporated into software application programs.

As illustrated in FIG. 2A, the system developed by the inventors allows users to identify a dataflow graph (e.g., in storage) or a subgraph of a larger dataflow graph, and stores the identified dataflow graph as a dataflow graph dataset that can be accessed through a data catalog. For example, a user may determine that a particular subgraph within a dataflow graph may be useful in one or more other dataflow graphs. The system allows the user to identify the particular subgraph, and then stores the subgraph as a dataflow graph dataset that can be accessed by software applications through the data catalog. In some embodiments, the system may allow the user to highlight a portion of a dataflow graph to indicate a subgraph, and then provide input through a UI menu indicating a command to store the highlighted portion as a dataflow graph dataset. The stored dataflow graph dataset may then be utilized like an input dataset in other software application programs (e.g., being developed as dataflow graphs). In some embodiments, the system may allow a user to provide input indicating a command to make a previously stored subgraph a dataflow graph dataset that can be accessed by software applications through the data catalog.

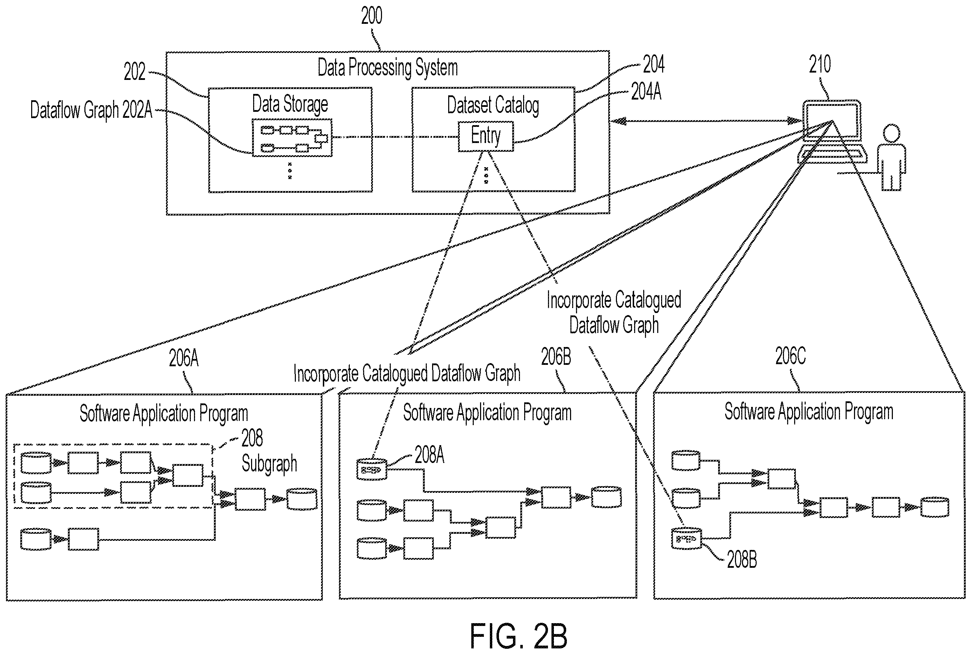

FIG. 2B illustrates how the entry 204A associated with the dataflow graph 202A catalogued in FIG. 2A can be used to incorporate the catalogued dataflow graph 202A into other software application programs 206B, 206C. As shown in the example of FIG. 2B, the catalogued dataflow graph 202A is incorporated into the software application programs 206B, 206C by associating the entry 204A with input nodes 208A, 208B of dataflow graphs of the software application programs 206B, 206C. For example, the entry 204A may include a reference to the dataflow graph 202A. The system 200 may use the entry 204 to configure the input nodes 208A, 208B to each access the dataflow graph 202A (e.g., prior to compilation of the dataflow graphs into executable software application programs). An incorporated dataflow graph may be compiled and executed as part of a software application program. The data output by the incorporated dataflow graph is obtained by executing the operations indicated by the incorporated dataflow graph as part of executing the software application. The data processing system 200 thus allows catalogued dataflow graphs to be used as sources of dynamic data that is generated at runtime for a software application program.

As illustrated in FIG. 2B, software application programs (e.g., developed as dataflow graphs) may access a dataflow graph dataset through the dataset catalog to incorporate output data generated by a subgraph. Thus, the system allows a subgraph to be used repeatedly in multiple different software application programs without users having to recreate the subgraph. Moreover, output data generated by the subgraph when it is executed as part of a software application will be up to date at a time when the subgraph is executed. A catalogued subgraph may further be updated after its creation. The catalogued subgraph may be executed in its most current state when executed as part of a software application. A catalogued subgraph thus allows software application programs to incorporate up to date output data generated by a current version of the catalogued subgraph.

In some embodiments, the system may optimize a dataflow graph resulting from incorporating a catalogued subgraph into a given dataflow graph. The system may analyze the structure of the resulting dataflow graph (e.g., by analyzing the structure of the catalogued subgraph, the other dataflow graph, and how they are linked) to identify transformations that may be applied to the resulting dataflow graph such that a software application program obtained by compiling the dataflow graph may be executed more efficiently by the data processing system. As part of optimizing the resulting dataflow graph, the system may apply transformations to the subgraph that was incorporated into the resulting dataflow graph. These transformations may be specific to the given dataflow graph into which the catalogued subgraph was incorporated. After these transformations, the resulting subgraph may have a different structure than the catalogued subgraph that was originally incorporated into the given dataflow graph. The resulting subgraph may be optimized for execution as part of the given dataflow graph.

For example, as part of optimizing a given dataflow graph that incorporates a catalogued subgraph, the system may transform the incorporated subgraph by removing redundant operations in the subgraph, reducing the amount of data read from an input dataset, and/or parallelizing operations in the subgraph. The transformed subgraph may have a different structure than the catalogued subgraph. The system may then compile the given dataflow graph including the transformed subgraph to obtain an executable software application program. The software application program may be more efficiently executed than one that would have been obtained by compiling the given dataflow graph without transformation of the incorporated subgraph.

In some embodiments, a data processing system may have a dataset catalog to provide dataflow graphs of software application programs with access to datasets managed by the data processing system. The dataset catalog may have entries associated with respective datasets. A software application program being developed as a dataflow graph may access entries of the dataset catalog to incorporate datasets as inputs in the dataflow graph. In some embodiments, a system may store a subgraph as a dataset by: (1) identifying a subgraph (e.g., within a dataflow graph, or in storage); (2) creating, in the dataset catalog, an entry associated with the identified subgraph, the entry associated with information indicating the subgraph; and (3) configuring the dataset catalog to enable access to the entry associated with the subgraph. The catalogued subgraph may then be used as a dataset in other dataflow graphs by accessing the entry associated with the subgraph from the dataset catalog.

In some embodiments, a subgraph may have a single link representing data output by the subgraph. This characteristic of the subgraph allows the subgraph to be registered in the data catalog as a subgraph dataset that can be used by software applications. Output data generated from execution of the catalogued subgraph may be provided at an input node that the entry associated with the subgraph is associated with. When the dataflow graph with the input node associated with the subgraph is being compiled into an executable software application program, the output link of the subgraph may be connected to a downstream node that the input node was connected to. The data generated by executing the subgraph is provided as input to the dataflow graph in the compiled software application program.

In some embodiments, identifying the subgraph of the dataflow graph may comprise: (1) displaying, in a UI, a graphical representation of the dataflow graph (e.g., with graphical elements representing input datasets and operations); and (2) receiving, via the UI, a first user input indicating the subgraph within the dataflow graph. The system may receive, via the UI, a user input commanding creation of the entry associated with the indicated subgraph. The entry may include information indicating information about the subgraph such as nodes, links, configuration parameters, and/or other information.

In some embodiments, the system may provide a UI (e.g., a dataset catalog UI) through which a user can identify, in the dataset catalog, the entry associated with the identified subgraph (e.g., by selecting a graphical element representing the entry from a list of elements representing entries of the dataset catalog). Dataflow graphs of other software application programs may access output data dynamically generated by the subgraph. The system may: (1) receive, via the UI, an identification of the entry associated with the catalogued subgraph; and (2) configure a dataflow graph of another software application program to receive, as input, the output data generated when the catalogued subgraph is executed (e.g., by associating one of the input nodes in the dataflow graph with the catalogued subgraph).

In some embodiments, the system may provide a UI with a searchable menu of entries in the dataset catalog. The system may receive an identification of the entry associated with the catalogued subgraph by receiving, via the UI, user input indicating a selection of the entry from the searchable menu (e.g., from a list of search results). In some embodiments, the system may execute the dataflow graph of the other software application program by: (1) executing the catalogued subgraph to generate the output dataset; and (2) providing the generated output dataset as input to the dataflow graph for performance of at least one of the one or more data processing operations using data in the output dataset.

In some embodiments, the system may be configured to optimize the dataflow graph of the other software application prior to execution. The system may be configured to optimize the dataflow graph by transforming the dataflow graph to obtain an optimized dataflow graph. The system may be configured to transform the dataflow graph to obtain a transformed dataflow graph that is more computationally efficient to execute. For example, the system may remove redundant operations in the dataflow graph, parallelize one or more operations in the dataflow graph, partition data in the dataflow graph, and/or limit reading of input data to one or more fields that are used downstream in the dataflow graph. Transforming the dataflow graph may include transforming a catalogued subgraph that is incorporated into the dataflow graph (e.g., because the catalogued subgraph is associated with an input node of the dataflow graph). For example, the system may identify various portions of the dataflow graph that may be optimized. The portions may include at least a portion of a catalogued subgraph that was incorporated into the dataflow graph (e.g., by associating a data catalog entry with an input node of the dataflow graph). The system may transform the portion of the catalogued subgraph as part of transforming the dataflow graph.

In some embodiments, a dataset may comprise data as well as information about the data. In some embodiments, the information about the data may be stored in attributevalue pairs. For example, a dataset may comprise one or more attributes having values and the information about the data in the dataset may comprise the values of the attributes. A dataset may be stored by the data processing system in any suitable format and/or using any suitable data structure(s), as aspects of the technology described herein are not limited in this respect.

In some embodiments, a data processing system may manage datasets for an organization, for example, a multinational corporation (e.g., a financial institution, a utility company, an automotive company, an electronics company, etc.) or other business or organization. A large organization may have a vast number of datasets and, as such, in some embodiments, a data processing system may be used to manage a large number (e.g., millions, billions, or trillions) of datasets for the organization. For example, in some embodiments, a data processing system may be configured to manage millions or billions of datasets. In some such embodiments, a data processing system may be used for metadata management in an enterprise setting, whereby datasets store information about other datasets (e.g., tables, transactions, documents, data records, etc.) stored across a globally distributed information technology (IT) infrastructure comprising many databases, data warehouses, data lakes, etc. In this context, a dataset may store information about a corresponding object such as, for example, when the object was created, where it is stored, its size, the identity of the user(s) that are allowed to edit the object, information identifying which application programs use the object, information identifying the sensitivity level of the data, etc. Since a large organization (e.g., a financial institution such as a bank or credit card company, a utility such as a phone or electric company, etc.) will typically manage millions or billions of such datasets, there may be millions or billions of datasets storing information about such datasets that would be managed by the data processing system. Since, in this example application, the data processing system would store information about other data (sometimes called "metadata"), this example application may be called "metadata management." However, it should be appreciated that the techniques described herein are not limited to data processing systems being used for metadata management and may be applied to any data processing system using datasets to manage data irrespective of whether the managed data is metadata or any other type of data.

The techniques described herein may be implemented in any of numerous ways, as the techniques are not limited to any particular manner of implementation. Examples of details of implementation are provided herein solely for illustrative purposes. Furthermore, the techniques disclosed herein may be used individually or in any suitable combination, as aspects of the technology described herein are not limited to the use of any particular technique or combination of techniques.

FIG. 2A is a diagram illustrating cataloguing of a subgraph as a dataflow graph dataset in a data processing system 200, according to some embodiments of the technology described herein. FIG. 2A illustrates identification of the subgraph within a software application program 206A, and storage of the identified subgraph as a catalogued dataflow graph in the data processing system 200. FIG. 2B illustrates subsequent incorporation of the catalogued dataflow graph into other software application programs. The data processing system 200 includes data storage 202 and a dataset catalog 204. The data processing system 200 is in communication with a client device 210.

The client device 210 may be any suitable type of computing device. For example, the client device 210 may be a desktop, laptop, smartphone, or tablet. The data processing system 200 may provide a canvas through which a user can create and/or edit a dataflow graph. The data processing system 200 may be configured to provide the canvas as part of a UI that a user of the client device 210 may use to develop software application programs. The UI may include a display of a dataflow graph of a software application program. The UI may allow the user to modify the dataflow graph, catalogue a subgraph of the dataflow graph, and/or incorporate a catalogued dataflow graph into the dataflow graph. The UI may include an interface displaying dataset catalog entries. The UI may allow a user to incorporate catalogued datasets (e.g., physical datasets and/or dataflow graph datasets) using the interface. A user may select an entry from the interface to incorporate a dataset associated with the entry into the dataflow graph shown. For example, a user may drag an entry from the interface to an input node of the dataflow graph to associate a catalogued dataset with an input node.

In the example of FIG. 2A, a user of the device 210 has developed a software application program 206A in the data processing system 200. The software application program 206A is developed as a dataflow graph. The dataflow graph of the software application program 206A includes a subgraph 208. In some embodiments, the data processing system 200 may be configured to identify the subgraph 208 based on user input. For example, the data processing system 200 may receive input through a GUI in which the user has identified the subgraph 208 embedded within the dataflow graph of software application program 206A.

As illustrated in the example embodiment of FIG. 2A, the subgraph 208 has a single link representing output of the subgraph 208. Data output through the output link of the subgraph 208 may subsequently be used in downstream operations. For example, data output by the subgraph 208 may be used in one or more downstream operations in the dataflow graph. The single output link of the subgraph 208 may allow the subgraph 208 to be registered as a dataflow graph dataset in the dataset catalog 204 and to be subsequently incorporated into other software application programs (e.g., to provide input data to the software application programs).

As illustrated in the example embodiment of FIG. 2A, the data processing system 200 stores the subgraph 208 as a catalogued dataflow graph 202A in data storage 202 of the data processing system 200. The dataflow graph 202A may be executed as part of a software application program to obtain data. This is in contrast to a physical dataset which consists of previously stored data. In some embodiments, the data processing system 200 may be configured to generate a data record storing the dataflow graph 202A. For example, the data processing system 200 may use a file configured for storage of a dataflow graph. In this example, the data processing system 200 may generate a file storing the dataflow graph 202A. The file may subsequently be used to execute the dataflow graph 202A (e.g., as part of executing software application program 206A or another software application program incorporating the dataflow graph 202A).

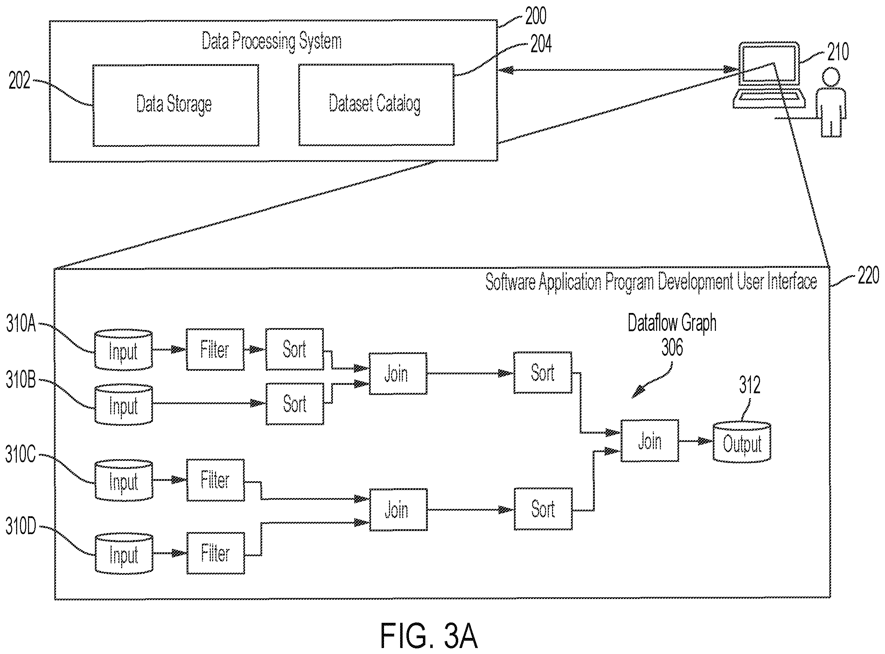

In some embodiments, the data processing system 200 may be configured to store the subgraph 208 in the data storage 202 in response to a user command. The data processing system 200 may be configured to receive input through a GUI indicating a command to store the subgraph 208 as a dataset. An example of how the data processing system 200 stores a subgraph as a dataset is described herein with reference to FIGs. 3A-3G. In some embodiments, the data processing system 200 may be configured to allow updates to the dataflow graph 202A stored in the data storage 202. For example, a user may modify the dataflow graph 202A in the data storage 202 to modify operations performed by the dataflow graph 202A.

As shown in FIG. 2A, the data processing system 200 registers the dataflow graph 202A in a dataset catalog 204. In some embodiments, the data processing system 200 may be configured to register the dataflow graph 202A in the dataset catalog 204 by generating an entry 204A corresponding to the dataflow graph 202A. The entry 204A may be used to incorporate the dataflow graph 202A into another software application program (e.g., as illustrated in FIG. 2B). In some embodiments, the entry 204A may provide a reference to the dataflow graph 202A that can be used to incorporate the dataflow graph 202A into another software application program. For example, the entry 204A may be used to associate the dataflow graph 202A with an input node of a dataflow graph.

FIG. 2B is a diagram illustrating use of the dataflow graph 202A in software application programs 206B, 206C of the data processing system 200, according to some embodiments of the technology described herein. As shown in FIG. 2B, the data processing system 200 uses the entry 204A to incorporate the dataflow graph 202A (which is the subgraph 208 of software application program 206A), into the software application programs 206B, 206C. The data processing system 200 associates the entry 204A with: (1) input node 208A of software application program 206B; and (2) input node 208B of software application program 206C. The data processing system 200 may be configured to execute the dataflow graph 202A to generate data at input nodes 208A, 208B which is used by the respective software application programs 206B, 206C.

For example, when software application program 206B is executed, the dataflow graph 202A may be executed to obtain data for the input node 208A. The dataflow graph 202A is the subgraph 208 from software application program 206A. Accordingly, the data at input node 208A may be the output resulting from execution of dataflow graph 202A at the time that the software application program 206B is executed. Likewise, when software application program 206C is executed, the dataflow graph 202A may be executed to obtain data for the input node 208B. Accordingly, the data at input node 208B may be the output resulting from execution of subgraph 208 at the time that the software application program 206C is executed.

As described with reference to FIG. 2A, in some embodiments, the dataflow graph 202A may be updated. For example, the dataflow graph 202A may initially be a replica of the subgraph 208 from which the dataflow graph 202A was created. A user may subsequently modify the dataflow graph 202A in the data storage 202 (e.g., to modify operations performed by the dataflow graph 202A). Accordingly, when the dataflow graph 202A is incorporated as a dataset into a software application program, the dataflow graph 202A may be executed in its current form at a time when the software application program is executed.

In some embodiments, the data processing system 200 may be configured to compile a dataflow graph and executes the compiled dataflow graph. In some cases, the data processing system 200 may be configured to transform a dataflow graph prior to compilation. The data processing system 200 may be configured to transform a dataflow graph to optimize execution of the dataflow graph. The data processing system 200 may apply a series of one or more transformations to the dataflow graph to obtain an optimized dataflow graph. The data processing system 200 may then compile and execute the optimized dataflow graph instead of the original dataflow graph. The compiled optimized dataflow graph may be executed more efficiently by the data processing system 200 than a compilation of the original dataflow graph. For example, the optimized dataflow graph may read less data than the original dataflow graph, parallelize certain operations of the original dataflow graph, and/or eliminate operations from the original dataflow graph.

As an illustrative example, the data processing system 200 may transform the dataflow graph of software application program 206B and/or that of software application program 206C to obtain an optimized dataflow graph. The data processing system 200 may be configured to transform dataflow graph 202A as part of transforming the dataflow graphs of software application programs 206B, 206C (e.g., because the dataflow graph 202A is executed with execution of the software application programs 206B, 206C). In some embodiments, the data processing system 200 may be configured to transform the dataflow graph 202A for a software application program based on operations of the software application program. For example, the data processing system 200 may transform the dataflow graph 202A as part of transforming the dataflow graph of software application program 206B. In this example, the dataflow graph 202A may be optimized for software application program 206B. As another example, the data processing system 200 may transform the dataflow graph 202A as part of transforming the dataflow graph of the software application program 206C. In this example, the dataflow graph 202A may be optimized for software application program 206C. Each of the software application programs 206B, 206C may be compiled with respective transformed versions of the dataflow graph 202A. In some cases, the transformation of the dataflow graph 202A for one software application program may be different than the transformation of the dataflow graph 202B for another software application program. In other cases, the transformation of the dataflow graph 202A for two software application programs may be identical.

Transformation performed by the data processing system 200 may comprise optimizations for processing data in accordance with one or more of the operations specified in the dataflow graph 202A relative to processing data without the optimizations or transforms, or both. For example, the data processing system 200 adds one or more sort operations, data type operations, join operations, including join operations based on a key specified in the dataflow graph 202A, partition operations, automatic parallelism operations, or operations to specify metadata, among others, to produce a transformed dataflow graph having the desired functionality of the dataflow graph 202A. In some implementations, a dataflow graph is transformed into an optimized dataflow graph by applying one or more dataflow graph optimization rules to the dataflow graph to improve the computational efficiency of the transformed dataflow graph, relative to a computational efficiency of the dataflow graph prior to applying the optimizations. The dataflow graph optimization rules can include, for example, dead or redundant component elimination, early filtering, or record narrowing, among others, as described herein with reference to the transformation engine 412 of the data processing system 200.

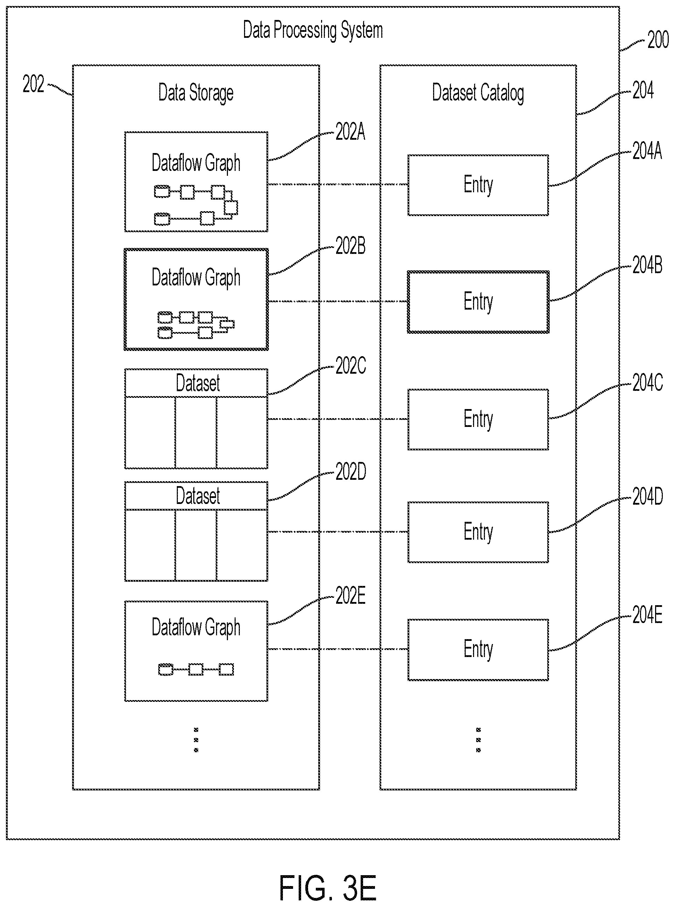

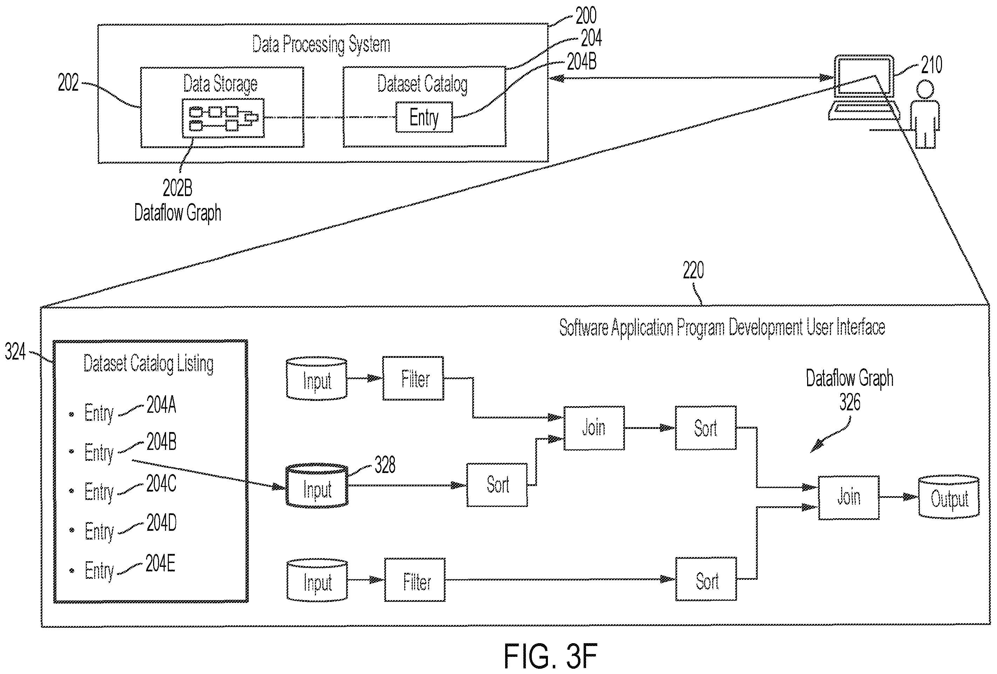

FIGs. 3A-3D illustrate an example sequence of steps for storing a subgraph of a dataflow graph 306 as a catalogued dataflow graph in the data processing system 200. FIG. 3E illustrates the data processing system 200 after the subgraph has been stored as a catalogued dataflow graph. FIGs. 3F-3G illustrate an example sequence of steps for incorporating the catalogued dataflow graph into another dataflow graph.

FIG. 3A is a software application program development UI 220 of the data processing system 200 shown on a display of a device 210 interacting with the data processing system 200, according to some embodiments of the technology described herein. The software application program development UI 220 displays a dataflow graph 306 of a software application program. As shown in FIG. 3A, the software application program receives data from multiple input nodes 310A, 310B, 310C, 310D, and performs various data processing operations (e.g., filter, sort, join, etc.) indicated at the nodes of the dataflow graph 306 to generate data at an output node 312. The software application program development UI 220 may be used by a user of the device 210 to generate the dataflow graph 306. In some embodiments, the dataflow graph 306 may be automatically generated by the data processing system 200. For example, the dataflow graph 306 may be generated by the data processing system 200 based on a query input by the user.

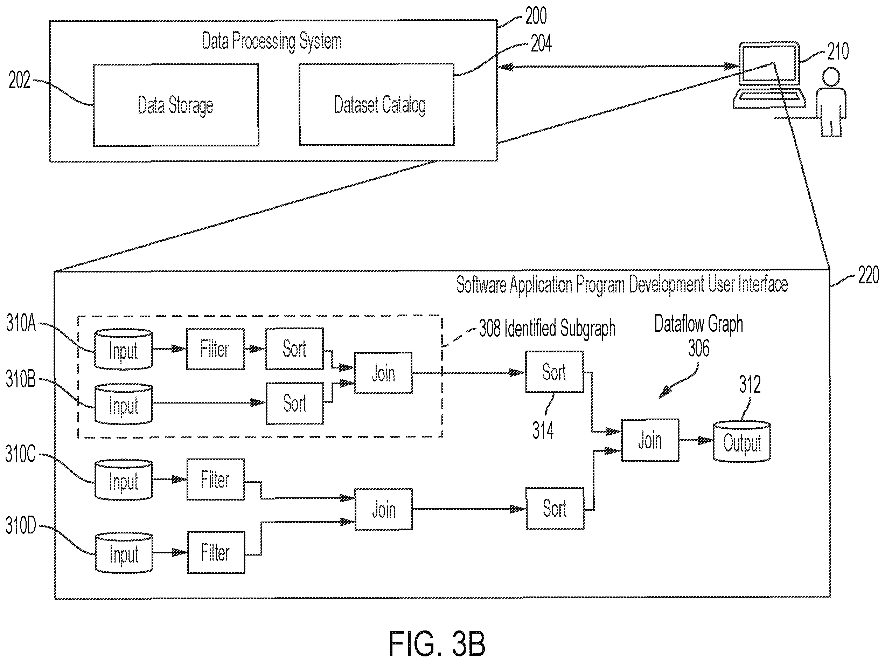

FIG. 3B illustrates identification of a subgraph 308 within the dataflow graph 306 in the software application program development UI 220 of FIG. 3A, according to some embodiments of the technology described herein. In some embodiments, the data processing system 200 may be configured to identify the subgraph 308 based on user input. For example, the data processing system 200 may identify the subgraph 308 based on user input highlighting a portion of the dataflow graph 306 (e.g., by clicking and dragging a box around the portion). In another example, the data processing system 200 may identify the subgraph 308 based on user input clicking on nodes to be included in the subgraph 308. In another example, the data processing system 200 may identify the subgraph 308 based on a user selection of a link marking an output of a portion of the dataflow graph 306. In the example of FIG. 3B, the identified subgraph 308 is a portion of the dataflow graph 306 that performs data processing operations on data received at input nodes 310A, 310B to generate output data that is provided to a sort operation at node 314.

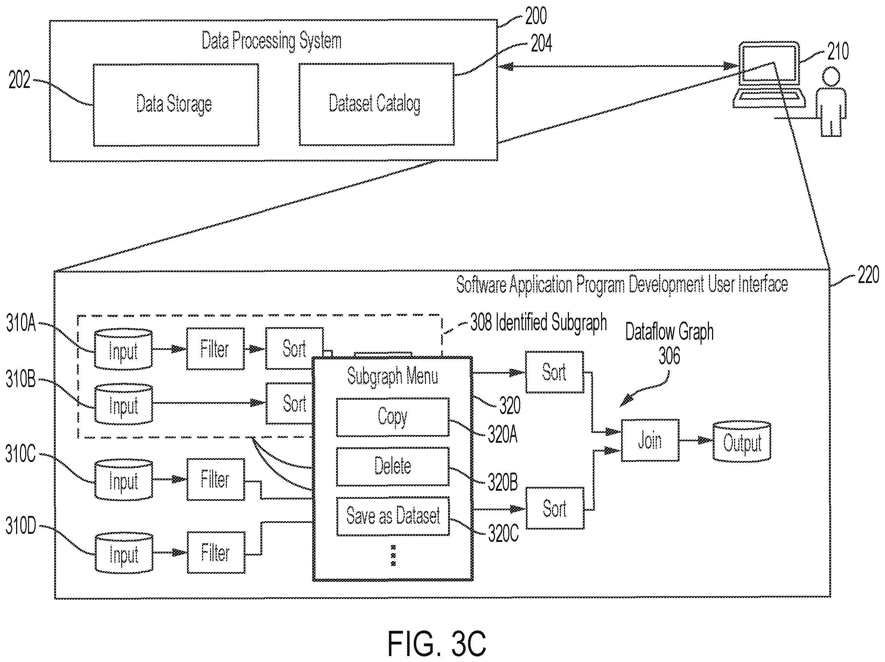

FIG. 3C shows a subgraph UI menu 320 associated with the subgraph 308 identified in FIG. 3B, according to some embodiments of the technology described herein. The subgraph menu 320 may include one or more options associated with functions related to the subgraph 308. In the example of FIG. 3C, the subgraph UI menu 320 includes an option 320A to copy the subgraph, an option 320B to delete the subgraph, and an option 320C to save the subgraph as a catalogued dataflow graph. The user may select the option 320C in order to store the identified subgraph 308 as a catalogued dataflow graph (e.g., in data storage 202). For example, the user may select the option 320C by clicking, tapping, or providing another form of input to indicate selection of the option 320C. In some embodiments, a user may input a command to save the subgraph 308 as a catalogued dataflow graph without using the subgraph menu 320. For example, the user may enter a shortcut key, or select an icon in the software application program development UI that triggers storage of the identified subgraph 308 as a catalogued dataflow graph.

In some embodiments, the data processing system 200 may be configured to save the subgraph 308 in response to user selection of the option 320C. For example, the data processing system 200 may be configured to save the subgraph 308 in a file in stored in the data storage 202 of the data processing system 202. The data processing system 200 may further determine a reference (e.g., a URL, file path, or other type of reference) to the saved file. The data processing system 200 may include the reference in an entry registered for the subgraph dataset in the data catalog 204.

In some embodiments, the data processing system 200 may organize the data catalog 204 into multiple applications and/or projects. The data processing system 200 may be configured to determine an application or project where the catalogued dataflow graph will be located. For example, the data processing system 200 may: (1) provide a listing of applications and/or projects in a GUI from which the user can specify the application and/or project; and (2) determine an application and/or project based on a user selection from the list. In some embodiments, the data processing system 200 may be configured to determine a schema in which data outputted by the catalogued dataflow graph is to be stored. The schema may be an organizational container (e.g., a directory) storing data sources. In some embodiments, the data processing system 200 may be configured to: (1) provide a list of schemas in a GUI from which the user can select a schema for the catalogued dataflow graph; and (2) determine the schema based on user input indicating a selection of one of the schemas.

In some embodiments, the data processing system 200 may be configured to determine a name for the catalogued dataflow graph. For example, the data processing system 200 may generate a GUI including a field for input of a name of the subgraph dataset. The data processing system 200 may name the catalogued dataflow graph as indicated in the field. The data processing system 200 may be configured to display the determined name in a data catalogue entry listing interface.

In some embodiments, the dataset catalog 204 may organize data into multiple collections (e.g., carts). The data processing system 200 may be configured to determine a collection in which the catalogued dataflow graph belongs. The data processing system 200 may be configured to provide a GUI through which a user can specify the collection. For example, the data processing system 200 may: (1) provide a listing of collections in the GUI; and (2) determine the collection for the catalogued dataflow graph based on user selection of a collection from the list of collections.

In some embodiments, the data processing system 200 may be configured to determine a record format for data outputted from execution of the catalogued dataflow graph. The record format may describe data that is output by the catalogued dataflow graph. For example, the record format may indicate fields of the data, a format of data in a field, a primary key, a foreign key, and/or other information. In some embodiments, the data processing system 200 may be configured to determine an inherited record format from an upstream dataset (e.g., an input dataset). If the data processing system 200 does not identify an inherited record format, the data processing system 200 may allow the user to specify a record format. For example, the data processing system 200 may determine the record format using a user-specified file indicating the record format. In some embodiments, the data processing system 200 may be configured to: (1) provide a GUI through which a user can define a record format; and (2) determine the record format based on a user definition of the record format obtained through the GUI.

In some embodiments, the data processing system 200 may be configured to determine one or more keys (e.g., a primary key and/or a foreign key) of the data. In some embodiments, the data processing system 200 may be configured to determine a key inherited from upstream data. For example, the data processing system 200 may use a key from one or more input datasets used by the subgraph 208. In some embodiments, the data processing system 200 may be configured to obtain a user specified key when the data processing system 200 does not identify an inherited key. For example, the data processing system 200 may provide an interface through which a user may specify a key.

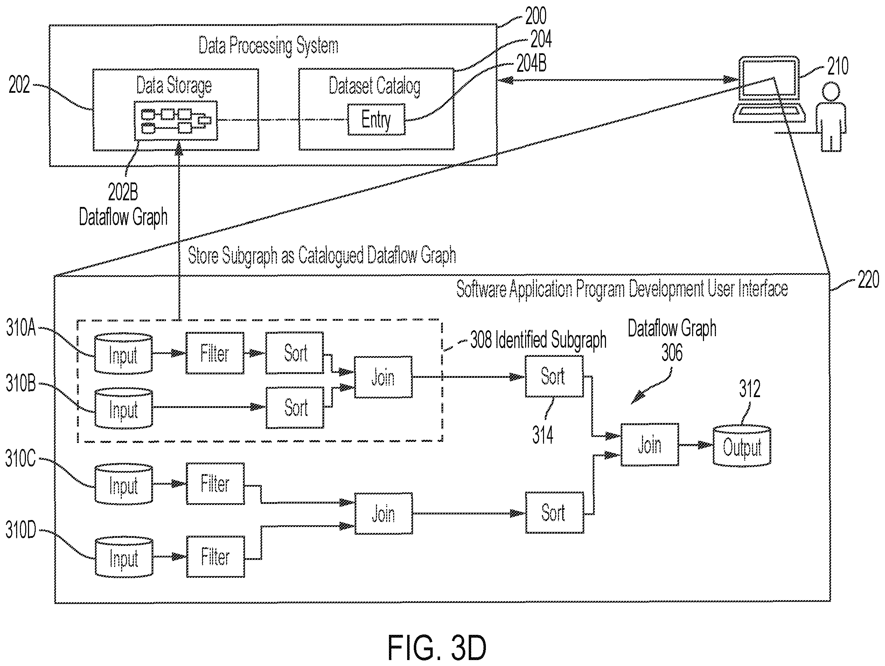

FIG. 3D illustrates cataloguing of the subgraph 308 of FIG. 3B in the dataset catalog 204 of the data processing system 200 in response to user input received through the subgraph UI menu 320 of FIG. 3C, according to some embodiments of the technology described herein. As indicated by the arrow from the identified subgraph 308 to the dataset catalog 220, the data processing system 200 may be configured to store the subgraph 308 as a catalogued dataflow graph 202B in the data storage 202. The data processing system 200 may be configured to generate an entry 204B in the dataset catalog 204 associated with the dataflow graph 202B. The entry 204B may be subsequently used to incorporate the dataflow graph 202B into other software application programs (e.g., by associating the entry 204B with an input node of a dataflow graph).

FIG. 3E shows the dataset catalog 204 and the data storage 202 of the data processing system 200 updated after cataloguing the subgraph 308, according to some embodiments of the technology described herein. As shown in FIG. 3E, the data storage 202 now includes a catalogued dataflow graph 202B comprising of the subgraph 308 identified in the dataflow graph 306. The dataset catalog 204 includes an additional entry 204B associated with the catalogued dataflow graph 202B. The entry 204B may be used to incorporate the catalogued dataflow graph 202B into a software application program.

FIG. 3F shows the software application program development UI 220 with another dataflow graph 326 on a display of the device 210 interacting with the data processing system 200, according to some embodiments of the technology described herein. As shown in FIG. 3F, the software application program development UI 220 includes a dataset catalog UI 324 displaying graphical elements representing entries 204A, 204B, 204C, 204D, 204E of the updated dataset catalog 204 of FIG. 3E. A user of the device 300 may use the dataset catalog UI 324 to incorporate a dataset of the data processing system 200 into a dataflow graph 326 shown in the software application program development UI 220.

In some embodiments, the software application program development UI 220 may allow a user to associate a catalogued dataset with an input node of the dataflow graph 326. In the example of FIG. 3F, the user has selected entry 204B to associate with the input node 328. For example, the software application program development UI 220 may allow the user to drag the graphical element representing entry 204B to an input node 328 to associate the catalogued dataflow graph 202B with the input node 328. In another example, the UI 302 may allow the user to select the input node 328, and then select the graphical element representing entry 204B to associate the catalogued dataflow graph 202B with the input node 328.

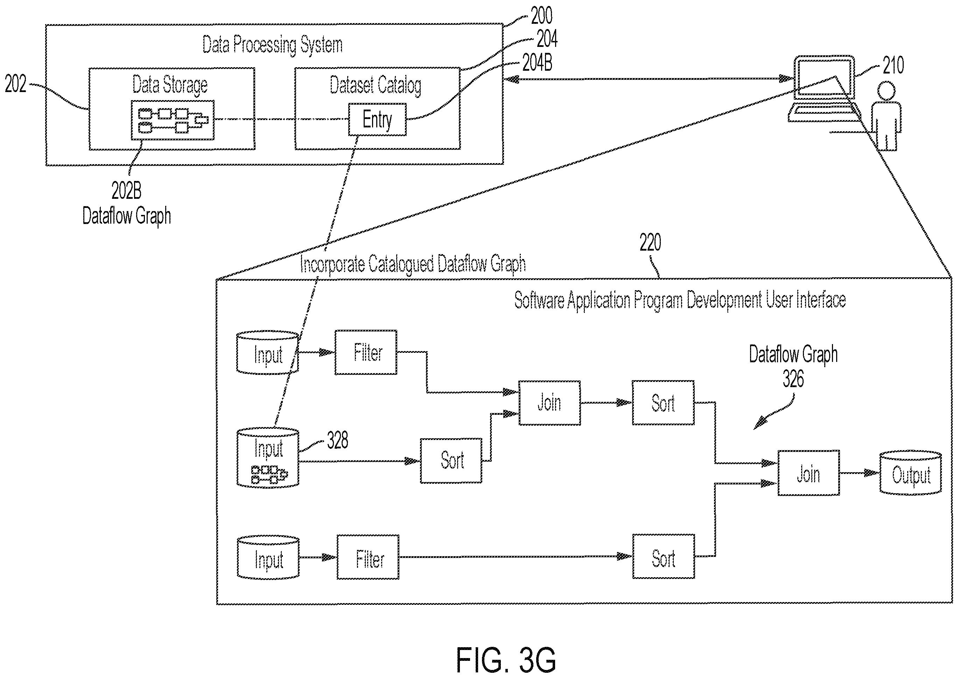

FIG. 3G is the dataflow graph 326 of FIG. 3F with the catalogued dataflow graph 202B associated with the input node 328, according to some embodiments of the technology described herein. The catalogued dataflow graph 202B is incorporated into the dataflow graph 326 by association of the entry 204B with the input node 328. As described herein with reference to FIGs. 3A-3E, the catalogued dataflow graph 202B is the subgraph 308 identified from dataflow graph 306. The data at input node 328 may thus be the output data generated when the catalogued dataflow graph 202B is executed. In some embodiments, the data processing system may be configured to compile and execute the catalogued dataflow graph 202B or a transformation thereof when the dataflow graph 326 is executed. For example, the data processing system 200 may compile and execute the catalogued dataflow graph or a transformation thereof when the software application program is compiled and executed. In some embodiments, the data processing system may independently compile and execute the catalogued dataflow graph 202B. For example, the data processing system 200 may compile and execute the catalogued dataflow graph 202B locally in response to a user command. Accordingly, the data received at input node 328 may be the data output by the catalogued dataflow graph 202B.

In some embodiments, the catalogued dataflow graph may be compiled and executed in its current state at the time that the dataflow graph 326 is updated. In some cases, the catalogued dataflow graph 202B may be different than when it was originally saved as a dataset. For example, input data used in the dataflow graph 202B may be different than at a time when the subgraph 308 was originally saved as the dataflow graph 202B. As another example, one or more operations of the dataflow graph 202B may have been modified since creation of the dataflow graph 202B. Accordingly, the catalogued dataflow graph 202B may be the most current version at a time when the dataflow graph 326 is compiled and executed.

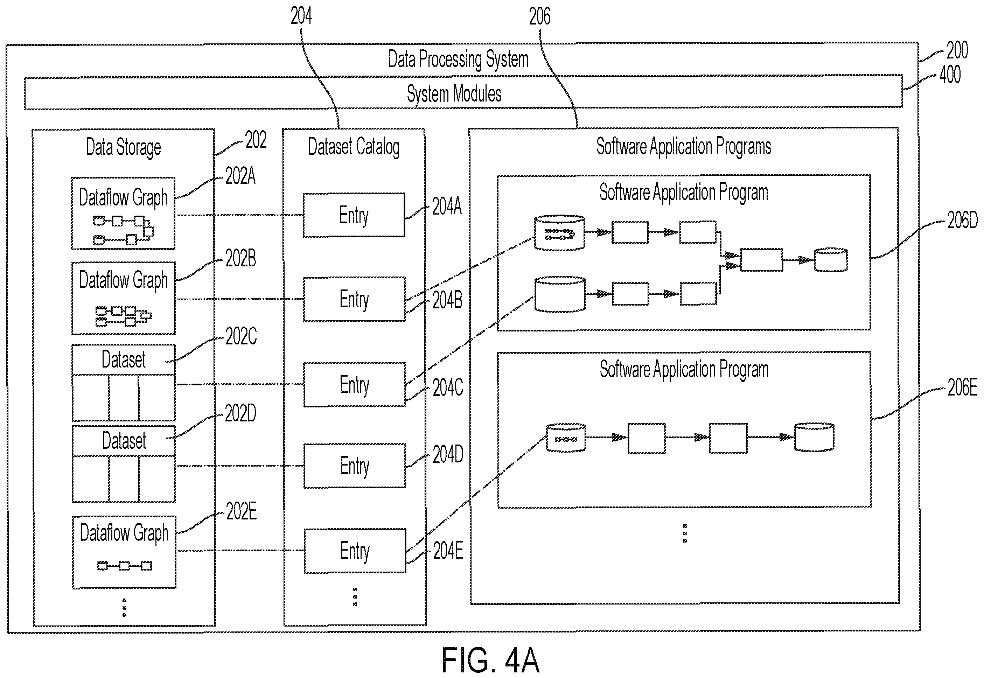

FIG. 4A shows a block diagram illustrating a data processing system 200, according to some embodiments of the technology described herein. As shown in FIG. 2A, the data processing system 200 includes a dataset catalog 204, data storage 202, software application programs 206, and system modules 400. As illustrated in FIG. 4A, the software application programs 206 may access entries from the dataset catalog 204 in order to incorporate catalogued dataflow graphs and/or datasets into the software application programs 206.

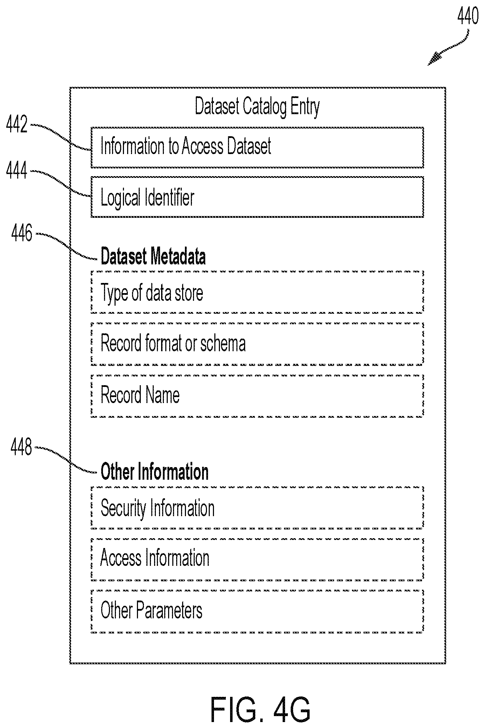

The dataset catalog 204 comprises entries for accessing respective datasets (e.g., dataflow graph datasets and stored datasets) managed by the data processing system 200. In the example of FIG. 2A, the entries 202A, 202B, 202C, 202D, 202E may be used to access datasets 202A, 202B, 202C, 202D, 202E from data storage 202 of the data processing system 200 (e.g., by associating a dataset with an input node). In some embodiments, the dataset catalog 204 may include entries for accessing one or more datasets in data storage outside of the data processing system 200. The entries may include entries associated with physical datasets. For example, entries 204C, 204D of dataset catalog 204 are associated with respective physical datasets 202C, 202D. The entries may include entries associated with catalogued dataflow graphs. The catalogued dataflow graphs may each include a dataflow graph that, when executed, generates output data. For example, entries 204A, 204B, 204C are associated with respective catalogued dataflow graphs 202A, 202B, 202E. Examples of entries of the dataset catalog 204 are described herein with reference to FIG. 4G.

In some embodiments, the dataset catalog 204 may be any suitable data structure for storing a collection of entries. For example, the dataset catalog 204 may be an array, in which each element of the array is an entry of the dataset catalog 204. In another example, the dataset catalog 204 may be a hash table where each entry includes a hashed set of information for accessing a dataset, and is associated with a key that can be used to look up the entry.

In some embodiments, the dataset catalog 204 may be searchable. The data processing system 200 may allow users of the data processing system 200 to search among entries of the dataset catalog 204. For example, the data processing system 200 may provide a UI via which a user can enter in a search query (e.g., keywords) that the data processing system 200 uses to identify one or more entries of the dataset catalog 204. In some embodiments, the data processing system 200 may be configured to search contents of entries of the data catalog 202 and/or contents of the datasets in data storage 202 to determine matches with a search query. For example, the data processing system 200 may perform a keyword search on contents of the entries and/or the datasets.

In some embodiments, the dataset catalog 204 may provide software application programs 206 of the data processing system 200 with access to datasets as input data for use by the software application programs. In the example of FIG. 4A, a physical dataset from the data storage 202, or output data generated when a catalogued dataflow graph is executed can be incorporated as input in a software application program using entries of the dataset catalog 204. For example, to include data from physical dataset 202C as input to a software application program (e.g., software application program 206A), the software application program may access entry 204C of the dataset catalog 204. The entry 204C may provide the software application program 206A with the information to obtain the dataset 202C. The entry 204C may include a reference to the dataset 202C in the data storage 202 that can be used by the software application program 206A to access the dataset 202C. In another example, the entry 204D may include a reference to dataset 202D stored in the data storage 202 that can be used by the software application program 206A to access a dataflow graph. In some embodiments, an entry of the dataset catalog 204 may be used to associate a catalogued dataflow graph with an input node of a software application program. When the software application program is executed, it may use information from an entry to obtain data (e.g., by reading from a physical dataset or executing a dataflow graph or transformation thereof to generate output data).

Data storage 202 may be any suitable storage of the data processing system 200. In some embodiments, the data storage 202 may comprise of storage hardware for storing datasets, dataflow graph information, and/or other information. For example, the storage hardware may include one or more hard drives (e.g., disk drives, solid state drives, and/or other hard drives). In some embodiments, the data storage 202 may include a distributed database. The distributed database may include data storage resources in multiple geographic areas. The distributed database may comprise of one or more datacenters that store datasets and dataflow graph information. Although in the example of FIG. 4A the dataset catalog 204 is shown separate from the data storage 202, in some embodiments, the dataset catalog 204 may also be stored within the data storage 202.

As shown in FIG. 4A, the data storage 202 may store physical datasets such as datasets 202C, 202D and catalogued dataflow graphs such as dataflow graphs 202A, 202B, 202E. A physical dataset may be a previously generated set of data. For example, a physical dataset may be a SQL table, an ORACLE database dataset, a TERADATA database dataset, a flat file, a multi-file data store, a HADOOP database dataset, a DB2 data store, a Microsoft SQL SERVER dataset, an INFORMIX dataset, a table, or other type of dataset. In another example, a physical dataset may be a document storing values in one or more fields (e.g., structured based on a schema, or otherwise unstructured). In another example, a physical dataset may be an XML file, a JSON file, or other type of storage file. In another example, a physical dataset may be an array, linked list, queue, or any other suitable data structure storing data.

As shown in FIG. 4A, the data processing system 200 includes software application programs 206. The software application program 206D is developed as a dataflow graph. The dataflow graph of the software application program 206D includes input nodes (also referred to as "read components") that are configured to receive datasets via the dataset catalog 204. The dataflow graph is configured to receive, as input: (1) dataset 202C using entry 204C; and (2) output data generated when catalogued dataflow graph 202B is executed using entry 204B. The dataflow graph includes nodes at which operations are performed on the input data to generate an output dataset. The software application program 206E is another software application program developed as a dataflow graph. The dataflow graph is configured to receive, as input, output data generated when dataflow graph 202E is executed using entry 204E. Although the example of FIG. 4A shows software application programs 206D, 206E, the data processing system 200 may include any number of software application programs. For example, the data processing system 200 may include hundreds or thousands of such software application programs.

In some embodiments, a software application program developed as a dataflow graph may be created manually by a user. For example, the data processing system 200 may provide a UI (e.g., UI 220) that a user may use to develop a dataflow graph. In some embodiments, a software application program developed as a dataflow graph may be programmatically generated. For example, the data processing system 200 may include a software application program that generates a dataflow graph.

In some embodiments, a software application program may access a physical dataset using an entry of the dataset catalog 204 by accessing the physical dataset using information in the entry. For example, the software application program may access a physical dataset using a reference (e.g., a URL, key, or other type of reference) to a physical location stored in the entry. In some embodiments, an entry associated with a physical dataset may include a reference to a software application program for accessing the physical dataset. For example, the software application program may convert the physical dataset into a logical dataset that the software application program uses as input. In some embodiments, the software application program for accessing the physical dataset may be developed as a dataflow graph. For example, a software application program developed as a dataflow graph may perform various data processing operations to change a format of data from a physical dataset into a logical dataset for use by other software application programs. Examples of applications for accessing a physical dataset using an entry of a dataset catalog are described in U.S. Patent Application Publication No. 2022/0245125, titled "Dataset Multiplexer for Data Processing System".

In some embodiments, a software application program may incorporate a catalogued dataflow graph using information in an entry. The entry may be used to configure the software application program to: (1) execute the catalogued dataflow graph; and (2) receive, as input, output data generated when the catalogued dataflow graph is executed. For example, output data generated from execution of the catalogued dataflow graph may be used in one or more operations performed by the software application program.

In some embodiments, the data processing system 200 may be configured to use an entry to configure a dataflow graph of a software application to receive output data generated by a catalogued dataflow graph. The data processing system 200 may be configured to configure the dataflow graph by associating the catalogued dataflow graph with an input node of the dataflow graph. For example, the data processing system 200 may associate the catalogued dataflow graph with the input node using a reference to information indicating the catalogued dataflow graph in the data storage 202. In another example, the entry may store the catalogued dataflow graph, and the data processing system 200 may associate the catalogued dataflow graph from the entry with the input node. In some embodiments, the data processing system 200 may be configured to associate a catalogued dataflow graph with an input node by including a reference to the catalogued dataflow graph at the input node. When a catalogued dataflow graph is associated with an input node of an incorporating dataflow graph, the catalogued dataflow graph may be executed as part of the incorporating dataflow graph. Execution of the catalogued dataflow graph may generate output data that the incorporating dataflow graph can use for subsequent operations.

Although not shown in FIG. 4A, the data processing system 200 may also include a software application programs which are not developed as dataflow graphs. In some embodiments, the entries of the dataset catalog 204 may be used by software application programs developed as dataflow graphs (e.g., software application programs 206D, 206E) and software application programs which are not developed as dataflow graphs. For example, a software application program may perform operations using metadata about datasets stored in the data storage 202. In this example, the software application program may access information about the datasets from the entries of the dataset catalog 204. In another example, a software application program may be developed as software code and access a dataset using an associated entry of the dataset catalog 204.

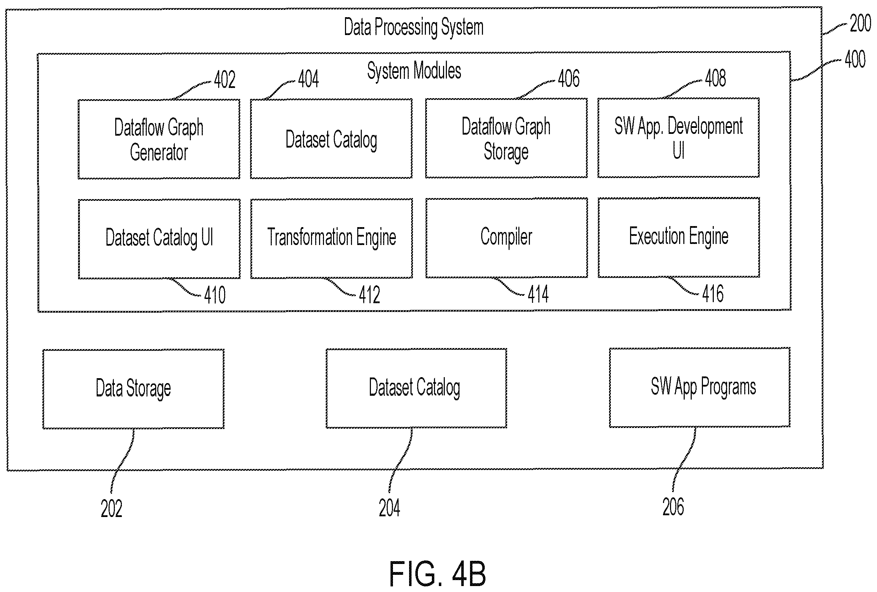

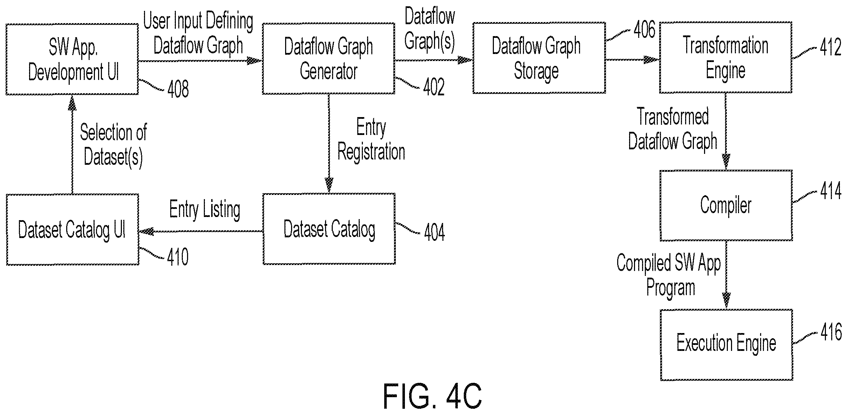

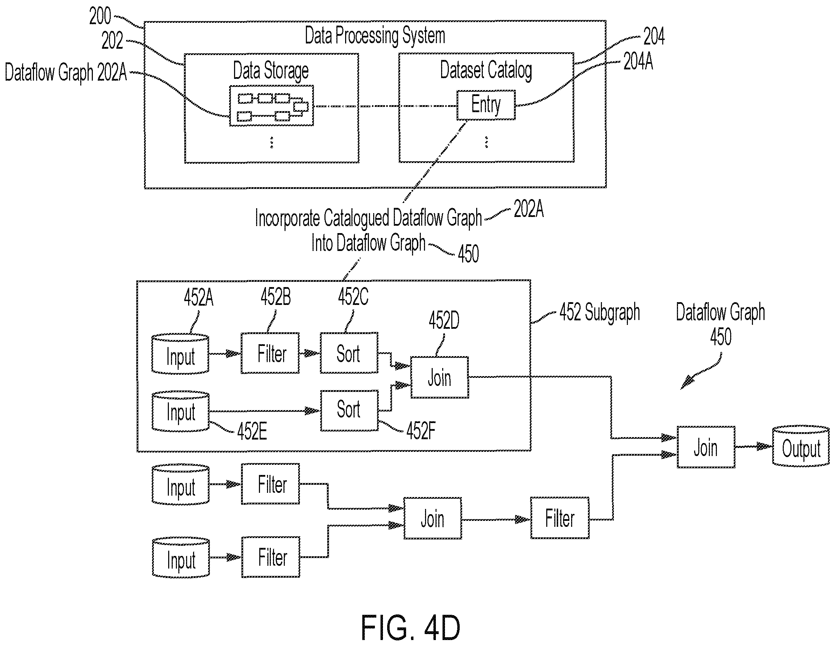

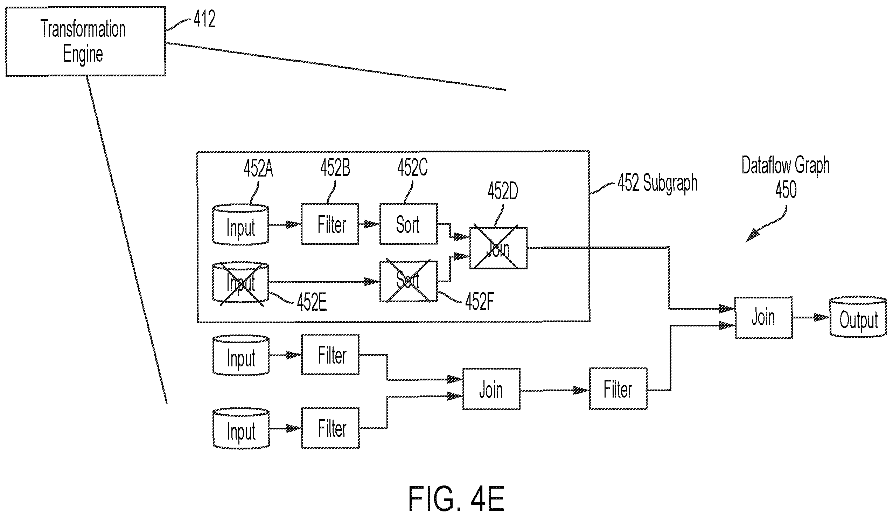

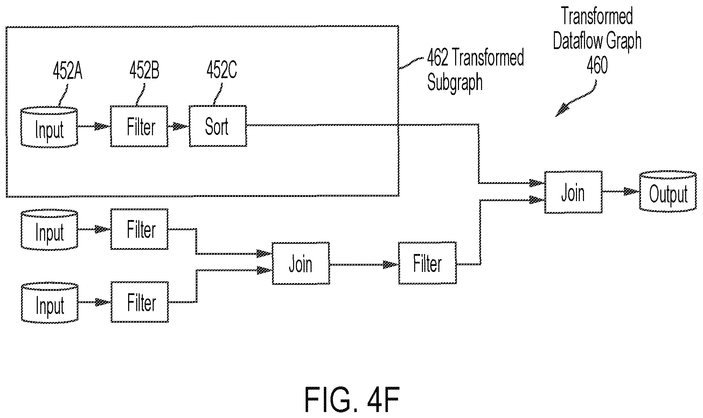

FIG. 4B shows a block diagram of the system modules 400 of the data processing system 200, according to some embodiments of the technology described herein. As shown in FIG. 4, the system modules 400 include a dataflow graph generator 402, a dataset catalog module 404, a dataflow graph storage module 406, a software application development UI module 408, a dataset catalog UI module 410, a transformation engine 412, a compiler 414, and a dataflow graph execution engine 416.

The dataflow graph generator 402 may be configured to generate dataflow graphs for software application programs. In some embodiments, the dataflow graph generator 402 may be configured to generate a dataflow graph by obtaining, through a graphical UI, user input indicating the dataflow graph. The user may lay out nodes and links representing input data sources, data processing operations, outputs, and/or flows of data in the graphical UI. In some embodiments, the dataflow graph generator 402 may be configured to automatically generate a dataflow graph. For example, the dataflow graph generator 402 may be configured to generate a dataflow graph based on a query. The dataflow graph generator 402 may automatically lay out nodes and links to execute the query.

In some embodiments, the dataflow graph generator 402 may be configured to generate dataflow graphs. In some embodiments, the dataflow graph generator 402 may be configured to generate a dataflow graph for an application by: (1) obtaining a user definition of a dataflow graph (e.g., in a software application program development UI); and (2) generate the dataflow graph for the application based on the user definition. In some embodiments, the dataflow graph generator 402 may be configured to save a user defined dataflow graph as a software application program in the data processing system 200. The software application program may be accessed and executed by the data processing system 200 (e.g., to analyze data or to perform processing as part of a task). In some embodiments, the dataflow graph generator 402 may be configured to compile a dataflow graph into a software application program.

In some embodiments, the dataflow graph generator 402 may be configured to identify a subgraph withing a dataflow graph. The dataflow graph generator 402 may be configured to identify the subgraph by identifying a portion of the dataflow graph as the subgraph. In some embodiments, the dataflow graph generator 402 may be configured to identify a portion of a dataflow graph based on user input specifying a portion of the dataflow graph (e.g., as described herein with reference to FIG. 3B). For example, the dataflow graph generator 402 may be configured to store the identified subgraph as a catalogued dataflow graph as described herein with reference to FIG. 3D.

In some embodiments, the dataset catalog module 404 may be configured to manage the dataset catalog 204 of the data processing system 200. The dataset catalog module 404 may be configured to manage generation, deletion, and/or modification of entries of the dataset catalog 204. For example, the dataset catalog module 404 may generate a new entry for a new dataset added to the data processing system. The dataset catalog module 404 may generate a new entry by: (1) instantiating a data object for the entry; (2) adding information to the data object (e.g., information described herein with reference to FIGs. 2B-2C); and (3) storing the data object as the new entry. The data catalog module 404 may further be configured to modify existing entries. For example, the data catalog module 404 may update information to access a dataflow graph in an entry associated with the dataflow graph and/or update information about the dataflow graph stored in the entry.

In some embodiments, the dataset catalog module 404 may be configured to provide access to datasets (e.g., physical datasets and/or dataflow graph datasets). The dataset catalog module 404 may provide a software application program with access to a dataset through an entry associated with the dataset. For example, the dataset catalog module 404 may generate a dataset catalog UI menu allowing users to select entries for incorporating associated datasets into a dataflow graph (e.g., as described herein with reference to FIG. 3F). In some embodiments, the dataset catalog module 404 may be configured to provide access to datasets by allowing software application programs to reference entries of the dataset catalog 204. For example, executable instructions of a software application program may reference entries of the dataset catalog 204 in order to incorporate datasets. In another example, the dataset catalog module 404 may comprise one or more software application programs that provide information from entries of a dataset catalog to other software application programs.

In some embodiments, the dataflow graph storage module 406 may be configured to manage storage of dataflow graphs. The dataflow graph storage module 406 may be configured to information indicating dataflow graphs. For example, the dataflow graph storage module 406 may store information indicating nodes and links of a dataflow graph. The dataflow graph storage module 406 may further be configured to store configuration parameters for a dataflow graph. For example, the dataflow graph storage module 406 may store a name of a dataflow graph, a location (e.g., a file path), and/or other configuration parameters of the dataflow graph. In some embodiments, the dataflow graph generator 402 may be configured to generate a file storing a dataflow graph. The file may store information indicating nodes and links of a dataflow graph. The file may indicate operations at nodes in the dataflow graph. For example, the file may indicate one or more data processing operations (e.g., filter, join, sort, and/or other operation(s)) that are to be performed at nodes in the dataflow graph. The file may further store information indicating input datasets associated with one or more nodes, one or more data links, and/or data processing operations of one or more nodes. In some embodiments, an input node may obtain data from a physical dataset or data output by an executed subgraph (e.g., a catalogued dataflow graph incorporated as a subgraph). In some embodiments, an entry in a dataset catalog 204 may refer to a file storing information about a dataflow graph. The entry may be used to incorporate the dataflow graph into other dataflow graphs (e.g., of other software application programs).

In some embodiments, the dataflow graph storage module 406 may be configured to store a dataflow graph as a catalogued dataflow graph. The dataflow graph storage module 406 may be configured to generate an entry for a dataset catalog associated with the catalogued dataflow graph (e.g., as described herein with reference to FIG. 2A). The dataflow graph storage module 406 may be configured to catalogue a dataflow graph by storing a data record (e.g., a document, file, or other type of record) with information about the dataflow graph (e.g., information indicating nodes, links, and configuration parameters of the dataflow graph). The dataflow graph storage module 406 may be configured to store both dataflow graphs and subgraphs thereof as catalogued dataflow graphs. For example, the dataflow graph storage module 406 may store an entire dataflow graph as a catalogued dataflow graph with an associated entry in a dataset catalog. In another example, the dataflow graph storage module 406 may store a subgraph within the dataflow graph as a catalogued dataflow graph with an associated entry in a dataset catalog.

In some embodiments, the software application development UI 408 may be configured to generate a GUI that allows a user to develop a software application program as a dataflow graph. The GUI allows a user to lay out nodes and links of a dataflow graph for the software application program. The GUI may allow the user to save the dataflow graph for execution. In some embodiments, the software application development UI module 408 may be configured to allow a user to identify a subgraph within a dataflow graph. For example, the GUI may allow a user to highlight a portion of a dataflow graph and input a command to generate a subgraph from the highlighted portion. The GUI may further provide a menu through which a user can input a command to store the subgraph as a catalogued dataflow graph (e.g., as described herein with reference to FIG. 3C). The data processing system 200 may store the subgraph as a catalogued dataflow graph in response to receiving the user input (e.g., as described herein with reference to FIGs. 3D-3E).

In some embodiments, the dataset catalog UI module 410 may be configured to generate a UI displaying graphical elements representing entries of the data set catalog. In some embodiments, the dataset catalog UI module 410 may be configured to generate the UI as part of a GUI for development of a software application program as a dataflow graph. For example, the dataset catalog UI module 410 may generate a pane within the GUI showing a listing of entries. The dataset catalog UI module 410 may be configured to allow a user to access datasets through the UI. For example, the UI may allow a user to drag a graphical element representing an entry to an input data source of a dataflow graph. As another example, the UI may allow a user to right click on a graphical element representing an entry, and select an option to incorporate the dataset associated with the entry in a dataflow graph. An example of a dataset catalog UI and how it may be used to incorporate a dataset into a dataflow graph is described herein with reference to FIGs. 3F-3G.

In some embodiments, the transformation engine 412 may be configured to transform a dataflow graph into a transformed dataflow graph that can be compiled and executed. The transformed dataflow graph may be more computationally efficient to execute. For example, the original dataflow graph may: (1) include nodes that represent redundant data processing operations; (2) require performing data processing operations whose results are subsequently unused; (3) require unnecessarily performing serial processing in cases where parallel processing is possible; (4) apply a data processing operation to more data than needed in order to obtain a desired result; (5) break out computations over multiple nodes, which significantly increases the computational cost of performing the computations in situations where the data processing for each dataflow graph node is performed by a dedicated thread in a computer program, a dedicated computer program (e.g., a process in an operating system), or a dedicated computing device; (6) require performing a stronger type of data processing operation that requires more computation (e.g., a sort operation, a rollup operation, etc.) when a weaker type of data processing operation that requires less computation (e.g., a sort-within-groups operation, a rollup-within-groups operation, etc.) will suffice; (7) require the duplication of processing efforts; or (8) not include operations or other transformations that are useful or required for processing data, or combinations of them, among others.

Accordingly, the transformation engine 412 may be configured to apply one or more of the following transformations to a dataflow graph that are required for processing data in accordance with the operations specified in the dataflow graph and/or improve processing data in accordance with the operations specified in the dataflow graph relative to processing data without the transformations. For instance, a user may create the dataflow graph without the need to specify low-level implementation details, such as sort and partition operations. However, these operations may be useful or required in the transformed dataflow graph in order to process data in accordance with the operations specified in the dataflow graph, may improve the processing of data in accordance with the operations specified in the dataflow graph (e.g., by increasing the speed of processing and/or reducing the consumption of computing resources, etc.), or both. Therefore, the transformation engine 412 may add one or more operations to the transformed dataflow graph, such as sort operations, data type operations, join operations with a specified key, partition operations, automatic parallelism operations, or operations to specify metadata, among others, to optimize or implement the operations specified in the dataflow graph. In some cases, at least one of the operations added to the transformed dataflow graph may be absent or otherwise unrepresented in the original dataflow graph. The transformation engine 412 may remove certain operations (e.g., redundant operations).

In some embodiments, the transformation engine 412 may be configured to add operations by inserting one or more nodes representing the added operations into a dataflow graph used to produce the transformed dataflow graph. In some embodiments, the transformation engine 412 may be configured to insert the added operation in the transformed dataflow graph directly without modifying nodes of the dataflow graph. The transformation engine 412 may add these operations to all dataflow graphs when producing their corresponding transformed dataflow graphs, may add these operations based on the operations included in the dataflow graph (which may be identified using pattern matching techniques, as described below), or may add these operations based on some other optimization rule.

In some embodiments, the transformation engine 412 may be configured to transform a dataflow graph by applying one or more dataflow graph optimization rules to the dataflow graph to improve the computational efficiency of the transformed dataflow graph, such as by removing dead or redundant components (e.g., by removing one or more nodes corresponding to the dead or redundant components), moving filtering steps earlier in the data flow (e.g., by moving one or more nodes corresponding to the filtering components), or narrowing a record, among others. In this way, the transformation engine 412 transforms the dataflow graph into an optimized transformed dataflow graph prior to compilation.

In some embodiments, the transformation engine 412 may be configured to identify two adjacent nodes in a dataflow graph representing respective operations, with the second operation duplicating or nullifying the effect of the first operation such that one of the operations is redundant. Accordingly, the transformation engine 412 may be configured to transform the dataflow graph by removing the node(s) representing redundant operations (e.g., the nodes representing the duplicated or nullified operations) when producing the transformed dataflow graph. For example, the transformation engine 412 may identify two adjacent nodes having the same operation. Because two adjacent nodes performing the same operation is typically redundant, it is not necessary to perform both of the operations and one of the two adjacent nodes can be removed. As another example, the transformation engine 412 may identify two adjacent nodes having a first node representing a repartition operation (which partitions data for parallel processing on different computing devices) followed by node representing the serialize operation (which operates to combine all the data for serial processing by a single computing device). Since the effect of repartitioning will be nullified by the subsequent serialize operation, it is not necessary to perform the repartitioning operation (e.g., the repartitioning operation is redundant), and the repartitioning operation can be removed by the transformation engine 412 during the transformation process.

In some embodiments, the transformation engine 412 may be configured to identify a first node representing a first operation that commutes with one or more other nodes representing other operations. If the first node commutes with the one or more other nodes, then the transformation engine 412 may transform the dataflow graph by changing the order of the first node with at least one of the one or more other nodes (e.g., by rearranging the order of the nodes). In this way, the transformation engine 412 may transform the dataflow graph by ordering the nodes and corresponding operations in a way that improves processing efficiency, speed, or otherwise optimizes processing by the dataflow graph without changing the result. Further, by commuting nodes in this way, the transformation engine 412 may be configured to apply other transformations. For example, the transformation engine 412 may change the order of the first node with at least one of the one or more other nodes such that the first node representing the first sort operation is placed adjacent to a second node representing a second sort operation. As a result, the first and second sort operations become redundant, and the transformation engine 412 may transform the dataflow graph by removing one of the first sort operation or the second sort operation (e.g., by removing the corresponding node from the dataflow graph when producing the transformed dataflow graph).

In some embodiments, the transformation engine 412 may be configured to identify and remove "dead" nodes representing unused or otherwise unnecessary operations. For example, the transformation engine 412 may identify one or more nodes representing operations whose results are unreferenced or unused (e.g., a sort operation that is unreferenced because the order resulting from the sorting operation is not needed or relied upon in subsequent processing). Accordingly, the transformation engine 412 may be configured to transform the dataflow graph by removing the dead or unused operation (e.g., by removing the corresponding node when producing the transformed dataflow graph).

In some embodiments, the transformation engine 412 may be configured to perform a strength reduction transformation on one or more nodes. For example, the transformation engine 412 may identify a first node representing a first operation of a first type (e.g., a first sort operation on a major key, a first rollup operation on a major key, etc.) followed by a second node representing a second operation of a second, weaker type (e.g., a second operation on a minor key, a sort-within-groups operation, a second rollup operation on a minor key, a grouped rollup operation, etc.). Because processing data by the first operation may require more computing resources than processing data by the second, weaker operation, the transformation engine 412 may perform a strength reduction transformation that replaces the first operation with the second operation.

In some embodiments, the transformation engine 412 may be configured to transform the dataflow graph by combining two or more nodes. For example, the transformation engine 412 may identify separate nodes representing operations that may be executed by different processes running on one or multiple computing devices, and may transform the dataflow graph by combining the separate nodes and their respective operations into a single node so that all of the operations are performed by a single process executing on a single computing device, which can reduce the overhead of inter-process (and potentially inter-device) communication. The transformation engine 412 may further be configured to identify other nodes that can be combined, such as two or more separate join operations that can be combined or a filtering operation that can be combined with a rollup operation, among many other combinations.

In some embodiments, the transformation engine 412 may be configured to identify a node configured to perform several operations that may be more efficient when executed separately. The transformation engine 412 may be configured to perform a serial to parallel transformation of the dataflow graph which breaks one or more of the several operations into separate nodes for parallel processing (e.g., an automatic parallelism operation). The operations may then execute in parallel using different processes running on one or multiple computing devices. The transformation engine 412 may then add a merge operation to merge the result of the parallel operations. In some embodiments, the transformation engine 412 may be configured to identify points in the dataflow graph containing large chunks of data (e.g., data corresponding to large tables and indices), and perform a partitioning transformation of the dataflow graph to break the data into smaller partitions (e.g., an automatic partitioning operation). The partitions may then be processed in series or parallel (e.g., by combining the automatic partitioning operation with the automatic parallelism operation). By reducing the size of the data to be processed or by separating operations for parallel processing, or both, the transformation engine 412 can significantly improve the efficiency of the transformed dataflow graph.

In some embodiments, the transformation engine 412 may be configured to perform a width-reduction transformation when producing a transformed dataflow graph. For example, the transformation engine 412 may identify data (e.g., one or more columns of data) to be deleted at a certain point in the dataflow graph prior to the performance of subsequent operations because that data (e.g., the data to be deleted) is not used in subsequent operations and need not be propagated as part of the processing. As another example, a node in a dataflow graph may be configured to perform several operations, and the results of some of these operations may be unused. Accordingly, the transformation engine 412 may perform a width reduction transformation that removes the unused or otherwise unnecessary data (e.g., by inserting a node to delete the data at the identified point, by replacing a node configured to perform several operations with another node configured to perform only those operations whose results are used, etc.). In this way, the transformation engine 412 optimizes the dataflow graph by reducing the computational resources needed by the dataflow graph to carry data through subsequent operations (e.g., by reducing network, memory, and processing resources utilized).

In some embodiments, transforming a dataflow graph may comprise transforming a catalogued dataflow graph that is incorporated into the dataflow graph as input (e.g., through association of a data catalog entry associated with the catalogued dataflow graph with an input node of the dataflow graph). Prior to the dataflow graph undergoing transformation, the catalogued dataflow graph may be integrated into the dataflow graph. For example, the catalogued dataflow graph may be accessed using an entry associated with an input node of the subgraph and copied into the dataflow graph. An output link of the catalogued dataflow graph may further be connected to a node of the dataflow graph (e.g., that an output link of the input node was connected to). The transformation engine 412 may be configured to transform the dataflow graph resulting from integration of the catalogued dataflow graph. The transformation engine 412 may be configured to transform the integrated catalogued dataflow graph as part of transformation of the dataflow graph. The transformed catalogued dataflow graph may thus be optimized for the dataflow graph into which it is incorporated. The transformed catalogued dataflow graph may have a different structure than the catalogued dataflow graph that was originally incorporated into the dataflow graph. Furthermore, a catalogued dataflow graph integrated into a first dataflow graph may have a different structure after undergoing transformation than the same catalogued dataflow graph incorporated into a second dataflow graph that undergoes transformation.

To identify portions (e.g., a catalogued dataflow graph incorporated into the dataflow graph) of the dataflow graph to which to apply one or more transformations, the transformation engine 412 be configured to employ a dataflow graph pattern matching language. The dataflow subgraph pattern matching language may include one or more expressions for identifying specific nodes or operations in the dataflow graph for optimization, as described in detail below. For example, the pattern matching language may include expressions for identifying a series of nodes of at least a threshold length (e.g., at least two, three, four, five, etc.) representing a respective series of calculations that could be combined and represented by a single node in the dataflow graph using a combining operations optimization rule. Identifying such patterns may facilitate the application of the combining operations optimization rule described above. A preferred but non-limiting example of one such expression is "A-----+B-----+C---+D", which may help to identify a series of four consecutive data processing operations which may be combined.

As another example, the pattern matching language may include expressions for identifying portions of the dataflow graph in which certain types of nodes can commute with other nodes to optimize the dataflow graph. This may facilitate the application of multiple different types of optimization rules to the dataflow graph. When the transformation engine 412 determines that the order of one or more nodes in the dataflow graph may be altered without changing the processing results, this allows the transformation engine 412 to consider changes to the structure of the dataflow graph (as allowed by the degree of freedom available through commuting operations) in order to identify portions to which optimization rules could be applied. As a result of considering commuting-based alterations, one or more optimization rules may become applicable to a portion of a graph to which the rule(s) were otherwise not applicable.

For example, as described above, an optimization rule may involve identifying two adjacent nodes in the initial dataflow graph representing respective sort operations, with the second sort operation nullifying the effect of the first operation such that the first operation is redundant. By definition, such an optimization rule would not be applied to a dataflow graph that does not have adjacent nodes representing sort operations. However, if a first node representing a first sort operation were to commute with one or more other nodes, then it may be possible to change the order of the first node with at least one of the one or more other nodes such that the first node representing the first sort operation is placed adjacent to a second node representing a second sort operation. As a result of commuting nodes in this way, the optimization rule that removes the redundant first sort operation may be applied to the dataflow graph.

Accordingly, in some embodiments, the pattern matching language may include one or more expressions for identifying subgraphs of a dataflow graph in situations where the order nodes in a dataflow graph may be changed. As one example, the expression "A---+( ... )--+B" (where each of "A" and "B" may be any suitable data processing operation such as a sort, a merge, etc.) may be used to find a portion of the dataflow graph having a node "A" (e.g., a node representing the operation "A") and node "B" (representing operation "B"), and one or more nodes between the nodes "A" and "B" with which the node "A" commutes (e.g., if the order of the nodes is changed, the result of processing performed by these nodes does not change). If such a portion were identified, then the dataflow graph may be changed or optimized by moving node "A" adjacent to node "B" to obtain the portion "AB". As a specific example, if a dataflow graph were to have the nodes "ACDB", and the operation "A" were to commute with the operations "C" and "D", then the dataflow graph may be altered to become "CDAB". In turn, the transformation engine 412 may consider whether an optimization rule applies to the portion "AB". For example, if the operation "A" were a sort and the operation "B" were a sort, the transformation engine 412 may attempt to determine whether these two sorts may be replaced with a single sort to optimize the dataflow graph.

As another example, the expression "A---+( ... )-----+B*" may be used to find a portion of the dataflow graph having a node "A", a second node "B", and one or more nodes between these nodes with which the node "B" commutes. As a specific example, if a dataflow graph were to have the nodes "ACDB", and the operation B were to commute with the operations "C" and "D", then the dataflow graph may be altered or optimized to become "ABCD". In turn, the transformation engine 412 may consider whether an optimization rule applies to the portion "AB".

As another example, the expression "A---+( ... )-----+B**" may be used to find a portion of the dataflow graph having a node "A", a node "B", and one or more nodes (e.g., "C" and "D") between the nodes "A" and "B" with which node "B" does not commute. In that case, the system may try to perform a "pushy" commute, where if possible the nodes "C" and "D" would be pushed to the left of the node "A". As a specific example, if a dataflow graph were to have the nodes "ACEDB", and the operation "B" were to commute with the operation "E" but not operations "C" and "D", then the dataflow graph may be altered to become "CDABE"-B commuted with E, but pushed "C" and "D" to the left of "A".

As yet another example, the expression "A**-----+( ... )-----+B" may be used to find a portion of the dataflow graph having a node "A", a node "B", and one or more nodes (e.g., "C" and "D") between the nodes "A" and "B" with which node "A" does not commute. In that case, the system may try to perform a "pushy" commute, where if possible the nodes "C" and "D" would be pushed to the right of the node "B". As a specific example, if a dataflow graph were to have the nodes "ACEDB", and the operation "A" were to commute with the operation "E" but not operations "C"and "D", then the dataflow graph may be altered to become "EABCD"-node "A" commuted with "E", but pushed "C" and "D" to the right of "B".

In some embodiments, the transformation engine 412 may be configured to transform a dataflow graph iteratively, with each iteration of an optimization or transformation transforming the dataflow graph until a test indicates that no further optimizations or transformations are possible, required, or desired. For example, transformation engine 412 may transform the dataflow graph by: (1) selecting a first optimization rule; (2) identifying a first portion of the dataflow graph to which to apply the first optimization rule; and (3) applying the first optimization rule to the first portion of the dataflow graph. Subsequently, the transformation engine 412 may determine whether another one or more additional optimizations can be applied to the dataflow graph or are necessary to produce the transformed dataflow graph that can be compiled and executed. If additional optimizations are applicable, the transformation engine 412 can continue updating the dataflow graph by: (1) selecting a second optimization rule different from the first optimization rule; (2) identifying a second portion of the dataflow graph to which to apply the second optimization rule; and (3) applying the second optimization rule to the second portion of the dataflow graph. At the point where there are no further optimizations or transformations, the transformation engine 412 may be configured to output the transformed dataflow graph to store the transformed dataflow graph and/or to output the transformed dataflow graph to the compiler module 414 that compiles the transformed dataflow graph into an executable software application program (e.g., that may be executable by the execution engine 416).

Techniques of optimizing a dataflow graph that may be used by the transformation engine 412 are described in U.S. Patent Application Publication No. 2021/0232579, titled "Editor for Generating Computational Graphs".

In some embodiments, a transformed dataflow graph generated by the transformation engine 412 may be stored in the data storage 202 (e.g., by the dataflow graph storage module 406). In some embodiments, the transformation engine 412 may be configured to transform a dataflow graph and store the dataflow graph for subsequent compilation (e.g., by the compiler module 414). In some embodiments, the transformation engine 412 may be configured to transform a dataflow graph as part of compiling a dataflow graph. For example, the transformation engine 412 may be used when a given dataflow graph is being compiled.

In some embodiments, the compiler module 414 may be configured to compile a dataflow graph (e.g., a transformed dataflow graph) for execution (e.g., by the dataflow graph execution engine 416). The compiler module 414 may be configured to compile the dataflow graph into an executable software application program that can be executed by the data processing system 200. In some embodiments, the compiler module 414 may be configured to store a compiled software application program in data storage of the data processing system 200. The stored software application program may then be executed by the data processing system 200 at a subsequent time. For example, the software application program may be executed in response to a user command and/or programmatically executed.

In some embodiments, the dataflow graph execution engine 416 may be configured to execute a dataflow graph (e.g., a compiled dataflow graph) of a software application program. In some embodiments, the dataflow graph execution engine 416 may be configured to execute a dataflow graph by: (1) generating a set of instructions based on the dataflow graph (e.g., nodes and links of the dataflow graph); and (2) executing the set of instructions. In some embodiments, the data flow graph execution engine 416 may be configured to use a software application program that interprets and executes a dataflow graph. For example, the dataflow graph execution engine 416 may call a program that interprets a dataflow graph and generates computer-executable instructions based on the dataflow graph. Techniques for executing computations encoded by dataflow graphs are described in U.S. Patent No.: 5,966,072, titled "Executing Computations Expressed as Graphs," and in U.S. Patent 7,716,630, titled "Managing Parameters for Graph-Based Computations,".

In some embodiments, the dataflow graph execution engine 416 may be configured to generate output data obtained as a result of executing a dataflow graph. The dataflow graph execution engine 416 may be configured to execute dataflow graph of a dataflow graph dataset to generate output data (e.g., as part of executing a software application program). The output data may then be used by the software application program for subsequent data processing. For example, the software application program may be developed as a first dataflow graph, and the output data generated by executing the dataflow graph from the dataflow graph dataset may be used to perform one or more data processing operations in the first dataflow graph.

FIG. 4C is a diagram illustrating interaction among the system modules of FIG. 4B, according to some embodiments of the technology described herein. As shown in FIG. 4C, the system modules 400 perform graph generation 420 and graph execution 430.

The software application development user interface module 408 may allow a user (e.g., of device 210) to develop a software application program as a dataflow graph (e.g., in a graphical development environment). The dataflow graph generator 402 may generate a dataflow graph based on a user definition in a GUI. The GUI may further allow a user to store a subgraph of a dataflow graph as a catalogued dataflow graph. The dataset catalog module 404 may register the subgraph into the dataset catalog 204 (e.g., by generating an entry in the dataset catalog 204 corresponding to a dataflow graph dataset stored in data storage 202). The dataset catalog UI module 410 may display an entry corresponding to the catalogued dataflow graph in a dataset catalog UI that can be displayed in a software application program development GUI (e.g., as illustrated in FIG. 3F).

As shown in FIG. 4C, a dataflow graph generated by the dataflow graph generator 402 may be stored by the dataflow graph storage module 406 in data storage 202 of the data processing system 200. In some embodiments, the transformation engine 412 may be configured to transform the dataflow graph prior to storage. Thus the dataflow graph storage module 406 may be configured to store a transformed dataflow graph in the data storage 202. In some embodiments, a generated dataflow graph may be stored as originally generated (e.g., without transformation by the transformation engine 412).

A dataflow graph may be transformed by the transformation engine 412 to obtain a transformed dataflow graph (e.g., an optimized version of another dataflow graph). The compiler 414 may compile the transformed dataflow graph generated by the transformation engine 412 to obtain a compiled software application program (e.g., an executable program). The execution engine 416 may then execute the compiled software application program.

FIG. 4D is a diagram illustrating a dataflow graph 450 including a subgraph 452 that was incorporated into the dataflow graph 450, according to some embodiments of the technology described herein. In the example of FIG. 4D, the subgraph 452 is the catalogued dataflow graph 202A incorporated into the dataflow graph 450 using the entry 204A of the dataset catalog 204 of the data processing system 200. As shown in FIG. 4D, the subgraph 452 includes two input nodes 452A, 452E at which the subgraph 452 receives input data. The input data from node 452A is provided to node 452B at which a filter operation is performed, and the output of the filter operation is provided to node 452C where a sort operation is performed. The input data from node 452E is provided to node 452F where a sort operation is performed. The outputs of nodes 452C, 452F are provided as input to the node 452D where a join operation is performed. The output of the subgraph 452 is then provided as input to a node of dataflow graph 450 at which a join operation is performed with a result of other operations performed in the dataflow graph 450.

FIG. 4E is a diagram illustrating transformation of the dataflow graph 450 by the transformation engine 412, according to some embodiments of the technology described herein. The transformation engine 412 may be configured to identify portions of the dataflow graph 450 to transform. In the example of FIG. 4E, the transformation engine 412 has determined that a portion of the subgraph 452 may be transformed to optimize execution of the dataflow graph 450. The transformation engine 412 has determined that the data from input node 452E is not needed in the dataflow graph 450. For example, the transformation engine 412 may determine that the data from input node 452E will not be used in downstream operations of the dataflow graph 450. As such, operations involving the data can be removed from the dataflow graph 450 as they do not need to be executed. Further, as the data from input node 452E is not needed, the transformation engine 412 determines that the join operation at node 452D is no longer needed to join the output of node 452C with the output of node 452F. Accordingly, the transformation engine 412 removes nodes 452E, 452F, 452D from the subgraph 452.

FIG. 4F is a diagram illustrating a transformed dataflow graph 460 obtained after the transformation of FIG. 4E, according to some embodiments of the technology described herein. As shown in FIG. 4F, the transformed dataflow graph 460 includes a transformed subgraph 462 obtained from applying the transformation to the subgraph 452 that was originally incorporated into the dataflow graph 450. The transformed subgraph 462 includes only the nodes 452A, 452B, 452C of the original subgraph 452. Thus, the transformed subgraph 462 includes fewer operations for execution relative to the subgraph 452. As the transformed subgraph 462 includes fewer operations than the subgraph 452, the transformed subgraph 462 may be more efficiently executed than the subgraph 452. The transformed dataflow graph 460 may be more efficiently executed than the original dataflow graph 450.

FIG. 4G shows a diagram illustrating an example dataset catalog entry 440, of the dataset catalog 204 of FIG. 2A, according to some embodiments of the technology described herein. As shown in FIG. 4G, the entry 440 includes information 442 for accessing a dataset. In some embodiments, the information 442 for accessing the dataset may include a program for converting a physical dataset to a logical dataset. For example, the program may be a stored dataflow graph that, when executed, accesses and converts the physical dataset 202C. In some embodiments, the information 442 for accessing the dataset may be a reference to access the dataset. For example, the information 442 may include a uniform resource locator (URL) for accessing the dataset. In another example, the information 442 may include a location path (e.g., a file location path) for accessing the dataset.

The entry 440 further includes a logical identifier 444 that uniquely identifies the entry 440 among other entries of the dataset catalog 204. For example, the logical identifier 444 may be an alphanumeric value unique to the entry 440.

As shown in FIG. 4G, in some embodiments, the dataset catalog entry 440 may include data store information 446. The datastore information 446 may include reference to a location of a dataset in data storage 202. For example, the reference to the location may be an identifier of the dataset within the data storage 202. The datastore information 446 may include an indication of a type of data store. For example, the type of data store may be an SQL server database dataset, an ORACLE database dataset, a TERADATA database dataset, a flat file, a multi-file data store, a HADOOP database dataset, a DB2 data store, a Microsoft SQL SERVER dataset, an INFORMIX dataset, a table, collection of tables, or other type of data store. The datastore information 446 may include information about a record format or schema of the physical dataset. The datastore information 446 may include a record name. For example, the dataset may be a table and the record name may be a name of the table. In another example, the dataset may be a dataflow graph and the record name may be a name of a file storing the dataflow graph.

As shown in FIG. 4G, in some embodiments, the dataset catalog entry 440 may include other information 448 such as security information, access information, and/or other user parameters. For example, the security information may include a password, key, or other value for accessing a dataset. The other information 448 may include access information for accessing a dataset from the data storage 202. For example, the access information may include an address of a storage system in which the dataset is stored, or other access information. The other information 448 may include other parameters associated with the dataset such as statistical information, a data steward, a version identifier, and/or other parameters. In some embodiments, the other information 448 may include an indication that the dataset catalog entry is associated with a physical dataset (as opposed to a dataflow graph dataset). For example, the entry 440 may include a parameter indicating that the dataset is a physical dataset.

In some embodiments, the information 442 includes information to access a catalogued dataflow graph. In some embodiments, the information 442 may include a location of a stored dataflow graph in the data storage 202. For example, the information 442 may include a location of a file storing the dataflow graph. In another example, the information 442 may include a path (e.g., a URL) to the location of the dataflow graph. In some embodiments, the entry 440 may include information indicating that the entry is associated with a catalogued dataflow graph (e.g., as opposed to a physical dataset). For example, the entry 440 may include a dataset type field that may take on a first value indicating that the entry corresponds to a physical dataset and a second value indicating that the entry corresponds to a catalogued dataflow graph.

In some embodiments, when the entry 440 corresponds to a catalogued dataflow graph, the entry 440 may be used to incorporate the catalogued dataflow graph into another dataflow graph as a subgraph. For example, the entry 440 may be associated with an input node of the dataflow graph (e.g., by storing the entry or its logical identifier 444 in configuration information of the input node). The entry 440 may be used to access the catalogued dataflow graph when the incorporating dataflow graph is being compiled, transformed, and/or executed. For example, the entry 440 may be used to access the catalogued dataflow graph from the data storage 202, and integrated as a subgraph. The subgraph may then be connected to the dataflow graph (e.g., by connecting an output link of the subgraph to a node of the dataflow graph). The resulting dataflow graph may then be compiled into a software application program, or transformed (e.g., for optimization) and then compiled into a software application program.

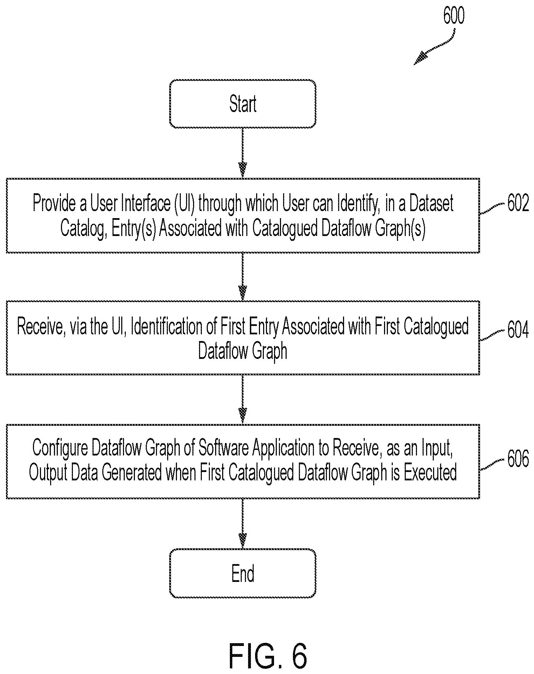

FIG. 6 is a flowchart of an example process 600 of configuring a software application program developed as a dataflow graph to receive output data dynamically generated by a dataflow graph as input, according to some embodiments of the technology described herein. In some embodiments, process 600 may be performed by data processing system 200 described herein with reference to FIGs. 2A-4D. For example, process 600 may be performed using one or more computer hardware processors of the data processing system 200.

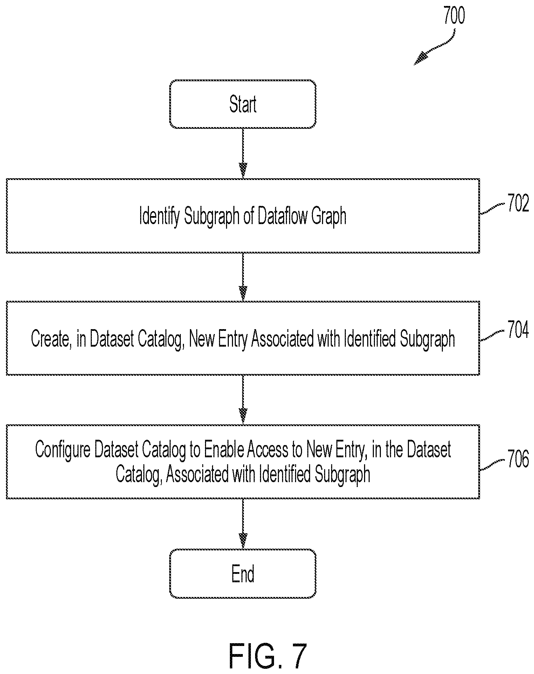

Process 600 begins at block 602, where the system provides a UI through which a user can identify, in a dataset catalog, one or more entries associated with one or more respective catalogued dataflow graphs. The catalogued dataflow graphs may be dataflow graph datasets (e.g., subgraph datasets). A dataflow graph (e.g., a subgraph) may be catalogued as described in process 700 described herein with reference to FIG. 7.

The UI may be configured to allow the user to identify an entry in one or more ways. In some embodiments, the UI may include a menu with a listing of entries in the dataset catalog (e.g., dataset catalog UI 324 described herein with reference to FIG. 3F). The menu may be configured to receive selection of an entry through a user input (e.g., clicking, dragging, tapping, and/or other type of user input). In some embodiments, the UI may be a portion of a software application development UI. For example, the UI may be a pane adjacent a display of a dataflow graph being developed by the user. In some embodiments, the UI may provide a search bar in which a user can input a query to search for entries. For example, the user may input a keyword and that can be used by the system to identify matching entries.

Next, process 600 proceeds to block 604, where the system receives, via the UI, identification of a first entry associated with a first catalogued graph. The system may be configured to receive user input indicating selection of the first entry associated with the first catalogued graph. For example, the UI may receive a user input through a menu of the UI indicating selection of the first entry.

In some embodiments, the system may be configured to receive identification of the first entry by receiving user input indicating a command to associate the first entry with a node of a dataflow graph. For example, the system may receive the user input in response to a user dragging a graphical element representing the first entry to a node of a dataflow graph in a software application program development UI. In another example, the system may receive the user input when the user places a graphical element representing the first entry into a dataflow graph (e.g., by dragging the graphical element to an input node of the dataflow graph).

Next, process 600 proceeds to block 606, where the system configures a dataflow graph of a software application to receive, as input, output data generated when the first catalogued dataflow graph associated with the first entry is executed. In some embodiments, the system may be configured to associate a node of the dataflow graph with the first catalogued dataflow graph. For example, the system may associate a node of the dataflow graph with the first catalogued dataflow graph by including, at the node of the dataflow graph, a reference (e.g., a location path) to the first catalogued dataflow graph indicated by the first entry. In this example, the reference may be used by the software application when executing to execute the first catalogued dataflow graph and obtain output data generated. In another example, the system may associate a node of the dataflow graph with the first catalogued dataflow graph by copying the dataflow graph into the node such that the dataflow graph is executed at the node. In another example, the system may associate a node of the dataflow graph with the first catalogued dataflow graph by embedding, at the node, a command to execute the first catalogued dataflow graph.

In some embodiments, after the dataflow graph is configured receive, as input, output data generated when the first catalogued dataflow graph is executed at block 606, the dataflow graph may obtain the output data when the dataflow graph is executed. For example, the first catalogued dataflow graph or transformation thereof may be automatically executed as part of executing the dataflow graph or transformation thereof.

FIG. 7 is a flowchart of an example process 700 of providing a software application program with access to output data dynamically generated by a dataflow graph, according to some embodiments of the technology described herein. In some embodiments, process 700 may be performed by data processing system 200 described herein with reference to FIGs. 2A-4D. For example, process 700 may be performed using one or more computer hardware processors of the data processing system 200. In some embodiments, process 700 may be performed to catalogue dataflow graphs such that they can be used in software application programs (e.g., as done in process 600 described herein with reference to FIG. 6).

Process 700 begins at block 702, where the system identifies a subgraph. In some embodiments, the system may be configured to identify the subgraph of the dataflow graph by: (1) receiving user input indicating a portion of a dataflow graph (e.g., in a software application development UI as described herein with reference to FIG. 3B); and (2) identifying the portion of the dataflow graph as the subgraph. The subgraph may include one or more nodes of the dataflow graph. For example, the one or more nodes of the dataflow graph may obtain input data and perform one or more data processing operations using the input data to generate output data. In some embodiments, the system may be configured to identity the subgraph by receiving user input indicating a previously created dataflow graph stored in data storage as the subgraph. For example, the dataflow graph may be stored in a previously generated file. The system may receive user input may be a selection of the file.

Next, process 700 proceeds to block 704, where the system creates, in a dataset catalog, a new entry associated with the identified subgraph. In some embodiments, the system may be configured to instantiate a new data object for storage in the dataset catalog (e.g., a data object described in FIG. 4G). The data object may include information for accessing the stored subgraph. For example, the data object may include a location path from which the subgraph can be accessed. In another example, the data object may include an index, identifier, key, or other information that can be used to access the subgraph. The information may be used to configure a software application program (e.g., a dataflow graph of the software application program) to obtain output data generated by the subgraph (e.g., as described herein with reference to FIG. 6).

In some embodiments, the system may be configured to store, in data storage (e.g., data storage 202), information indicating the subgraph. For example, the system may store a file with information about nodes, links, and configuration parameters of the subgraph. The created entry may include a reference to the file (e.g., index, a location path, identifier, key, and/or other reference). In another example, the system may generate one or more entries in a database storing information about the subgraph. The created entry may include a reference (e.g., an index) to the one or more entries for use in configuring a software application program.

Next, process 700 proceeds to block 706, where the system configures the dataset catalog to enable access to the new entry, in the dataset catalog, associated with the subgraph. In some embodiments, the system may be configured to update a UI to include the new entry. For example, the system may update a listing of entries in the UI to include the new entry. Devices displaying the UI may include the updates UI including the new entry. In some embodiments, the system may be configured to configure a dataset catalog module (e.g., dataset catalog module 404 described herein with reference to FIGs. 4B-4C) to enable access to the new entry. For example, the system may update the dataset catalog module such that it can respond to requests to access the new entry.

After configuring the dataset catalog at block 706, the new entry may be available for use by software application programs to incorporate output data generated by the subgraph. For example, dataflow graphs may be configured to use output data generated be executing the subgraph as input. As another example, software application programs requiring metadata about information stored in data storage may use information from the new entry about the subgraph dataset.

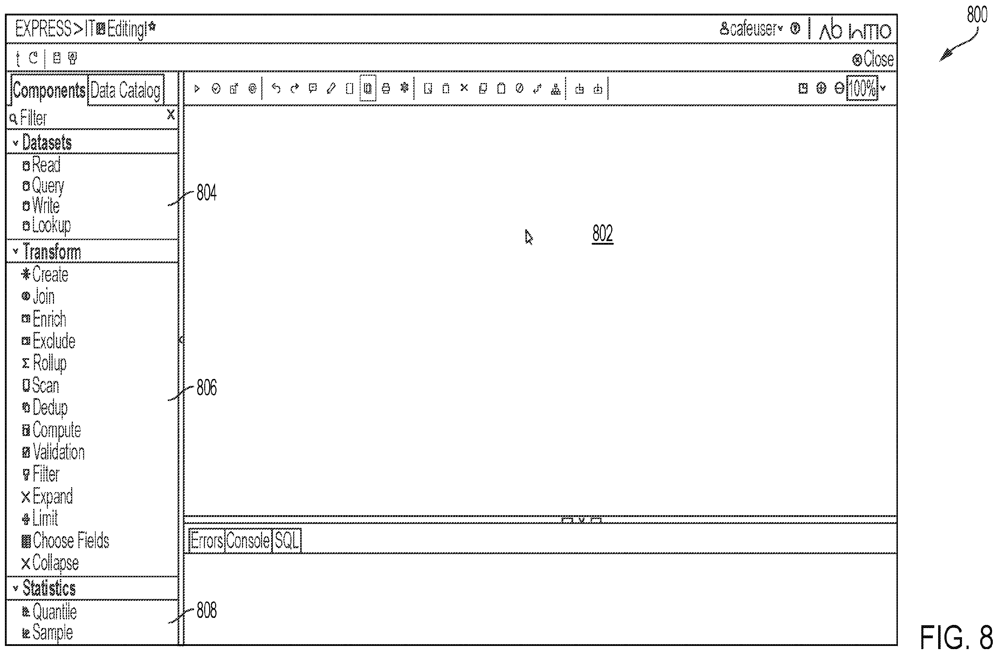

FIG. 8 is a screenshot of a software application program development UI 800, according to some embodiments of the technology described herein. The UI 800 includes a space 802 in which a user can lay out a dataflow graph. The UI 800 provides options for datasets 804 to include in the dataflow graph and data processing operations such as data transformations 806 and statistics computations 808 to include in the dataflow graph.

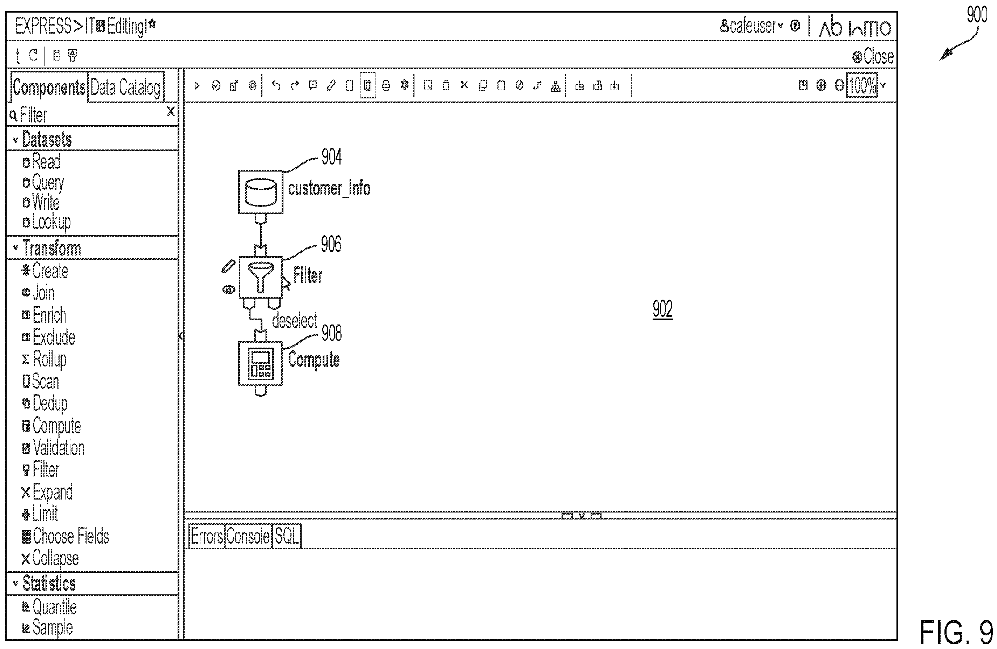

FIG. 9 is a screenshot of the UI of FIG. 8 including a dataflow graph 902, according to some embodiments of the technology described herein. The dataflow graph 902 uses dataset "customer_info" 904 as input to a filter operation 906. For example, the dataset "customer_info" 904 may be a physical dataset stored by the data processing system. The output of the filter operation 906 is provided as input to a compute operation 908.

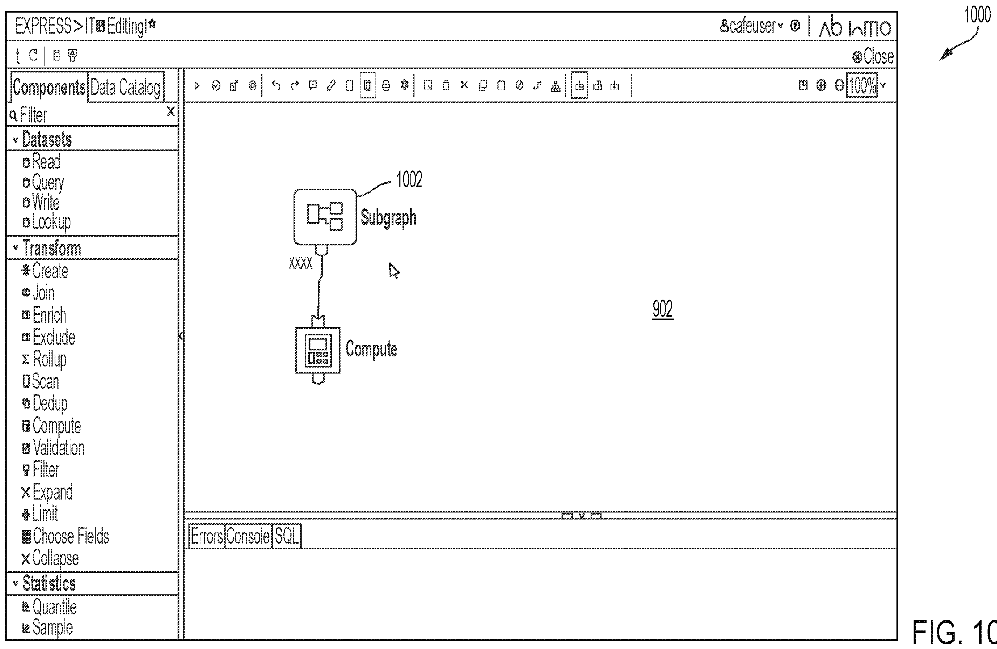

FIG. 10 is a screenshot of a UI 1000 with a portion of the dataflow graph of FIG. 9 configured as a subgraph 1002, according to some embodiments of the technology described herein. The subgraph 1002 includes the input dataset "customer_info" 904 and the filter operation 906 from the dataflow graph 902. The subgraph 1002 may have been generated by identifying a portion of the dataflow graph 902 (e.g., based on user input), and generating the subgraph to be the identified portion.

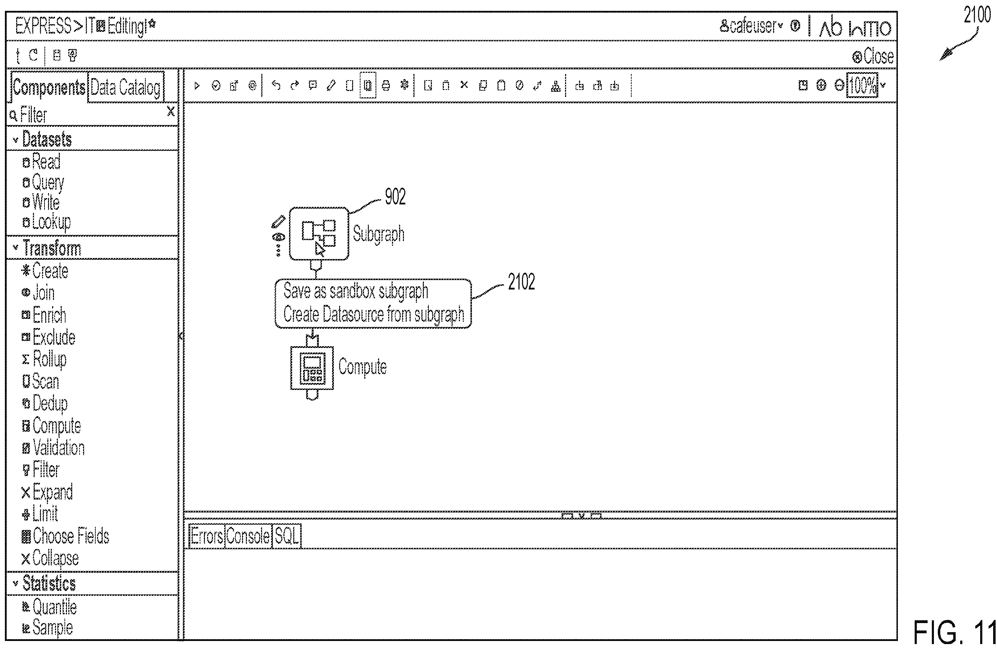

FIG. 11 is a screenshot of a UI 2100 with a menu 2102 for storing the subgraph 1002 of FIG. 10 as a dataset accessible through a dataset catalog, according to some embodiments of the technology described herein. As shown in FIG. 11, the UI 2100 generates a menu 2102 (e.g., in response to user input) that provides an option to store the subgraph as a dataset. In the example of FIG. 11, the option is labelled "Create Datasource from subgraph".

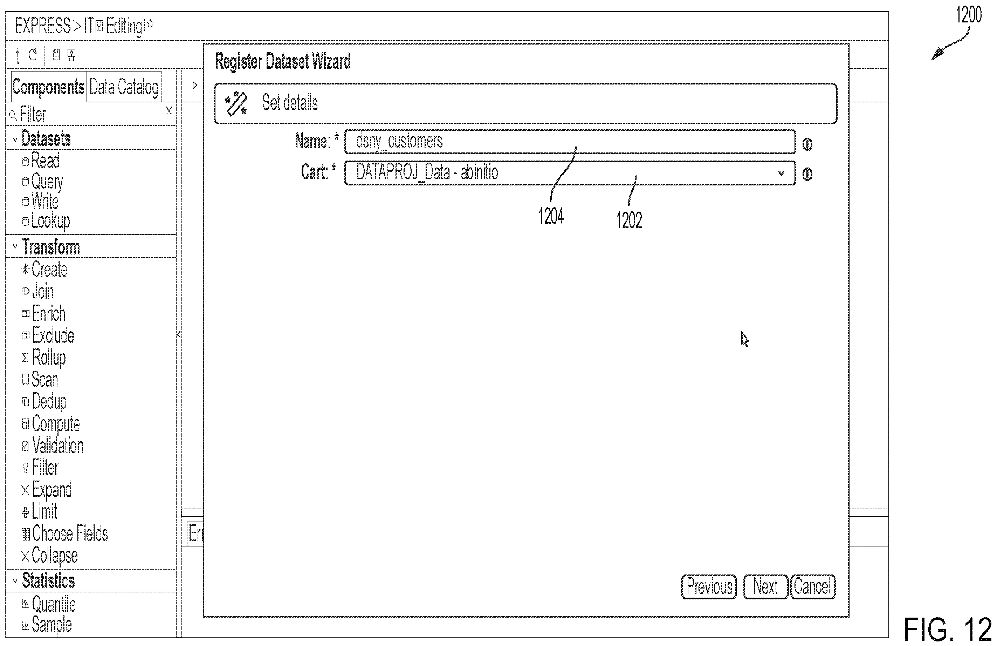

FIG. 12 is a screenshot of a UI 1200 for configuring details of a dataflow graph dataset, according to some embodiments of the technology described herein. The UI 1200 includes a "Name" field 1202 in which a user may enter a name for the dataflow graph dataset. In the example of FIG. 12, the name of the dataflow graph dataset is "dsny_customers". The UI 1200 also includes a "Cart" field 1204 for specifying a location for the dataflowgraph dataset. In the example of FIG. 12, the "Cart" field is "DATAPROJ_Data".

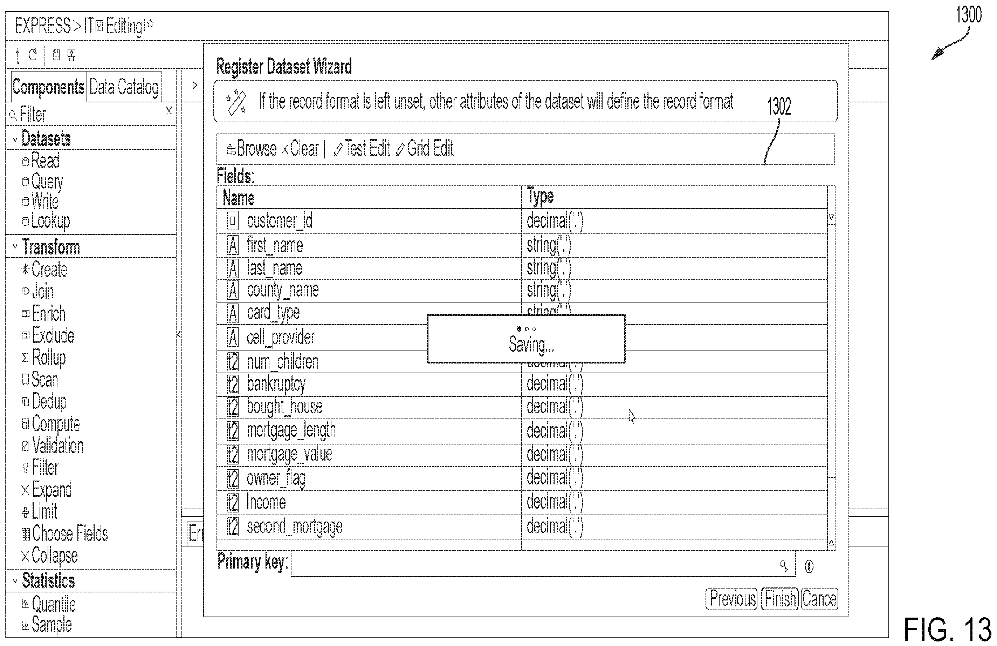

FIG. 13 is a screenshot of a UI 1300 for cataloguing a dataflow graph, according to some embodiments of the technology described herein. As shown in FIG. 13, in some embodiments, the UI 1300 may include a display of information about the dataflow graph being catalogued such as fields that will be in output data generated by the dataflow graph.

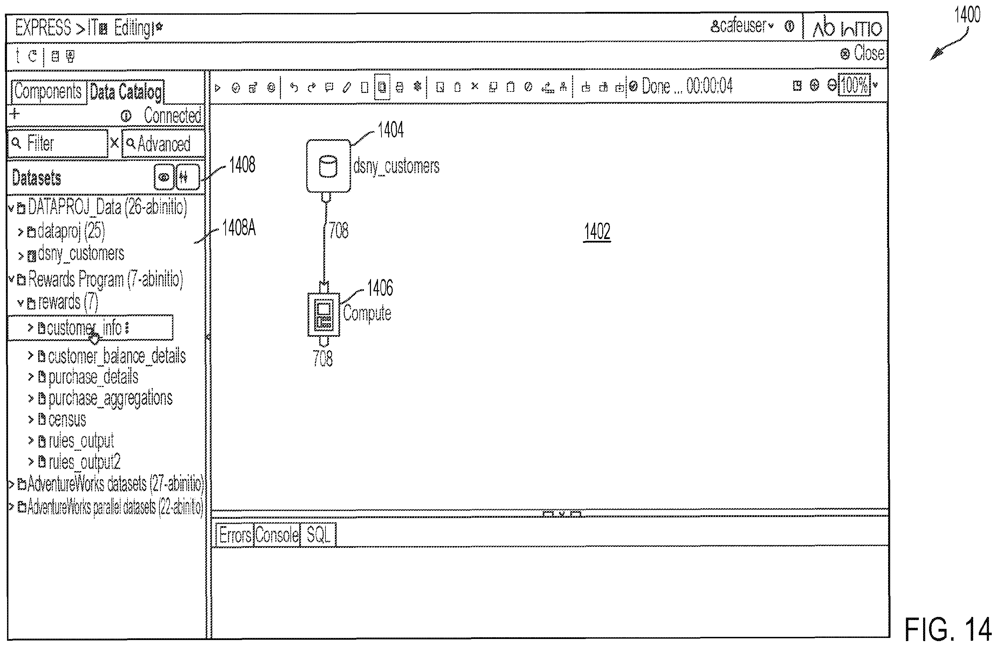

FIG. 14 is a screenshot of UI 1400 with a dataflow graph 1402 that incorporates the catalogued dataflow graph of FIG. 13, according to some embodiments of the technology described herein. As shown in FIG. 14, the catalogued dataflow graph "dsny_customers" is associated with node 1404 of the dataflow graph 1402, and is being used as input to a node 1406 with a compute operation. The UI 1400 includes a dataset catalog menu 1408 including an entry 1408A for the "dsny_customers" catalogued dataflow graph. Output data generated by executing the catalogued dataflow graph at node 1404 is provided as input to the compute operation at node 1406.

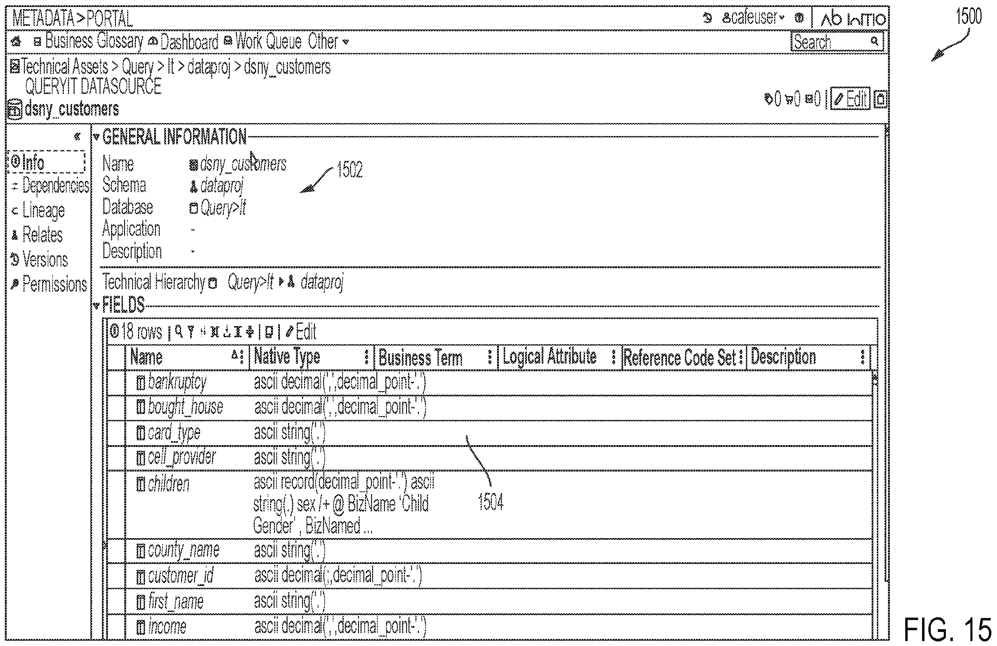

FIG. 15 is a screenshot of a UI 1500 displaying information about a catalogued dataflow graph, according to some embodiments of the technology described herein. In the example of FIG. 15, the UI 1500 displays fields 1502 including a name, schema of a database in which the catalogued dataflow graph is stored, a database name in which is it stored, and information 1504 about fields that would be included in the output data generated by the catalogued dataflow graph. The UI 1500 further includes an "Application" field that may indicate an application for which the catalogued dataflow graph is developed for. The UI 1500 includes a "Description" field for a textual description of the catalogued dataflow graph.

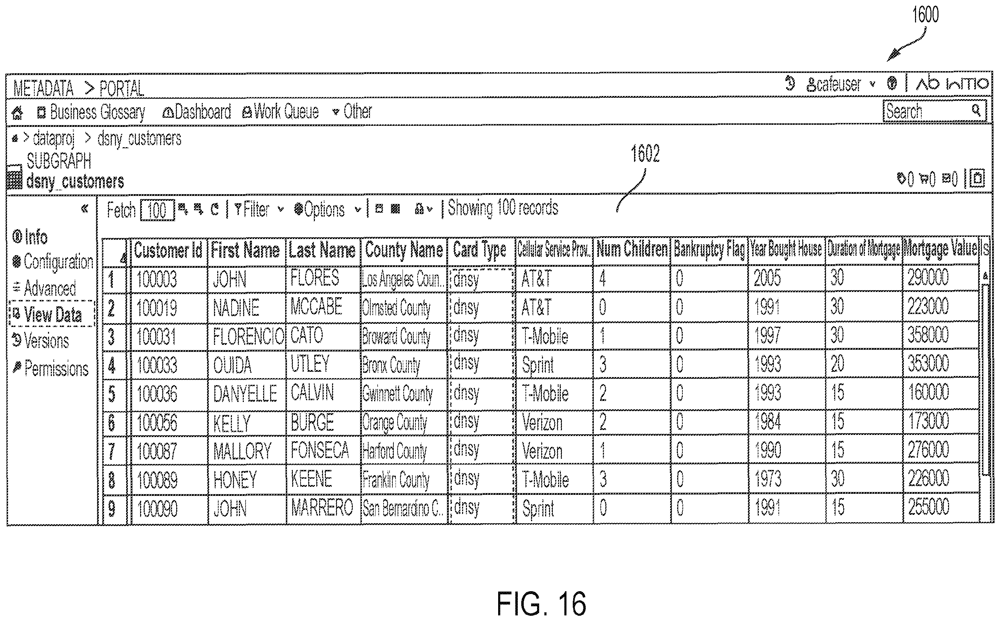

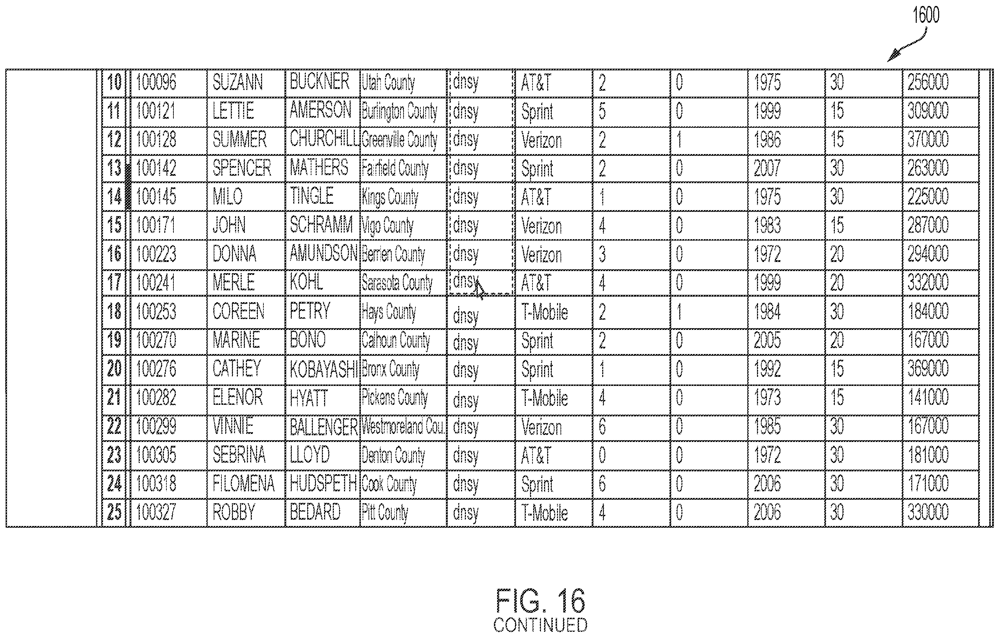

FIG. 16 is a screenshot of a UI 1600 displaying output data 1602 generated when a catalogued dataflow graph, according to some embodiments of the technology described herein. The UI 1600 shows a preview of the output data generated when the catalogued dataflow graph is executed. In the example of FIG. 16, the UI 1600 includes columns of data generated when the catalogued dataflow graph is executed.

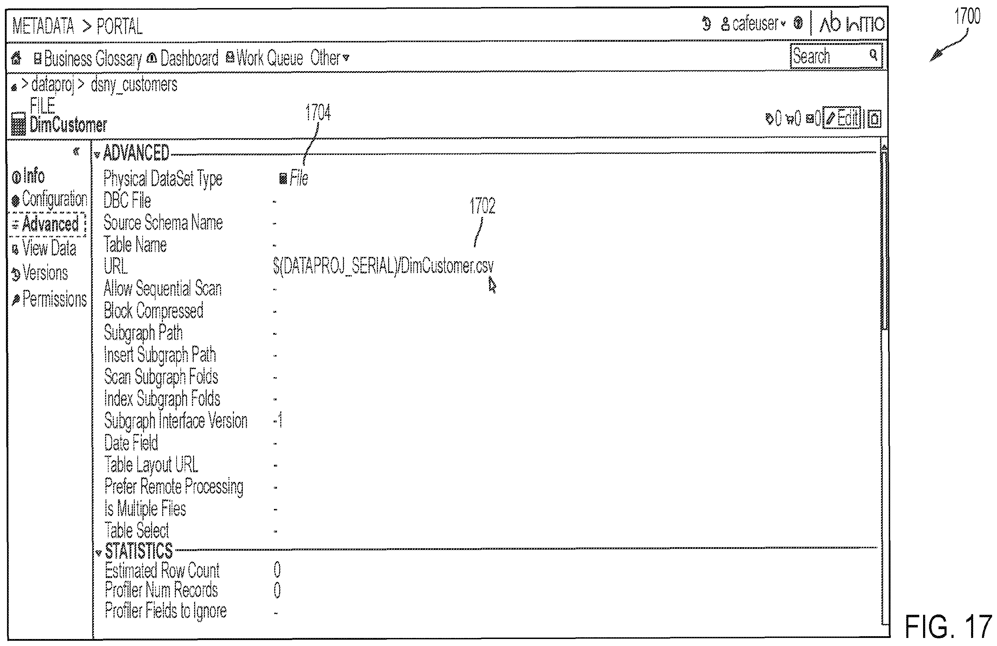

FIG. 17 is a screenshot of a UI 1700 displaying information in a dataset catalogue entry associated with a physical dataset, according to some embodiments of the technology described herein. As shown in FIG. 17, the information includes a uniform record locator (URL) for accessing the physical dataset. It also includes an indication 1704 of a physical dataset type. The UI 1700 includes other information about a dataset that may be filled.

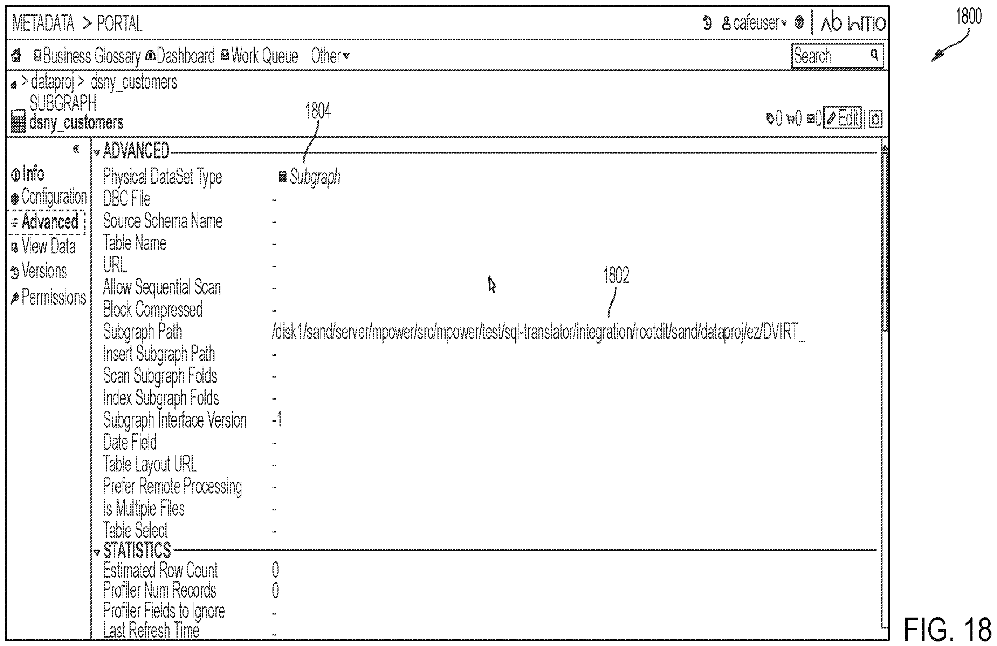

FIG. 18 is a screenshot of a UI 1800 displaying information in a dataset catalogue entry associated with a dataflow graph dataset, according to some embodiments of the technology described herein. As shown in FIG. 18, the UI 1800 includes a path 1802 for the dataflow graph path. The UI 1800 further includes an indication 1804 that the dataset is a dataflow graph dataset. In the example of FIG. 18, the UI 1800 indicates a physical dataset type of "Subgraph" indicating that the dataset is a dataflow graph dataset.

### Example Computer System

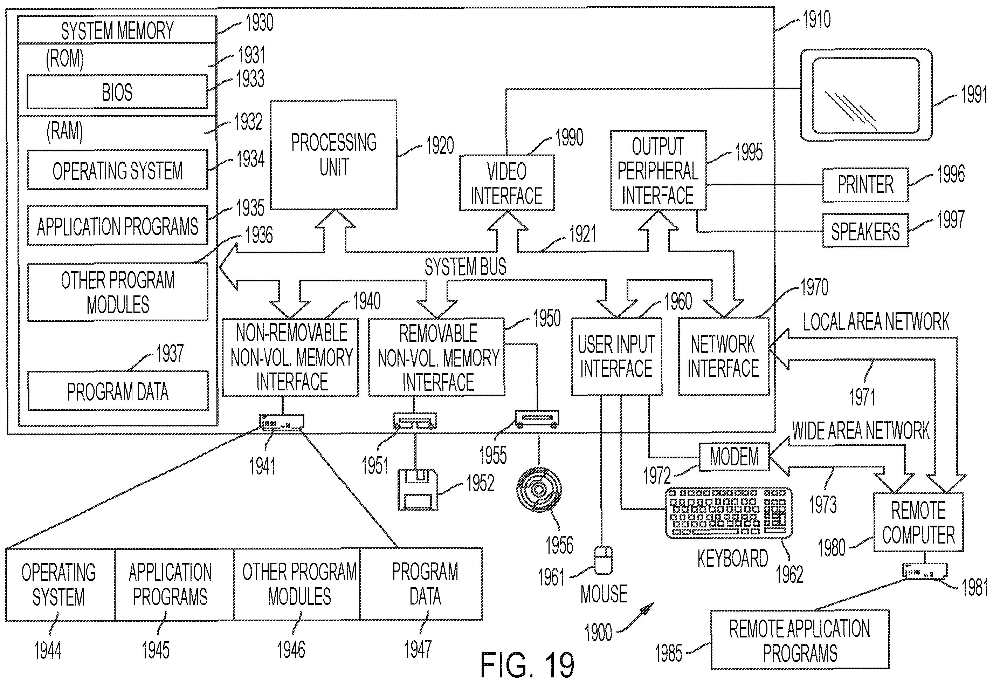

FIG. 19 illustrates an example of a suitable computing system environment 1900 on which the technology described herein may be implemented. The computing system environment 1900 is only one example of a suitable computing environment and is not intended to suggest any limitation as to the scope of use or functionality of the technology described herein. Neither should the computing environment 1900 be interpreted as having any dependency or requirement relating to any one or combination of components illustrated in the exemplary operating environment 1900.

The technology described herein is operational with numerous other general purpose or special purpose computing system environments or configurations. Examples of well-known computing systems, environments, and/or configurations that may be suitable for use with the technology described herein include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The computing environment may execute computer-executable instructions, such as program modules. Generally, program modules include routines, programs, objects, components, data structures, etc. that perform particular tasks or implement particular abstract data types. The technology described herein may also be practiced in distributed computing environments where tasks are performed by remote processing devices that are linked through a communications network. In a distributed computing environment, program modules may be located in both local and remote computer storage media including memory storage devices.

With reference to FIG. 19, an exemplary system for implementing the technology described herein includes a general purpose computing device in the form of a computer 1900. Components of computer 1910 may include, but are not limited to, a processing unit 1920, a system memory 1930, and a system bus 1921 that couples various system components including the system memory to the processing unit 1920. The system bus 1921 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (ELISA) bus, Video Electronics Standards Association (VESA) local bus, and Peripheral Component Interconnect (PCI) bus also known as Mezzanine bus.

Computer 1910 typically includes a variety of computer readable media. Computer readable media can be any available media that can be accessed by computer 1910 and includes both volatile and nonvolatile media, removable and non-removable media. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information, and which can be accessed by computer 1910. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 1930 includes computer storage media in the form of volatile and/or nonvolatile memory such as read only memory (ROM) 1931 and random access memory (RAM) 1932. A basic input/output system 1933 (BIOS), containing the basic routines that help to transfer information between elements within computer 1910, such as during start-up, is typically stored in ROM 1931. RAM 1932 typically contains data and/or program modules that are immediately accessible to and/or presently being operated on by processing unit 1920. By way of example, and not limitation, FIG. 19 illustrates operating system 1934, application programs 1935, other program modules 1936, and program data 1937.

The computer 1910 may also include other removable/non-removable, volatile/nonvolatile computer storage media. By way of example only, FIG. 19 illustrates a hard disk drive 1941 that reads from or writes to non-removable, nonvolatile magnetic media, a flash drive 1951 that reads from or writes to a removable, nonvolatile memory 1952 such as flash memory, and an optical disk drive 1955 that reads from or writes to a removable, nonvolatile optical disk 1956 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 1941 is typically connected to the system bus 1921 through a non-removable memory interface such as interface 1940, and magnetic disk drive 1951 and optical disk drive 1955 are typically connected to the system bus 1921 by a removable memory interface, such as interface 1950.

The drives and their associated computer storage media described above and illustrated in FIG. 19, provide storage of computer readable instructions, data structures, program modules and other data for the computer 1910. In FIG. 19, for example, hard disk drive 1941 is illustrated as storing operating system 1944, application programs 1945, other program modules 1946, and program data 1947. Note that these components can either be the same as or different from operating system 1934, application programs 1935, other program modules 1936, and program data 1937. Operating system 1944, application programs 1945, other program modules 1946, and program data 1947 are given different numbers here to illustrate that, at a minimum, they are different copies. An actor may enter commands and information into the computer 1910 through input devices such as a keyboard 1962 and pointing device 1961, commonly referred to as a mouse, trackball or touch pad. Other input devices (not shown) may include a microphone, joystick, game pad, satellite dish, scanner, or the like. These and other input devices are often connected to the processing unit 1920 through a user input interface 1960 that is coupled to the system bus, but may be connected by other interface and bus structures, such as a parallel port, game port or a universal serial bus (USB). A monitor 1991 or other type of display device is also connected to the system bus 1921 via an interface, such as a video interface 1990. In addition to the monitor, computers may also include other peripheral output devices such as speakers 1997 and printer 1996, which may be connected through an output peripheral interface 1995.

The computer 1910 may operate in a networked environment using logical connections to one or more remote computers, such as a remote computer 1980. The remote computer 1980 may be a personal computer, a server, a router, a network PC, a peer device or other common network node, and typically includes many or all of the elements described above relative to the computer 1910, although only a memory storage device 1981 has been illustrated in FIG. 19. The logical connections depicted in FIG. 19 include a local area network (LAN) 1981 and a wide area network (WAN) 1983, but may also include other networks. Such networking environments are commonplace in offices, enterprise-wide computer networks, intranets and the Internet.

When used in a LAN networking environment, the computer 1910 is connected to the LAN 1981 through a network interface or adapter 1980. When used in a WAN networking environment, the computer 1910 typically includes a modem 1982 or other means for establishing communications over the WAN 1983, such as the Internet. The modem 1982, which may be internal or external, may be connected to the system bus 1921 via the actor input interface 1960, or other appropriate mechanism. In a networked environment, program modules depicted relative to the computer 1910, or portions thereof, may be stored in the remote memory storage device. By way of example, and not limitation, FIG. 19 illustrates remote application programs 1985 as residing on memory device 1981. It will be appreciated that the network connections shown are exemplary and other means of establishing a communications link between the computers may be used.

Having thus described several aspects of at least one embodiment of the technology described herein, it is to be appreciated that various alterations, modifications, and improvements will readily occur to those skilled in the art.

Further, though advantages of the technology described herein are indicated, it should be appreciated that not every embodiment of the technology described herein will include every described advantage. Some embodiments may not implement any features described as advantageous herein and in some instances one or more of the described features may be implemented to achieve further embodiments. Accordingly, the foregoing description and drawings are by way of example only.

The above-described embodiments of the technology described herein can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component, including commercially available integrated circuit components known in the art by names such as CPU chips, GPU chips, microprocessor, microcontroller, or co-processor. Alternatively, a processor may be implemented in custom circuitry, such as an ASIC, or semicustom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. However, a processor may be implemented using circuitry in any suitable format.

Further, it should be appreciated that a computer may be embodied in any of a number of forms, such as a rack-mounted computer, a desktop computer, a laptop computer, or a tablet computer. Additionally, a computer may be embedded in a device not generally regarded as a computer but with suitable processing capabilities, including a Personal Digital Assistant (PDA), a smart phone or any other suitable portable or fixed electronic device.

Also, a computer may have one or more input and output devices. These devices can be used, among other things, to present a user interface. Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computer may receive input information through speech recognition or in other audible format.

Such computers may be interconnected by one or more networks in any suitable form, including as a local area network or a wide area network, such as an enterprise network or the Internet. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

In this respect, aspects of the technology described herein may be embodied as a computer readable storage medium (or multiple computer readable media) (e.g., a computer memory, one or more floppy discs, compact discs (CD), optical discs, digital video disks (DVD), magnetic tapes, flash memories, circuit configurations in Field Programmable Gate Arrays or other semiconductor devices, or other tangible computer storage medium) encoded with one or more programs that, when executed on one or more computers or other processors, perform methods that implement the various embodiments described above. As is apparent from the foregoing examples, a computer readable storage medium may retain information for a sufficient time to provide computer-executable instructions in a non-transitory form. Such a computer readable storage medium or media can be transportable, such that the program or programs stored thereon can be loaded onto one or more different computers or other processors to implement various aspects of the technology as described above. As used herein, the term "computer-readable storage medium" encompasses only a non-transitory computer-readable medium that can be considered to be a manufacture (i.e., article of manufacture) or a machine. Alternatively or additionally, aspects of the technology described herein may be embodied as a computer readable medium other than a computer-readable storage medium, such as a propagating signal.

The terms "program" or "software" are used herein in a generic sense to refer to any type of computer code or set of computer-executable instructions that can be employed to program a computer or other processor to implement various aspects of the technology as described above. Additionally, it should be appreciated that according to one aspect of this embodiment, one or more computer programs that when executed perform methods of the technology described herein need not reside on a single computer or processor, but may be distributed in a modular fashion amongst a number of different computers or processors to implement various aspects of the technology described herein.

Computer-executable instructions may be in many forms, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the fields with locations in a computer-readable medium that conveys relationship between the fields. However, any suitable mechanism may be used to establish a relationship between information in fields of a data structure, including through the use of pointers, tags or other mechanisms that establish relationship between data elements.

Various aspects of the technology described herein may be used alone, in combination, or in a variety of arrangements not specifically described in the embodiments described in the foregoing and is therefore not limited in its application to the details and arrangement of components set forth in the foregoing description or illustrated in the drawings. For example, aspects described in one embodiment may be combined in any manner with aspects described in other embodiments.

Also, the technology described herein may be embodied as a method, of which examples are provided herein including with reference to FIGs. 3 and 7. The acts performed as part of any of the methods may be ordered in any suitable way. Accordingly, embodiments may be constructed in which acts are performed in an order different than illustrated, which may include performing some acts simultaneously, even though shown as sequential acts in illustrative embodiments.

Further, some actions are described as taken by an "actor" or a "user". It should be appreciated that an "actor" or a "user" need not be a single individual, and that in some embodiments, actions attributable to an "actor" or a "user" may be performed by a team of individuals and/or an individual in combination with computer-assisted tools or other mechanisms.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," or "having," "containing," "involving," and variations thereof herein, is meant to encompass the items listed thereafter as well as additional items.

## Claims

1. A method, performed by a data processing system (100, 200), for enabling development of software application programs (106, 106A-C, 206, 206A-E) in a dynamic environment with multiple datasets by using entries (104A, 104B, 202A-E, 204, 204A-E, 440, 1408A) in a dataset catalog (104, 204, 220) to provide a software application program (106, 106A-C, 206, 206A-E), developed as a dataflow graph (202A, 202B, 202E, 306, 326, 450, 460, 500, 902, 1402), with access to output data (1602) dynamically generated by one or more other dataflow graphs (202A, 202B, 202E, 306, 326, 450, 460, 500, 902, 1402), the entries (104A, 104B, 202A-E, 204, 204A-E, 440, 1408A) associated with respective software application programs (106, 106A-C, 206, 206A-E) developed as dataflow graphs (202A, 202B, 202E, 306, 326, 450, 460, 500, 902, 1402) having nodes (452A-F, 502) representing data processing operations and links representing flows of data, the method comprising:
using at least one computer hardware processor to perform:
providing a user interface through which a user can identify, in a dataset catalog (104, 204, 220), one or more entries (104A, 104B, 202A-E, 204, 204A-E, 440, 1408A) associated with one or more respective catalogued dataflow graphs (202A, 202B, 202E, 306, 326, 450, 460, 500, 902, 1402), the one or more entries (104A, 104B, 202A-E, 204, 204A-E, 440, 1408A) including a first entry associated with a first catalogued dataflow graph,
wherein the first catalogued dataflow graph has one or more nodes (452A-F, 502) representing one or more respective data sources, and one or more nodes (452A-F, 502) representing one or more respective data processing operations,
wherein, when the first catalogued dataflow graph is executed, the first catalogued dataflow graph generates output data (1602) by applying the one or more data processing operations to data obtained from the one or more respective data sources;
receiving, via the user interface, an identification of the first entry associated with the first catalogued dataflow graph;
configuring the dataflow graph (202A, 202B, 202E, 306, 326, 450, 460, 500, 902, 1402) of the software application program (106, 106A-C, 206, 206A-E) to receive, as an input, the output data (1602) generated when the first catalogued dataflow graph is executed, the configuring comprising associating one of one or more input nodes (208A, 208B, 310A, 310B, 328, 452A, 452E) in the dataflow graph (202A, 202B, 202E, 306, 326, 450, 460, 500, 902, 1402) with the first catalogued dataflow graph to incorporate the first catalogued dataflow graph into the dataflow graph (202A, 202B, 202E, 306, 326, 450, 460, 500, 902, 1402) of the software application program;
transforming the dataflow graph (202A, 202B, 202E, 306, 326, 450, 460, 500, 902, 1402) including the input node (208A, 208B, 310A, 310B, 328, 452A, 452E) associated with the first catalogued dataflow graph to obtain a transformed dataflow graph (202A, 202B, 202E, 306, 326, 450, 460, 500, 902, 1402), the transforming comprising:
identifying at least one portion of the dataflow graph (202A, 202B, 202E, 306, 326, 450, 460, 500, 902, 1402) to transform, the at least one portion including the first catalogued dataflow graph associated with the input node (208A, 208B, 310A, 310B, 328, 452A, 452E), and
transforming the at least one portion of the dataflow graph (202A, 202B, 202E, 306, 326, 450, 460, 500, 902, 1402) to obtain the transformed dataflow graph (202A, 202B, 202E, 306, 326, 450, 460, 500, 902, 1402);
compiling the transformed dataflow graph (202A, 202B, 202E, 306, 326, 450, 460, 500, 902, 1402) into a compiled software application program; and
executing the compiled software application program.

2. The method of claim 1, wherein receiving the identification of the first entry associated with the first catalogued dataflow graph comprises receiving a selection of the first entry via the user interface.

3. The method of claim 1 or any other preceding claim, wherein the dataset catalog (104, 204, 220) includes multiple entries (104A, 104B, 202A-E, 204, 204A-E, 440, 1408A) associated with respective catalogued dataflow graphs (202A, 202B, 202E, 306, 326, 450, 460, 500, 902, 1402) and multiple entries (104A, 104B, 202A-E, 204, 204A-E, 440, 1408A) associated with respective datasets previously stored in memory (1930, 1952).

4. The method of claim 1 or any other preceding claim, wherein the user interface allows the user to identify, in the dataset catalog (104, 204, 220), at least one entry (104A, 104B, 204, 204A-D, 440, 1408A) associated with at least one respective catalogued physical dataset (202C, 202D) previously stored in memory (1930, 1952), the at least one entry (104A, 104B, 204, 204A-D, 440, 1408A) including a second entry associated with a physical dataset (202C, 202D) stored in the memory, preferably wherein the one or more input nodes (208A, 208B, 310A, 310B, 328, 452A, 452E) comprise multiple input nodes, the method preferably further comprising:
receiving, via the user interface, an identification of the second entry associated with the physical dataset (202C, 202D) stored in the memory (1930, 1952); and
configuring the dataflow graph (202A, 202B, 202E, 306, 326, 450, 460, 500, 902, 1402) of the software application program (106, 106A-C, 206, 206A-E) to receive, as an input, data from the physical dataset (202C, 202D), the configuring comprising associating another one of the multiple input nodes in the dataflow graph (202A, 202B, 202E, 306, 326, 450, 460, 500, 902, 1402) with the data from the physical dataset (202C, 202D).

5. The method of claim 1 or any other preceding claim, wherein transforming the dataflow graph (202A, 202B, 202E, 306, 326, 450, 460, 500, 902, 1402) including the input node (208A, 208B, 310A, 310B, 328, 452A, 452E) associated with the first catalogued dataflow graph to obtain the transformed dataflow graph (202A, 202B, 202E, 306, 326, 450, 460, 500, 902, 1402) comprises:
incorporating the first catalogued dataflow graph into the dataflow graph (202A, 202B, 202E, 306, 326, 450, 460, 500, 902, 1402) as a first subgraph at the input node (208A, 208B, 310A, 310B, 328, 452A, 452E) associated with the first catalogued dataflow graph; and
transforming the first subgraph to obtain a second subgraph that is different from the first subgraph.

6. The method of claim 5 or any other preceding claim, wherein transforming the first subgraph to obtain the second subgraph comprises:
transforming the first subgraph based at least in part on at least one operation represented by at least one node downstream of the input node (208A, 208B, 310A, 310B, 328, 452A, 452E) in the dataflow graph (202A, 202B, 202E, 306, 326, 450, 460, 500, 902, 1402).

7. The method of claim 5 or any other preceding claim, wherein transforming the first subgraph to obtain the second subgraph comprises:
applying at least one optimization to the first subgraph to obtain the second subgraph.

8. The method of claim 7 or any other preceding claim, wherein the at least one optimization comprises at least one of:
removing at least one node of the first subgraph;
replacing at least one node of the first subgraph;
changing an order of a plurality of nodes (452A-F, 502) of the first subgraph;
combining a plurality of nodes (452A-F, 502) of the first subgraph;
parallelizing processing of at least one operation represented by least one node of the first subgraph; or
deleting data in at least one node of the first subgraph such that it is not used in a subsequent operation represented by a node downstream of the at least one node in the first subgraph.

9. The method of claim 1 or any other preceding claim, wherein the first catalogued dataflow graph was generated from a subgraph (208, 308, 452, 462, 1002) embedded in another dataflow graph, the other dataflow graph having nodes representing data processing operations and links representing flow of data between the nodes (452A-F, 502), wherein the other dataflow graph is separate from the dataflow graph (202A, 202B, 202E, 306, 326, 450, 460, 500, 902, 1402) of the software application, the method preferably further comprising:
displaying, in a UI, a graphical representation of the other dataflow graph; and
receiving, through the UI, user input indicating that the subgraph (208, 308, 452, 462, 1002) within the dataflow graph (202A, 202B, 202E, 306, 326, 450, 460, 500, 902, 1402) is to be catalogued; and
storing the subgraph (208, 308, 452, 462, 1002) as the first catalogued dataflow graph in response to receiving the user input indicating that the subgraph (208, 308, 452, 462, 1002) within the dataflow graph (202A, 202B, 202E, 306, 326, 450, 460, 500, 902, 1402) is to be catalogues.

10. The method of claim 1 or any other preceding claim, wherein the first catalogued dataflow graph has only a single output link representing data output by the first catalogued dataflow graph by applying the one or more data processing operations to data obtained from the one or more data sources.

11. The method of claim 1 or any other preceding claim, wherein the first catalogued dataflow graph is stored in data storage (102, 202) of the data processing system (100, 200), and the first entry stores a reference to a location of the first catalogued dataflow graph in the data storage and/or wherein the first entry stores a reference to a file storing information indicating nodes (452A-F, 502) of the first catalogued dataflow graph and/or configuration parameters of the first catalogued dataflow graph.

12. The method of claim 1 or any other preceding claim, wherein configuring the dataflow graph (202A, 202B, 202E, 306, 326, 450, 460, 500, 902, 1402) of the software application program (106, 106A-C, 206, 206A-E) to receive, as an input, the output data (1602) generated when the first catalogued dataflow graph is executed comprises:
receiving, via the user interface, an association of the first entry with the input node (208A, 208B, 310A, 310B, 328, 452A, 452E) in the dataflow graph (202A, 202B, 202E, 306, 326, 450, 460, 500, 902, 1402); and
in response to receiving the user input associating the first entry with the input node (208A, 208B, 310A, 310B, 328, 452A, 452E) in the dataflow graph (202A, 202B, 202E, 306, 326, 450, 460, 500, 902, 1402):
configuring the dataflow graph (202A, 202B, 202E, 306, 326, 450, 460, 500, 902, 1402) to receive, at the input node (208A, 208B, 310A, 310B, 328, 452A, 452E), data output through an output link of the first catalogued dataflow graph as a result of executing the first catalogued dataflow graph.

13. The method of claim 1 or any other preceding claim, wherein receiving the association of the first entry with the input node (208A, 208B, 310A, 310B, 328, 452A, 452E) in the dataflow graph (202A, 202B, 202E, 306, 326, 450, 460, 500, 902, 1402) comprises:
receiving, via the user interface, user input indicating association of a first graphical element representing the first entry with a second graphical element representing the input node (208A, 208B, 310A, 310B, 328, 452A, 452E) in the dataflow graph, preferably wherein the user input indicating the association of the first graphical element representing the first entry with the second graphical element representing the input node (208A, 208B, 310A, 310B, 328, 452A, 452E) comprises dragging the first graphical element to the second graphical element in the user interface.

14. A data processing system (100, 200) configured to perform the method of any of the preceding claims.

15. At least one non-transitory computer-readable storage medium storing instructions that, when executed by at least one computer hardware processor of a data processing system (100, 200), cause the at least one computer hardware processor to perform the method of any of claims 1 to 13.

## Patentansprüche

1. Ein Verfahren, das von einem Datenverarbeitungssystem (100, 200) durchgeführt wird, um die Entwicklung von Software-Anwendungsprogrammen (106, 106A-C, 206, 206A-E) in einer dynamischen Umgebung mit mehreren Datensätzen zu ermöglichen, indem Einträge (104A, 104B, 202A-E, 204, 204A-E, 440, 1408A) in einem Datensatzkatalog (104, 204, 220) verwendet werden, um ein Software-Anwendungsprogramm (106, 106A-C, 206, 206A-E) bereitzustellen, das als ein Datenflussgraph (202A, 202B, 202E, 306, 326, 450, 460, 500, 902, 1402) entwickelt wurde, mit Zugriff auf Ausgabedaten (1602), die dynamisch von einem oder mehreren anderen Datenflussgraphen (202A, 202B, 202E, 306, 326, 450, 460, 500, 902, 1402) erzeugt werden, wobei die Einträge (104A, 104B, 202A-E, 204, 204A-E, 440, 1408A) jeweiligen Software-Anwendungsprogrammen (106, 106A-C, 206, 206A-E) zugeordnet sind, die als Datenflussgraphen (202A, 202B, 202E, 306, 326, 450, 460, 500, 902, 1402) mit Knoten (452A-F, 502), die Datenverarbeitungsoperationen darstellen, und Verbindungen, die Flüsse von Daten darstellen, entwickelt wurden, wobei das Verfahren Folgendes umfasst:
Verwenden mindestens eines Computer-Hardware-Prozessors, um Folgendes durchzuführen:
Bereitstellen einer Benutzerschnittstelle, durch die ein Benutzer in einem Datensatzkatalog (104, 204, 220) einen oder mehrere Einträge (104A, 104B, 202A-E, 204, 204A-E, 440, 1408A) identifizieren kann, die einem oder mehreren jeweiligen katalogisierten Datenflussgraphen (202A, 202B, 202E, 306, 326, 450, 460, 500, 902, 1402) zugeordnet sind, wobei der eine oder die mehreren Einträge (104A, 104B, 202A-E, 204, 204A-E, 440, 1408A) einen ersten Eintrag beinhalten, der einem ersten katalogisierten Datenflussgraphen zugeordnet ist,
wobei der erste katalogisierte Datenflussgraph einen oder mehrere Knoten (452A-F, 502), die eine oder mehrere jeweilige Datenquellen darstellen, und einen oder mehrere Knoten (452A-F, 502), die eine oder mehrere jeweilige Datenverarbeitungsoperationen darstellen, aufweist,
wobei, wenn der erste katalogisierte Datenflussgraph ausgeführt wird, der erste katalogisierte Datenflussgraph Ausgabedaten (1602) erzeugt, indem er die eine oder die mehreren Datenverarbeitungsoperationen auf Daten anwendet, die von der einen oder den mehreren jeweiligen Datenquellen erhalten werden;
Empfangen, über die Benutzerschnittstelle, einer Identifikation des ersten Eintrags, der dem ersten katalogisierten Datenflussgraphen zugeordnet ist;
Konfigurieren des Datenflussgraphen (202A, 202B, 202E, 306, 326, 450, 460, 500, 902, 1402) des Softwareanwendungsprogramms (106, 106A-C, 206, 206A-E), um als eine Eingabe die Ausgabedaten (1602) zu empfangen, die erzeugt werden, wenn der erste katalogisierte Datenflussgraph ausgeführt wird, wobei das Konfigurieren das Zuordnen eines von einem oder mehreren Eingabeknoten (208A, 208B, 310A, 310B, 328, 452A, 452E) in dem Datenflussgraphen (202A, 202B, 202E, 306, 326, 450, 460, 500, 902, 1402) zu dem ersten katalogisierten Datenflussgraphen umfasst, um den ersten katalogisierten Datenflussgraphen in den Datenflussgraphen (202A, 202B, 202E, 306, 326, 450, 460, 500, 902, 1402) des Softwareanwendungsprogramms zu integrieren;
Transformieren des Datenflussgraphen (202A, 202B, 202E, 306, 326, 450, 460, 500, 902, 1402), der den Eingabeknoten (208A, 208B, 310A, 310B, 328, 452A, 452E) beinhaltet, der dem ersten katalogisierten Datenflussgraphen zugeordnet ist, um einen transformierten Datenflussgraphen (202A, 202B, 202E, 306, 326, 450, 460, 500, 902, 1402) zu erhalten, wobei das Transformieren Folgendes umfasst:
Identifizieren mindestens eines Teils des Datenflussgraphen (202A, 202B, 202E, 306, 326, 450, 460, 500, 902, 1402) zum Transformieren, wobei der mindestens eine Teil den ersten katalogisierten Datenflussgraphen beinhaltet, der dem Eingabeknoten (208A, 208B, 310A, 310B, 328, 452A, 452E) zugeordnet ist, und
Transformieren des mindestens einen Teils des Datenflussgraphen (202A, 202B, 202E, 306, 326, 450, 460, 500, 902, 1402), um den transformierten Datenflussgraphen (202A, 202B, 202E, 306, 326, 450, 460, 500, 902, 1402) zu erhalten;
Kompilieren des transformierten Datenflussgraphen (202A, 202B, 202E, 306, 326, 450, 460, 500, 902, 1402) zu einem kompilierten Softwareanwendungsprogramm; und
Ausführen des kompilierten Softwareanwendungsprogramms.

2. Das Verfahren nach Anspruch 1, wobei das Empfangen der Identifikation des ersten Eintrags, der dem ersten katalogisierten Datenflussgraphen zugeordnet ist, das Empfangen einer Auswahl des ersten Eintrags über die Benutzerschnittstelle umfasst.

3. Das Verfahren nach Anspruch 1 oder einem anderen vorhergehenden Anspruch, wobei der Datensatzkatalog (104, 204, 220) mehrere Einträge (104A, 104B, 202A-E, 204, 204A-E, 440, 1408A), die jeweiligen katalogisierten Datenflussgraphen (202A, 202B, 202E, 306, 326, 450, 460, 500, 902, 1402) zugeordnet sind, und mehrere Einträge (104A, 104B, 202A-E, 204, 204A-E, 440, 1408A) beinhaltet, die jeweiligen zuvor im Speicher (1930, 1952) gespeicherten Datensätzen zugeordnet sind.

4. Das Verfahren nach Anspruch 1 oder einem anderen vorhergehenden Anspruch, wobei die Benutzerschnittstelle dem Benutzer ermöglicht, im Datensatzkatalog (104, 204, 220) mindestens einen Eintrag (104A, 104B, 204, 204A-D, 440, 1408A) zu identifizieren, der mindestens einem jeweiligen katalogisierten physischen Datensatz (202C, 202D) zugeordnet ist, der zuvor im Speicher (1930, 1952) gespeichert wurde, wobei der mindestens eine Eintrag (104A, 104B, 204, 204A-D, 440, 1408A) einen zweiten Eintrag beinhaltet, der einem physischen Datensatz (202C, 202D) zugeordnet ist, der im Speicher gespeichert ist, wobei vorzugsweise der eine oder die mehreren Eingabeknoten (208A, 208B, 310A, 310B, 328, 452A, 452E) mehrere Eingabeknoten umfassen, wobei das Verfahren vorzugsweise ferner Folgendes umfasst:
Empfangen, über die Benutzerschnittstelle, einer Identifikation des zweiten Eintrags, der dem physischen Datensatz (202C, 202D) zugeordnet ist, der im Speicher (1930, 1952) gespeichert ist; und
Konfigurieren des Datenflussgraphen (202A, 202B, 202E, 306, 326, 450, 460, 500, 902, 1402) des Softwareanwendungsprogramms (106, 106A-C, 206, 206A-E), um als eine Eingabe Daten von dem physischen Datensatz (202C, 202D) zu empfangen, wobei das Konfigurieren das Zuordnen eines anderen der mehreren Eingabeknoten in dem Datenflussgraphen (202A, 202B, 202E, 306, 326, 450, 460, 500, 902, 1402) zu den Daten von dem physischen Datensatz (202C, 202D) umfasst.

5. Das Verfahren nach Anspruch 1 oder einem anderen vorhergehenden Anspruch, wobei das Transformieren des Datenflussgraphen (202A, 202B, 202E, 306, 326, 450, 460, 500, 902, 1402), der den Eingabeknoten (208A, 208B, 310A, 310B, 328, 452A, 452E) beinhaltet, der dem ersten katalogisierten Datenflussgraphen zugeordnet ist, um den transformierten Datenflussgraphen (202A, 202B, 202E, 306, 326, 450, 460, 500, 902, 1402) zu erhalten, Folgendes umfasst:
Integrieren des ersten katalogisierten Datenflussgraphen in den Datenflussgraphen (202A, 202B, 202E, 306, 326, 450, 460, 500, 902, 1402) als einen ersten Teilgraphen am Eingabeknoten (208A, 208B, 310A, 310B, 328, 452A, 452E), der dem ersten katalogisierten Datenflussgraphen zugeordnet ist; und
Transformieren des ersten Teilgraphen, um einen zweiten Teilgraphen zu erhalten, der sich von dem ersten Teilgraphen unterscheidet.

6. Das Verfahren nach Anspruch 5 oder einem anderen vorhergehenden Anspruch, wobei das Transformieren des ersten Teilgraphen, um den zweiten Teilgraphen zu erhalten, Folgendes umfasst:
Transformieren des ersten Teilgraphen mindestens teilweise basierend auf mindestens einer Operation, die durch mindestens einen Knoten stromabwärts des Eingabeknotens (208A, 208B, 310A, 310B, 328, 452A, 452E) in dem Datenflussgraphen (202A, 202B, 202E, 306, 326, 450, 460, 500, 902, 1402) dargestellt wird.

7. Das Verfahren nach Anspruch 5 oder einem anderen vorhergehenden Anspruch, wobei das Transformieren des ersten Teilgraphen, um den zweiten Teilgraphen zu erhalten, Folgendes umfasst:
Anwenden mindestens einer Optimierung auf den ersten Teilgraphen, um den zweiten Teilgraphen zu erhalten.

8. Das Verfahren nach Anspruch 7 oder einem anderen vorhergehenden Anspruch, wobei die mindestens eine Optimierung mindestens eines der Folgenden umfasst:
Entfernen mindestens eines Knotens des ersten Teilgraphen;
Ersetzen mindestens eines Knotens des ersten Teilgraphen;
Ändern einer Reihenfolge einer Vielzahl von Knoten (452A-F, 502) des ersten Teilgraphen;
Kombinieren einer Vielzahl von Knoten (452A-F, 502) des ersten Teilgraphen;
Parallelisieren der Verarbeitung mindestens einer Operation, die durch mindestens einen Knoten des ersten Teilgraphen dargestellt wird; oder
Löschen von Daten in mindestens einem Knoten des ersten Teilgraphen, sodass sie nicht in einer nachfolgenden Operation verwendet werden, die durch einen Knoten stromabwärts des mindestens einen Knotens in dem ersten Teilgraphen dargestellt wird.

9. Das Verfahren nach Anspruch 1 oder einem anderen vorhergehenden Anspruch, wobei der erste katalogisierte Datenflussgraph aus einem Teilgraphen (208, 308, 452, 462, 1002) erzeugt wurde, der in einen anderen Datenflussgraphen eingebettet ist, wobei der andere Datenflussgraph Knoten, die Datenverarbeitungsoperationen darstellen, und Verbindungen, die den Fluss von Daten zwischen den Knoten (452A-F, 502) darstellen, aufweist, wobei der andere Datenflussgraph von dem Datenflussgraphen (202A, 202B, 202E, 306, 326, 450, 460, 500, 902, 1402) der Softwareanwendung getrennt ist, wobei das Verfahren vorzugsweise ferner Folgendes umfasst:
Anzeigen, in einer UI, einer grafischen Darstellung des anderen Datenflussgraphen; und
Empfangen, über die UI, einer Benutzereingabe, die angibt, dass der Teilgraph (208, 308, 452, 462, 1002) innerhalb des Datenflussgraphen (202A, 202B, 202E, 306, 326, 450, 460, 500, 902, 1402) katalogisiert werden soll; und
Speichern des Teilgraphen (208, 308, 452, 462, 1002) als den ersten katalogisierten Datenflussgraphen als Reaktion auf das Empfangen der Benutzereingabe, die angibt, dass der Teilgraph (208, 308, 452, 462, 1002) innerhalb des Datenflussgraphen (202A, 202B, 202E, 306, 326, 450, 460, 500, 902, 1402) katalogisiert werden soll.

10. Das Verfahren nach Anspruch 1 oder einem anderen vorhergehenden Anspruch, wobei der erste katalogisierte Datenflussgraph nur eine einzelne Ausgabeverbindung aufweist, die Daten darstellt, die durch den ersten katalogisierten Datenflussgraphen ausgegeben werden, indem die eine oder die mehreren Datenverarbeitungsoperationen auf Daten angewendet werden, die von der einen oder den mehreren Datenquellen erhalten werden.

11. Das Verfahren nach Anspruch 1 oder einem anderen vorhergehenden Anspruch, wobei der erste katalogisierte Datenflussgraph im Datenspeicher (102, 202) des Datenverarbeitungssystems (100, 200) gespeichert ist und der erste Eintrag einen Verweis auf einen Ort des ersten katalogisierten Datenflussgraphen im Datenspeicher speichert und/oder wobei der erste Eintrag einen Verweis auf eine Datei speichert, die Informationen speichert, die Knoten (452A-F, 502) des ersten katalogisierten Datenflussgraphen und/oder Konfigurationsparameter des ersten katalogisierten Datenflussgraphen angeben.

12. Das Verfahren nach Anspruch 1 oder einem anderen vorhergehenden Anspruch, wobei das Konfigurieren des Datenflussgraphen (202A, 202B, 202E, 306, 326, 450, 460, 500, 902, 1402) des Softwareanwendungsprogramms (106, 106A-C, 206, 206A-E), um als eine Eingabe die Ausgabedaten (1602) zu empfangen, die erzeugt werden, wenn der erste katalogisierte Datenflussgraph ausgeführt wird, Folgendes umfasst:
Empfangen, über die Benutzerschnittstelle, einer Zuordnung des ersten Eintrags zum Eingabeknoten (208A, 208B, 310A, 310B, 328, 452A, 452E) im Datenflussgraphen (202A, 202B, 202E, 306, 326, 450, 460, 500, 902, 1402); und
als Reaktion auf das Empfangen der Benutzereingabe, die den ersten Eintrag dem Eingabeknoten (208A, 208B, 310A, 310B, 328, 452A, 452E) im Datenflussgraphen (202A, 202B, 202E, 306, 326, 450, 460, 500, 902, 1402) zuordnet:
Konfigurieren des Datenflussgraphen (202A, 202B, 202E, 306, 326, 450, 460, 500, 902, 1402), um am Eingabeknoten (208A, 208B, 310A, 310B, 328, 452A, 452E) Daten zu empfangen, die durch eine Ausgabeverbindung des ersten katalogisierten Datenflussgraphen als Ergebnis der Ausführung des ersten katalogisierten Datenflussgraphen ausgegeben werden.

13. Das Verfahren nach Anspruch 1 oder einem anderen vorhergehenden Anspruch, wobei das Empfangen der Zuordnung des ersten Eintrags zum Eingabeknoten (208A, 208B, 310A, 310B, 328, 452A, 452E) im Datenflussgraphen (202A, 202B, 202E, 306, 326, 450, 460, 500, 902, 1402) Folgendes umfasst:
Empfangen, über die Benutzerschnittstelle, einer Benutzereingabe, die die Zuordnung eines ersten grafischen Elements, das den ersten Eintrag darstellt, zu einem zweiten grafischen Element, das den Eingabeknoten (208A, 208B, 310A, 310B, 328, 452A, 452E) im Datenflussgraphen darstellt, angibt, wobei vorzugsweise die Benutzereingabe, die die Zuordnung des ersten grafischen Elements, das den ersten Eintrag darstellt, zum zweiten grafischen Element, das den Eingabeknoten (208A, 208B, 310A, 310B, 328, 452A, 452E) darstellt, angibt, das Ziehen des ersten grafischen Elements zum zweiten grafischen Element in der Benutzerschnittstelle umfasst.

14. Ein Datenverarbeitungssystem (100, 200), das konfiguriert ist, um das Verfahren nach einem der vorhergehenden Ansprüche durchzuführen.

15. Mindestens ein nichtflüchtiges computerlesbares Speichermedium, das Anweisungen speichert, die, wenn sie von mindestens einem Computer-Hardware-Prozessor eines Datenverarbeitungssystems (100, 200) ausgeführt werden, den mindestens einen Computer-Hardware-Prozessor veranlassen, das Verfahren nach einem der Ansprüche 1 bis 13 durchzuführen.

## Revendications

1. Procédé, réalisé par un système de traitement de données (100, 200), pour permettre le développement de programmes d'application logicielle (106, 106A-C, 206, 206A-E) dans un environnement dynamique avec de multiples ensembles de données en utilisant des entrées (104A, 104B, 202A-E, 204, 204A-E, 440, 1408A) dans un catalogue d'ensembles de données (104, 204, 220) pour fournir un programme d'application logicielle (106, 106A-C, 206, 206A-E), développé en tant que graphe de flux de données (202A, 202B, 202E, 306, 326, 450, 460, 500, 902, 1402), avec accès à des données de sortie (1602) générées dynamiquement par un ou plusieurs autres graphes de flux de données (202A, 202B, 202E, 306, 326, 450, 460, 500, 902, 1402), les entrées (104A, 104B, 202A-E, 204, 204A-E, 440, 1408A) associées à des programmes d'application logicielle respectifs (106, 106A-C, 206, 206A-E) développés en tant que graphes de flux de données (202A, 202B, 202E, 306, 326, 450, 460, 500, 902, 1402) ayant des nœuds (452A-F, 502) représentant des opérations de traitement de données et des liaisons représentant des flux de données, le procédé comprenant :
l'utilisation d'au moins un processeur matériel informatique pour réaliser :
la fourniture d'une interface utilisateur à travers laquelle un utilisateur peut identifier, dans un catalogue d'ensembles de données (104, 204, 220), une ou plusieurs entrées (104A, 104B, 202A-E, 204, 204A-E, 440, 1408A) associées à un ou plusieurs graphes de flux de données catalogués respectifs (202A, 202B, 202E, 306, 326, 450, 460, 500, 902, 1402), les une ou plusieurs entrées (104A, 104B, 202A-E, 204, 204A-E, 440, 1408A) incluant une première entrée associée à un premier graphe de flux de données catalogué,
dans lequel le premier graphe de flux de données catalogué a un ou plusieurs nœuds (452A-F, 502) représentant une ou plusieurs sources de données respectives, et un ou plusieurs nœuds (452A-F, 502) représentant une ou plusieurs opérations de traitement de données respectives,
dans lequel, lorsque le premier graphe de flux de données catalogué est exécuté, le premier graphe de flux de données catalogué génère des données de sortie (1602) en appliquant les une ou plusieurs opérations de traitement de données à des données obtenues à partir des une ou plusieurs sources de données respectives ;
la réception, via l'interface utilisateur, d'une identification de la première entrée associée au premier graphe de flux de données catalogué ;
la configuration du graphe de flux de données (202A, 202B, 202E, 306, 326, 450, 460, 500, 902, 1402) du programme d'application logicielle (106, 106A-C, 206, 206A-E) pour recevoir, en tant qu'entrée, les données de sortie (1602) générées lorsque le premier graphe de flux de données catalogué est exécuté, la configuration comprenant l'association de l'un parmi un ou plusieurs nœuds d'entrée (208A, 208B, 310A, 310B, 328, 452A, 452E) dans le graphe de flux de données (202A, 202B, 202E, 306, 326, 450, 460, 500, 902, 1402) avec le premier graphe de flux de données catalogué pour incorporer le premier graphe de flux de données catalogué dans le graphe de flux de données (202A, 202B, 202E, 306, 326, 450, 460, 500, 902, 1402) du programme d'application logicielle ;
la transformation du graphe de flux de données (202A, 202B, 202E, 306, 326, 450, 460, 500, 902, 1402) incluant le nœud d'entrée (208A, 208B, 310A, 310B, 328, 452A, 452E) associé au premier graphe de flux de données catalogué pour obtenir un graphe de flux de données transformé (202A, 202B, 202E, 306, 326, 450, 460, 500, 902, 1402), la transformation comprenant :
l'identification d'au moins une partie du graphe de flux de données (202A, 202B, 202E, 306, 326, 450, 460, 500, 902, 1402) à transformer, l'au moins une partie incluant le premier graphe de flux de données catalogué associé au nœud d'entrée (208A, 208B, 310A, 310B, 328, 452A, 452E), et
la transformation de l'au moins une partie du graphe de flux de données (202A, 202B, 202E, 306, 326, 450, 460, 500, 902, 1402) pour obtenir le graphe de flux de données transformé (202A, 202B, 202E, 306, 326, 450, 460, 500, 902, 1402) ;
la compilation du graphe de flux de données transformé (202A, 202B, 202E, 306, 326, 450, 460, 500, 902, 1402) en un programme d'application logicielle compilé ; et
l'exécution du programme d'application logicielle compilé.

2. Procédé selon la revendication 1, dans lequel la réception de l'identification de la première entrée associée au premier graphe de flux de données catalogué comprend la réception d'une sélection de la première entrée via l'interface utilisateur.

3. Procédé selon la revendication 1 ou une quelconque autre revendication précédente, dans lequel le catalogue d'ensembles de données (104, 204, 220) inclut de multiples entrées (104A, 104B, 202A-E, 204, 204A-E, 440, 1408A) associées à des graphes de flux de données catalogués respectifs (202A, 202B, 202E, 306, 326, 450, 460, 500, 902, 1402) et de multiples entrées (104A, 104B, 202A-E, 204, 204A-E, 440, 1408A) associées à des ensembles de données respectifs précédemment stockés dans une mémoire (1930, 1952).

4. Procédé selon la revendication 1 ou une quelconque autre revendication précédente, dans lequel l'interface utilisateur permet à l'utilisateur d'identifier, dans le catalogue d'ensembles de données (104, 204, 220), au moins une entrée (104A, 104B, 204, 204A-D, 440, 1408A) associée à au moins un ensemble de données physiques catalogué respectif (202C, 202D) précédemment stocké dans une mémoire (1930, 1952), l'au moins une entrée (104A, 104B, 204, 204A-D, 440, 1408A) incluant une seconde entrée associée à un ensemble de données physiques (202C, 202D) stocké dans la mémoire, de préférence dans lequel les un ou plusieurs nœuds d'entrée (208A, 208B, 310A, 310B, 328, 452A, 452E) comprennent de multiples nœuds d'entrée, le procédé comprenant en outre de préférence :
la réception, via l'interface utilisateur, d'une identification de la seconde entrée associée à l'ensemble de données physiques (202C, 202D) stocké dans la mémoire (1930, 1952) ; et
la configuration du graphe de flux de données (202A, 202B, 202E, 306, 326, 450, 460, 500, 902, 1402) du programme d'application logicielle (106, 106A-C, 206, 206A-E) pour recevoir, en tant qu'entrée, des données provenant de l'ensemble de données physiques (202C, 202D), la configuration comprenant l'association d'un autre des multiples nœuds d'entrée dans le graphe de flux de données (202A, 202B, 202E, 306, 326, 450, 460, 500, 902, 1402) aux données provenant de l'ensemble de données physiques (202C, 202D).

5. Procédé selon la revendication 1 ou une quelconque autre revendication précédente, dans lequel la transformation du graphe de flux de données (202A, 202B, 202E, 306, 326, 450, 460, 500, 902, 1402) incluant le nœud d'entrée (208A, 208B, 310A, 310B, 328, 452A, 452E) associé au premier graphe de flux de données catalogué pour obtenir le graphe de flux de données transformé (202A, 202B, 202E, 306, 326, 450, 460, 500, 902, 1402) comprend :
l'incorporation du premier graphe de flux de données catalogué dans le graphe de flux de données (202A, 202B, 202E, 306, 326, 450, 460, 500, 902, 1402) en tant que premier sous-graphe au niveau du nœud d'entrée (208A, 208B, 310A, 310B, 328, 452A, 452E) associé au premier graphe de flux de données catalogué ; et
la transformation du premier sous-graphe pour obtenir un second sous-graphe qui est différent du premier sous-graphe.

6. Procédé selon la revendication 5 ou une quelconque autre revendication précédente, dans lequel la transformation du premier sous-graphe pour obtenir le second sous-graphe comprend :
la transformation du premier sous-graphe sur la base au moins en partie d'au moins une opération représentée par au moins un nœud en aval du nœud d'entrée (208A, 208B, 310A, 310B, 328, 452A, 452E) dans le graphe de flux de données (202A, 202B, 202E, 306, 326, 450, 460, 500, 902, 1402).

7. Procédé selon la revendication 5 ou une quelconque autre revendication précédente, dans lequel la transformation du premier sous-graphe pour obtenir le second sous-graphe comprend :
l'application d'au moins une optimisation au premier sous-graphe pour obtenir le second sous-graphe.

8. Procédé selon la revendication 7 ou une quelconque autre revendication précédente, dans lequel l'au moins une optimisation comprend au moins l'un parmi :
la suppression d'au moins un nœud du premier sous-graphe ;
le remplacement d'au moins un nœud du premier sous-graphe ;
le changement d'un ordre d'une pluralité de nœuds (452A-F, 502) du premier sous-graphe ;
la combinaison d'une pluralité de nœuds (452A-F, 502) du premier sous-graphe ;
la parallélisation du traitement d'au moins une opération représentée par au moins un nœud du premier sous-graphe ; ou
la suppression de données dans au moins un nœud du premier sous-graphe de sorte qu'elles ne soient pas utilisées dans une opération ultérieure représentée par un nœud en aval de l'au moins un nœud dans le premier sous-graphe.

9. Procédé selon la revendication 1 ou une quelconque autre revendication précédente, dans lequel le premier graphe de flux de données catalogué a été généré à partir d'un sous-graphe (208, 308, 452, 462, 1002) intégré dans un autre graphe de flux de données, l'autre graphe de flux de données ayant des nœuds représentant des opérations de traitement de données et des liaisons représentant un flux de données entre les nœuds (452A-F, 502), dans lequel l'autre graphe de flux de données est séparé du graphe de flux de données (202A, 202B, 202E, 306, 326, 450, 460, 500, 902, 1402) de l'application logicielle, le procédé comprenant en outre de préférence :
l'affichage, dans une UI, d'une représentation graphique de l'autre graphe de flux de données ; et
la réception, via l'UI, d'une entrée utilisateur indiquant que le sous-graphe (208, 308, 452, 462, 1002) dans le graphe de flux de données (202A, 202B, 202E, 306, 326, 450, 460, 500, 902, 1402) doit être catalogué ; et
le stockage du sous-graphe (208, 308, 452, 462, 1002) en tant que premier graphe de flux de données catalogué en réponse à la réception de l'entrée utilisateur indiquant que le sous-graphe (208, 308, 452, 462, 1002) dans le graphe de flux de données (202A, 202B, 202E, 306, 326, 450, 460, 500, 902, 1402) doit être catalogué.

10. Procédé selon la revendication 1 ou une quelconque autre revendication précédente, dans lequel le premier graphe de flux de données catalogué n'a qu'une seule liaison de sortie représentant des données sorties par le premier graphe de flux de données catalogué en appliquant les une ou plusieurs opérations de traitement de données à des données obtenues à partir des une ou plusieurs sources de données.

11. Procédé selon la revendication 1 ou une quelconque autre revendication précédente, dans lequel le premier graphe de flux de données catalogué est stocké dans un stockage de données (102, 202) du système de traitement de données (100, 200), et la première entrée stocke une référence à un emplacement du premier graphe de flux de données catalogué dans le stockage de données et/ou dans lequel la première entrée stocke une référence à un fichier stockant des informations indiquant des nœuds (452A-F, 502) du premier graphe de flux de données catalogué et/ou des paramètres de configuration du premier graphe de flux de données catalogué.

12. Procédé selon la revendication 1 ou une quelconque autre revendication précédente, dans lequel la configuration du graphe de flux de données (202A, 202B, 202E, 306, 326, 450, 460, 500, 902, 1402) du programme d'application logicielle (106, 106A-C, 206, 206A-E) pour recevoir, en tant qu'entrée, les données de sortie (1602) générées lorsque le premier graphe de flux de données catalogué est exécuté comprend :
la réception, via l'interface utilisateur, d'une association de la première entrée avec le nœud d'entrée (208A, 208B, 310A, 310B, 328, 452A, 452E) dans le graphe de flux de données (202A, 202B, 202E, 306, 326, 450, 460, 500, 902, 1402) ; et
en réponse à la réception de l'entrée utilisateur associant la première entrée au nœud d'entrée (208A, 208B, 310A, 310B, 328, 452A, 452E) dans le graphe de flux de données (202A, 202B, 202E, 306, 326, 450, 460, 500, 902, 1402) :
la configuration du graphe de flux de données (202A, 202B, 202E, 306, 326, 450, 460, 500, 902, 1402) pour recevoir, au niveau du nœud d'entrée (208A, 208B, 310A, 310B, 328, 452A, 452E), des données sorties par l'intermédiaire d'une liaison de sortie du premier graphe de flux de données catalogué suite à l'exécution du premier graphe de flux de données catalogué.

13. Procédé selon la revendication 1 ou une quelconque autre revendication précédente, dans lequel la réception de l'association de la première entrée avec le nœud d'entrée (208A, 208B, 310A, 310B, 328, 452A, 452E) dans le graphe de flux de données (202A, 202B, 202E, 306, 326, 450, 460, 500, 902, 1402) comprend :
la réception, via l'interface utilisateur, d'une entrée utilisateur indiquant l'association d'un premier élément graphique représentant la première entrée avec un second élément graphique représentant le nœud d'entrée (208A, 208B, 310A, 310B, 328, 452A, 452E) dans le graphe de flux de données, de préférence dans lequel l'entrée utilisateur indiquant l'association du premier élément graphique représentant la première entrée avec le second élément graphique représentant le nœud d'entrée (208A, 208B, 310A, 310B, 328, 452A, 452E) comprend le glissement du premier élément graphique vers le second élément graphique dans l'interface utilisateur.

14. Système de traitement de données (100, 200) configuré pour réaliser le procédé selon l'une quelconque des revendications précédentes.

15. Au moins un support de stockage non transitoire lisible par ordinateur stockant des instructions qui, lorsqu'elles sont exécutées par au moins un processeur matériel informatique d'un système de traitement de données (100, 200), amènent l'au moins un processeur matériel informatique à réaliser le procédé selon l'une quelconque des revendications 1 à 13.
